(19) Europäisches Patentamt
European Patent Office
Office européen des brevets

(11) EP 4 535 374 A1

(12) **EUROPEAN PATENT APPLICATION**
published in accordance with Art. 153(4) EPC

(43) Date of publication:
**09.04.2025 Bulletin 2025/15**

(21) Application number: **23811680.0**

(22) Date of filing: **16.05.2023**

(51) International Patent Classification (IPC):
***H01B 1/10*** *(2006.01)* ***H01B 1/06*** *(2006.01)*
***H01M 4/139*** *(2010.01)* ***H01M 4/62*** *(2006.01)*
***H01M 10/052*** *(2010.01)* ***H01M 10/0562*** *(2010.01)*
***H01M 10/058*** *(2010.01)*

(52) Cooperative Patent Classification (CPC):
**H01B 1/06; H01B 1/10; H01M 4/139; H01M 4/62; H01M 10/052; H01M 10/0562; H01M 10/058;**
Y02E 60/10; Y02P 70/50

(86) International application number:
**PCT/JP2023/018189**

(87) International publication number:
**WO 2023/228806 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.05.2022 JP 2022087265**

(71) Applicant: **Panasonic Intellectual Property Management Co., Ltd.**
**Kadoma-shi, Osaka 571-0057 (JP)**

(72) Inventors:
- **OSHIMA Tatsuya**
  **Kadoma-shi, Osaka 571-0057 (JP)**
- **TSUTSUI Yasutaka**
  **Kadoma-shi, Osaka 571-0057 (JP)**
- **TAMURA Takaaki**
  **Kadoma-shi, Osaka 571-0057 (JP)**
- **KAMITAKE Hiroki**
  **Kadoma-shi, Osaka 571-0057 (JP)**
- **KAWASE Akira**
  **Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **SOLID ELECTROLYTE COMPOSITION, ELECTRODE COMPOSITION, METHOD FOR PRODUCING SOLID ELECTROLYTE SHEET, METHOD FOR PRODUCING ELECTRODE SHEET, AND METHOD FOR PRODUCING BATTERY**

(57) A solid electrolyte composition of the present disclosure includes a solvent and an ion conductor including a solid electrolyte, a binder, and a nitrogen-containing organic substance and being dispersed in the solvent. The solid electrolyte includes a sulfide solid electrolyte, the binder includes a styrenic elastomer, and the nitrogen-containing organic substance includes at least one selected from the group consisting of primary amines, secondary amines, aminohydroxy compounds, and diamines. The primary amines, the secondary amines, the aminohydroxy compounds, and the diamines each have at least one selected from the group consisting of chain alkyl groups having 8 or more carbon atoms and chain alkenyl groups having 8 or more carbon atoms. The mass proportion of the nitrogen-containing organic substance to the solid electrolyte is 0.30 mass% or more.

EP 4 535 374 A1

FIG. 1

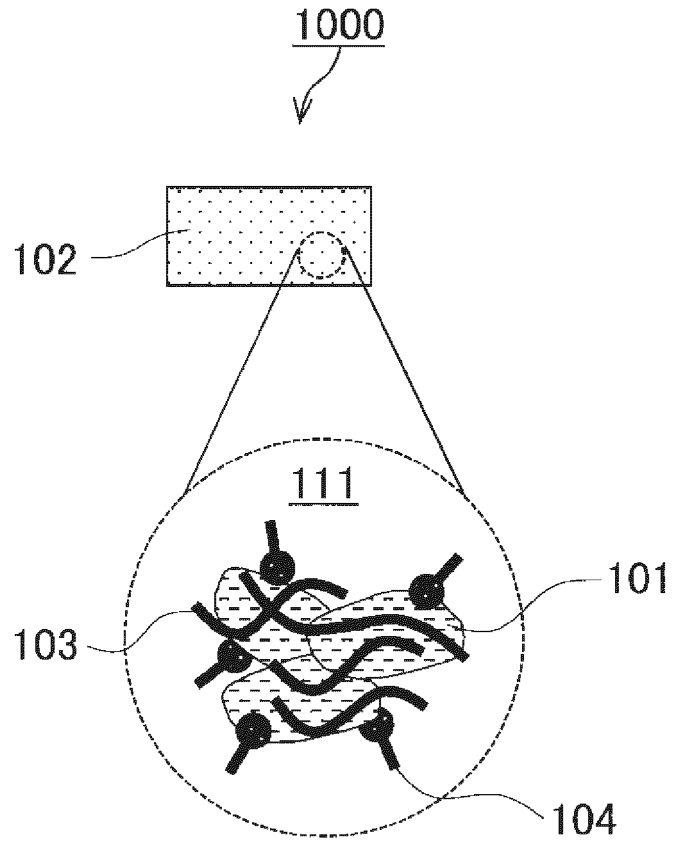

## Description

### Technical Field

The present disclosure relates to a solid electrolyte composition, an electrode composition, a method for manufacturing a solid electrolyte sheet, a method for manufacturing an electrode sheet, and a method for manufacturing a battery.

### Background Art

PTL 1 describes at least one layer of a positive electrode active material layer, a solid electrolyte layer, and a negative electrode active material layer contains a dispersant. Here, the dispersant is a compound having a functional group, such as a group containing a basic nitrogen atom, and an alkyl group having 8 or more carbon atoms or an aryl group having 10 or more carbon atoms.

PTL 2 describes an electronic material including a compound containing an imidazoline ring and an aromatic ring and having a molecular weight of less than 350.

PTL 3 describes a method for manufacturing a lithium secondary battery in which a solid electrolyte layer is formed by applying a solid electrolyte-forming composition including a solid electrolyte and a specific compound to a base material or the like and drying it. As the specific compound, for example, 1-hydroxyethyl-2-alkenylimidazoline is described.

### Citation List

### Patent Literature

PTL 1: Japanese Unexamined Patent Application Publication No. 2016-212990
PTL 2: International Publication No. WO 2020/136975
PTL 3: Japanese Unexamined Patent Application Publication No. 2020-161364

### Summary of Invention

### Technical Problem

In existing technology, technology for improving the fluidity and dispersion stability of solid electrolyte compositions has been desired.

### Solution to Problem

A solid electrolyte composition according to one aspect of the present disclosure includes:

a solvent; and
an ion conductor including a solid electrolyte, a binder, and a nitrogen-containing organic substance and being dispersed in the solvent,
wherein
the solid electrolyte includes a sulfide solid electrolyte,
the binder includes a styrenic elastomer,
the nitrogen-containing organic substance includes at least one selected from the group consisting of primary amines, secondary amines, aminohydroxy compounds, and diamines,
the primary amines, the secondary amines, the aminohydroxy compounds, and the diamines each have at least one selected from the group consisting of chain alkyl groups having 8 or more carbon atoms and chain alkenyl groups having 8 or more carbon atoms, and
the mass proportion of the nitrogen-containing organic substance to the solid electrolyte is 0.30 mass% or more.

### Advantageous Effects of Invention

According to the present disclosure, it is possible to provide a solid electrolyte composition with improved fluidity and dispersion stability.

Brief Description of Drawings

[Fig. 1] Fig. 1 is a schematic view of a solid electrolyte composition according to embodiment 1.
[Fig. 2] Fig. 2 is a graph for explaining a method for evaluating the fluidity of a solid electrolyte composition.
[Fig. 3] Fig. 3 is a schematic view of an electrode composition according to embodiment 2.
[Fig. 4] Fig. 4 is a flow chart showing a method for manufacturing a solid electrolyte sheet according to embodiment 3.
[Fig. 5] Fig. 5 is a cross-sectional view of an electrode assembly according to embodiment 3.
[Fig. 6] Fig. 6 is a cross-sectional view of a transfer sheet according to embodiment 3.
[Fig. 7] Fig. 7 is a cross-sectional view of an electrode according to embodiment 4.
[Fig. 8] Fig. 8 is a cross-sectional view of an electrode transfer sheet according to embodiment 4.
[Fig. 9] Fig. 9 is a cross-sectional view of a battery precursor according to embodiment 4.
[Fig. 10] Fig. 10 is a cross-sectional view of a battery according to embodiment 5. Description of Embodiments

(Underlying Knowledge Forming Basis of the Present Disclosure)

In the field of existing secondary batteries, an organic electrolyte solution obtained by dissolving an electrolyte salt in an organic solvent is mainly used as an electrolyte. In a secondary battery using an organic electrolyte solution, there is a concern about liquid leakage. It is also pointed out that the amount of heat generation when a short circuit or the like occurs is large.

On the other hand, all-solid-state secondary batteries using inorganic solid electrolytes instead of organic electrolyte solutions are gaining attention. All-solid-state secondary batteries do not cause liquid leakage. Since inorganic solid electrolytes have high thermal stability, it is also expected that heat generation in the event of a short circuit or the like will be suppressed.

In this connection, in order to put an all-solid-state secondary battery using a solid electrolyte to practical use, it is necessary to prepare a solid electrolyte composition containing a solid electrolyte and having fluidity. For example, a solid electrolyte sheet can be formed by using a solid electrolyte composition having fluidity and applying the solid electrolyte composition to a surface of an electrode. The solid electrolyte sheet, for example, plays a role as a diaphragm of a battery.

In order to highly efficiently manufacture a large-area solid electrolyte sheet to be used in the diaphragm, it is necessary to apply a solid electrolyte composition using an application device such as a die coater. On this occasion, it is necessary to suppress precipitation of particles in the solid electrolyte composition, that is, to improve the dispersion stability of the solid electrolyte composition. Consequently, the uniformity in the thickness direction of the solid electrolyte sheet is improved. In addition, a coating film with excellent uniformity can be continuously manufactured over a long period of time even when the solid electrolyte composition is applied. At the same time, in order to improve the uniformity in the thickness of the solid electrolyte sheet in the width direction and the uniformity in the thickness in the longitudinal direction, it is necessary to improve the fluidity of the solid electrolyte composition. From the above, the solid electrolyte composition is required to have improved fluidity and dispersion stability.

Furthermore, in order to put an all-solid-state secondary battery using a solid electrolyte to practical use, it is necessary to prepare an electrode composition having fluidity by adding an active material to a solid electrolyte composition. For example, electrodes, i.e., a positive electrode and a negative electrode, can be produced by applying the electrode composition to a surface of a current collector and drying it. In order to highly efficiently manufacture large-area positive and negative electrodes, as in the solid electrolyte composition, the electrode composition is required to have improved fluidity and dispersion stability.

The solid electrolyte composition includes, for example, a solid electrolyte, a binder, and a dispersant. In the solid electrolyte composition, the dispersibility of a solid electrolyte is generally improved by adding a dispersant to the solid electrolyte. When a sulfide solid electrolyte is used as the solid electrolyte, the dispersibility of the sulfide solid electrolyte is improved by using a nitrogen-containing organic substance as the dispersant. However, in such a case, in the solid electrolyte composition, since the surface area of the solid electrolyte increases, a strong interaction between solid electrolyte molecules can occur. Consequently, the fluidity and dispersion stability of the solid electrolyte composition is significantly impaired. Accordingly, it is important to appropriately adjust the interaction between the solid electrolyte, the binder, and the dispersant for reducing strong interaction that occurs between solid electrolyte molecules.

In order to prepare the solid electrolyte composition, it is necessary to mix a solid electrolyte, an organic solvent, a binder, and a dispersant. The present inventors prepared solid electrolyte compositions containing these materials and investigated the dispersion stability of solid electrolytes and fluidity of solid electrolyte compositions. As a result, the present inventors found that the fluidity and dispersion stability of a solid electrolyte composition can be improved by containing a specific material. From the above viewpoints, the present inventors arrived at the composition of the present disclosure.

(Overview of one aspect according to the present disclosure)

A solid electrolyte composition according to a 1st aspect of the present disclosure includes:

a solvent; and
an ion conductor including a solid electrolyte, a binder, and a nitrogen-containing organic substance and being dispersed in the solvent, wherein
the solid electrolyte includes a sulfide solid electrolyte,
the binder includes a styrenic elastomer,
the nitrogen-containing organic substance includes at least one selected from the group consisting of primary amines, secondary amines, aminohydroxy compounds, and diamines,
the primary amines, the secondary amines, the aminohydroxy compounds, and the diamines each have at least one selected from the group consisting of chain alkyl groups having 8 or more carbon atoms and chain alkenyl groups having 8 or more carbon atoms, and
the mass proportion of the nitrogen-containing organic substance to the solid electrolyte is 0.30 mass% or more.

According to the 1st aspect, a solid electrolyte composition with improved fluidity and dispersion stability can be provided. In addition, large-area solid electrolyte sheet and battery can be manufactured with high efficiency by using the solid electrolyte composition having improved fluidity and dispersion stability.
In a 2nd aspect of the present disclosure, for example, in the solid electrolyte composition according to the 1st aspect, the ratio of the viscosity $\eta 1$ of the solid electrolyte composition measured under conditions of 25°C and a shear rate of 1 $sec^{-1}$ to the viscosity $\eta 2$ of the solid electrolyte composition measured under conditions of 25°C and a shear rate of 100 $sec^{-1}$, $\eta 1/\eta 2$, may be 1.4 or more.
According to the 2nd aspect, a solid electrolyte composition with more improved dispersion stability can be provided. In addition, the solid electrolyte composition can be easily applied to a base material.
In a 3rd aspect of the present disclosure, for example, in the solid electrolyte composition according to the 1st or 2nd aspect, for example, the styrenic elastomer may include styrene-butadiene rubber.
According to the 3rd aspect, styrene-butadiene rubber has excellent flexibility and elasticity and also exhibits excellent filling properties during thermal compression and is therefore particularly suitable as the binder of the solid electrolyte sheet.
In a 4th aspect of the present disclosure, for example, in the solid electrolyte composition according to the 1st or 2nd aspect, the styrenic elastomer may include modified styrene-butadiene rubber and a modified styrene-ethylene/-butylene-styrene block copolymer.
According to the 4th aspect, the modified styrene-butadiene rubber and the modified styrene-ethylene/butylene-styrene block copolymer can more improve the dispersibility of the solid electrolyte and is therefore particularly suitable as the binder of a solid electrolyte sheet.
In a 5th aspect of the present disclosure, for example, in the solid electrolyte composition according to any one of the 1st to 4th aspects, the solvent may have a boiling point of 100°C or more and 250°C or less.
According to the 5th aspect, since the solvent is unlikely to volatilize at ordinary temperature, a solid electrolyte composition with improved fluidity can be obtained.
In a 6th aspect of the present disclosure, for example, in the solid electrolyte composition according to any one of the 1st to 5th aspects, the solvent may include an aromatic hydrocarbon.
According to the 6th aspect, the solubility of the binder in the aromatic hydrocarbon tends to be high. In particular, the styrenic elastomer is easily dissolved in an aromatic hydrocarbon. Since the styrenic elastomer is easily dissolved in an aromatic hydrocarbon, the fluidity and dispersion stability of the solid electrolyte composition can be more improved.
In a 7th aspect of the present disclosure, for example, in the solid electrolyte composition according to the 6th aspect, the solvent may include tetralin.
According to the 7th aspect, since tetralin has a relatively high boiling point, not only the fluidity and dispersion stability of the solid electrolyte composition is improved, but also the solid electrolyte composition can be manufactured stably by a kneading process.
In an 8th aspect of the present disclosure, for example, in the solid electrolyte composition according to any one of the 1st to 7th aspects, the nitrogen-containing organic substance may include a straight-chain alkenyl group.
According to the 8th aspect, the fluidity of the solid electrolyte composition can be more improved.
In a 9th aspect of the present disclosure, for example, the solid electrolyte composition according to the 8th aspect may include oleylamine.
According to the 9th aspect, the fluidity of the solid electrolyte composition can be more improved. In addition, since a decrease in the ion conductivity of the ion conductor can be suppressed, the output characteristics of the battery can be improved.

In a 10th aspect of the present disclosure, for example, in the solid electrolyte composition according to any one of the 1st to 9th aspects, the iodine value of the nitrogen-containing compound may be 15 or more.

According to the 10th aspect, the fluidity of the solid electrolyte composition can be more improved.

In an 11th aspect of the present disclosure, for example, in the solid electrolyte composition according to any one of the 1st to 10th aspects, the nitrogen-containing organic substance may include the aminohydroxy compound.

According to the 11th aspect, the fluidity of the solid electrolyte composition can be more improved.

An electrode composition according to a 12th aspect of the present disclosure includes:
the solid electrolyte composition according to any one of the 1st to 11th aspects and an active material.

According to the 12th aspect, an electrode composition with improved fluidity and dispersion stability can be provided. In addition, large-area electrode sheet and battery can be manufactured with high efficiency by using the electrode composition with improved fluidity and dispersion stability.

In a 13th aspect of the present disclosure, for example, in the electrode composition according to the 12th aspect, the nitrogen-containing organic substance may include the aminohydroxy compound.

According to the 13th aspect, the fluidity of the electrode composition can be more improved. In the electrode composition, in addition to the dispersibility of the sulfide solid electrolyte, the dispersibility of the active material can also be improved.

A method for manufacturing a solid electrolyte sheet according to a 14th aspect of the present disclosure includes:

applying the solid electrolyte composition according to any one of the 1st to 11th aspects to an electrode or base material to form a coating film; and
removing the solvent from the coating film.

According to the 14th aspect, a large-area solid electrolyte sheet having a homogeneous and uniform thickness can be manufactured with high efficiency.

A method for manufacturing a battery according to a 15th aspect of the present disclosure is a method for manufacturing a battery that includes a first electrode, an electrolyte layer, and a second electrode in this order, the method including the following (i) or (ii):

(i) applying the solid electrolyte composition according to any one of the 1st to 11th aspects to the first electrode to form a coating film,

removing the solvent from the coating film to form an electrode assembly including the first electrode and the electrolyte layer, and
combining the electrode assembly and the second electrode such that the electrolyte layer is located between the first electrode and the second electrode; or

(ii) applying the solid electrolyte composition according to any one of the 1st to 11th aspects to a base material to form a coating film,

removing the solvent from the coating film to form the electrolyte layer, and
combining the first electrode, the second electrode, and the electrolyte layer such that the electrolyte layer is located between the first electrode and the second electrode.

According to the 15th aspect, a high performance battery having a large area can be manufactured with high efficiency.

A method for manufacturing an electrode sheet according to a 16th aspect of the present disclosure includes:

applying the electrode composition according to the 12th or 13th aspect to a current collector, a base material, or an electrode assembly to form a coating film; and
removing the solvent from the coating film.

According to the 16th aspect, a large-area electrode sheet having a homogeneous and uniform thickness can be manufactured with high efficiency.

A method for manufacturing a battery according to a 17th aspect of the present disclosure is a method for manufacturing a battery that includes a first electrode, an electrolyte layer, and a second electrode in this order, the method including the following (iii), (iv), or (v):

(iii) applying the electrode composition according to the 12th or 13th aspect to a current collector to form a coating film,

removing the solvent from the coating film to form the first electrode, and
combining the first electrode, the second electrode, and the electrolyte layer such that the electrolyte layer is located between the first electrode and the second electrode;

(iv) applying the electrode composition according to the 12th or 13th aspect to a base material to form a coating film,

removing the solvent from the coating film to form an electrode sheet for the first electrode, and
combining the first electrode, the second electrode, and the electrolyte layer such that the electrolyte layer is located between the first electrode and the second electrode; or

(v) applying the electrode composition according to the 12th or 13th aspect to the electrolyte layer of an electrode assembly that is a layered product of the first electrode and the electrolyte layer to form a coating film, and removing the solvent from the coating film to form an electrode sheet for the second electrode.

According to the 17th aspect, a high performance battery having a large area can be manufactured with high efficiency.

A method for manufacturing a battery according to an 18th aspect of the present disclosure is a method for manufacturing a battery that includes a first electrode, an electrolyte layer, and a second electrode in this order, the method including the following (vi) or (vii):

(vi) applying the electrode composition according to the 12th or 13th aspect to a current collector to form a first coating film,

removing the solvent from the first coating film to form the first electrode,
applying the solid electrolyte composition according to any one of the 1st to 11th aspects to the first electrode to form a second coating film,
removing the solvent from the second coating film to form the electrolyte layer, and
combining the first electrode, the electrolyte layer, and the second electrode such that the electrolyte layer is located between the first electrode and the second electrode; or

(vii) applying the electrode composition according to the 12th or 13th aspect to a first base material to form a first coating film,

removing the solvent from the first coating film to form the first electrode,
applying the solid electrolyte composition according to any one of the 1st to 11th aspects to a second base material to form a second coating film,
removing the solvent from the second coating film to form the electrolyte layer, and
combining the first electrode, the second electrode, and the electrolyte layer such that the electrolyte layer is located between the first electrode and the second electrode.

According to the 18th aspect, a high performance battery having a large area can be manufactured with high efficiency.

Embodiments of the present disclosure will now be described with reference to the drawings, but the present disclosure is not limited to the following embodiments.

(Embodiment 1)

Fig. 1 is a schematic view of a solid electrolyte composition 1000 according to embodiment 1. The solid electrolyte composition 1000 includes an ion conductor 111 and a solvent 102. The ion conductor 111 includes a solid electrolyte 101, a binder 103, and a nitrogen-containing organic substance 104. The ion conductor 111 is dispersed or dissolved in the solvent 102. That is, the solid electrolyte 101, the binder 103, and the nitrogen-containing organic substance 104 are dispersed or dissolved in the solvent 102. The solid electrolyte 101 includes a sulfide solid electrolyte. The binder 103 includes a styrenic elastomer. The nitrogen-containing organic substance 104 includes at least one selected from the group consisting of primary amines, secondary amines, aminohydroxy compounds, and diamines. The primary amines, the secondary amines, the aminohydroxy compounds, and the diamines each have at least one selected from the group consisting of chain alkyl groups having 8 or more carbon atoms and chain alkenyl groups having 8 or more carbon atoms.

The mass proportion of the nitrogen-containing organic substance 104 to the solid electrolyte 101 is 0.30 mass% or more.

By the above constitution, a solid electrolyte composition 1000 having improved fluidity and dispersion stability is obtained. A large-area solid electrolyte sheet and a large-area battery can be highly efficiently manufactured by using the solid electrolyte composition 1000 having improved fluidity and dispersion stability. Examples of the battery include an all-solid-state secondary battery.

In manufacturing of the solid electrolyte composition 1000, an appropriate amount of the nitrogen-containing organic substance 104 is added to the solid electrolyte 101. The binder 103 is added thereto to cause a desired interaction between the solid electrolyte 101, the binder 103, and the nitrogen-containing organic substance 104. As described above, the nitrogen-containing organic substance 104 includes at least one selected from the group consisting of primary amines, secondary amines, aminohydroxy compounds, and diamines. It is believed that desired interaction is caused between these portions and the solid electrolyte 101, and thereby the dispersion stability and fluidity of the solid electrolyte composition 1000 can be improved. The primary amines, the secondary amines, the aminohydroxy compounds, and the diamines each have at least one selected from the group consisting of chain alkyl groups having 8 or more carbon atoms and chain alkenyl groups having 8 or more carbon atoms as a functional group. In addition, the binder 103 includes a styrenic elastomer. The styrenic elastomer has flexibility and elasticity. Accordingly, it is believed that desired interaction is caused between the functional group in the nitrogen-containing organic substance 104 and the styrenic elastomer, and thereby the dispersion stability and fluidity of the solid electrolyte composition 1000 can be improved. Consequently, a solid electrolyte composition 1000 having improved fluidity and dispersion stability is obtained. By using the solid electrolyte composition 1000, a large-area solid electrolyte sheet and a large-area battery can be highly efficiently manufactured.

The dispersion stability of the solid electrolyte composition 1000 can be evaluated by the following method. First, 20 mL of the solid electrolyte composition 1000 is weighed in a 30-mL glass sample bottle. Subsequently, for example, the glass sample bottle is left to stand for a certain period of time such as for 1 day. Next, whether a hard sediment (hard cake) is present or not on the bottom of the glass sample bottle is visually verified using a dispensing spoon or the like. Here, if it is determined that there is no hard sediment, it is evaluated that the dispersion stability of the solid electrolyte composition 1000 is improved.

The fluidity of the solid electrolyte composition 1000 can be evaluated by the shape of a flow curve obtained using a viscosity/viscoelasticity measuring instrument at the speed control mode. Fig. 2 is a graph for explaining a method for evaluating the fluidity of a solid electrolyte composition 1000. In Fig. 2, the vertical axis indicates the viscosity value of the solid electrolyte composition, and the horizontal axis indicates the shear rate value. The fluidity of the solid electrolyte composition 1000 can be evaluated by the following method. First, the viscosities of a solid electrolyte composition are measured at shear rates from 0.1 $sec^{-1}$ to 1000 $sec^{-1}$ using a viscosity/viscoelasticity measuring instrument under conditions of 25°C and the speed control mode, and the measurement results are plotted on the above graph. In this graph, when a behavior in which the viscosity of a solid electrolyte composition decreases continuously with increasing shear rate (plot A in Fig. 2) is obtained, the solid electrolyte composition is evaluated to have good fluidity. In contrast, as in plot B in Fig. 2, when a phenomenon in which the viscosity increases with increasing shear rate, i.e., a behavior of dilatancy, is obtained, the fluidity of the solid electrolyte composition is evaluated to be bad. As in plot C in Fig. 2, when a behavior in which the viscosity changes discontinuously with increasing shear rate is obtained, the fluidity of the solid electrolyte composition is evaluated to be bad. As in plot D in Fig. 2, when a behavior in which the viscosity decreases sharply with increasing shear rate is obtained, the fluidity of the solid electrolyte composition is evaluated to be bad.

The solid electrolyte composition 1000 may be slurry having fluidity. A solid electrolyte composition 1000 having fluidity can form a solid electrolyte sheet by a wet method such as a coating method.

The "solid electrolyte sheet" may be a self-supporting sheet member or may be a solid electrolyte layer being supported by an electrode or a base material.

The solid electrolyte composition 1000 will be described in detail below.

[Solid electrolyte composition]

The solid electrolyte composition 1000 includes an ion conductor 111 and a solvent 102. The ion conductor 111 includes a solid electrolyte 101, a binder 103, and a nitrogen-containing organic substance 104. The solid electrolyte 101, the binder 103, the nitrogen-containing organic substance 104, the ion conductor 111, and the solvent 102 will be described in detail below.

<Solid electrolyte>

The solid electrolyte 101 includes a sulfide solid electrolyte. The sulfide solid electrolyte may include lithium. If a sulfide solid electrolyte including lithium is used as the solid electrolyte 101, a lithium secondary battery can be manufactured using a solid electrolyte sheet that is obtained from the solid electrolyte composition 1000 containing this sulfide solid electrolyte.

The solid electrolyte 101 may include a solid electrolyte other than the sulfide solid electrolyte, such as an oxide solid electrolyte, a halide solid electrolyte, a polymeric solid electrolyte, and a complex hydride solid electrolyte. Alternatively, the solid electrolyte 101 may be a sulfide solid electrolyte. In other words, the solid electrolyte 101 may include a sulfide solid electrolyte only.

In the present disclosure, the term "oxide solid electrolyte" means a solid electrolyte containing oxygen. The oxide solid electrolyte may further contain an anion other than sulfur and halogen elements, as an anion other than oxygen.

In the present disclosure, the term "halide solid electrolyte" means a solid electrolyte containing a halogen element and not containing sulfur. In the present disclosure, a solid electrolyte not containing sulfur means a solid electrolyte represented by a compositional formula not including a sulfur element. Accordingly, a solid electrolyte containing a trace amount of a sulfur component, for example, 0.1 mass% or less of sulfur, is included in the solid electrolyte not containing sulfur. The halide solid electrolyte may further contain oxygen as an anion other than the halogen element.

As the sulfide solid electrolyte, for example, $Li_2S$-$P_2S_5$, $Li_2S$-$SiS_2$, $Li_2S$-$B_2S_3$, $Li_2S$-$GeS_2$, $Li_{3.25}Ge_{0.25}P_{0.75}S_4$, and $Li_{10}GeP_2S_{12}$ can be used. LiX, $Li_2O$, $MO_q$, $Li_pMO_q$, or the like may be added to these electrolytes. Element X in "LiX" is at least one selected from the group consisting of F, Cl, Br, and I. Element M in "$MO_q$" and "$Li_pMO_q$" is at least one selected from the group consisting of P, Si, Ge, B, Al, Ga, In, Fe, and Zn. p and q in "$MO_q$" and "$Li_pMO_q$" are each independently a natural number.

As the sulfide solid electrolyte, for example, $Li_2S$-$P_2S_5$-based glass ceramic may be used. To the $Li_2S$-$P_2S_5$-based glass ceramic, LiX, $Li_2O$, $MO_q$, $Li_pMO_q$, or the like may be added, or two or more selected from LiCl, LiBr, and LiI may be added. Since $Li_2S$-$P_2S_5$-based glass ceramic is a relatively soft material, a battery having higher durability can be manufactured by a solid electrolyte sheet including $Li_2S$-$P_2S_5$-based glass ceramic.

As the oxide solid electrolyte, it is possible to use, for example, glass or glass ceramic in which $Li_2SO_4$, $Li_2CO_3$, or the like is added to a base such as an NASICON-type solid electrolyte represented by $LiTi_2(PO_4)_3$ and an element substitute thereof, a $(LaLi)TiO_3$-based perovskite-type solid electrolyte, an LISICON-type solid electrolyte represented by $Li_{14}ZnGe_4O_{16}$, $Li_4SiO_4$, and $LiGeO_4$ and an element substitute thereof, a garnet-type solid electrolyte represented by $Li_7La_3Zr_2O_{12}$ and an element substitute thereof, $Li_3PO_4$ and an N-substitute thereof, and an Li-B-O compound such as $LiBO_2$ and $Li_3BO_3$.

The halide solid electrolyte includes, for example, Li, M1, and X. M1 is at least one selected from the group consisting of metal elements other than Li and metalloid elements. X is at least one selected from the group consisting of F, Cl, Br, and I. The halide solid electrolyte has high thermal stability and therefore can improve the safety of a battery. Furthermore, the halide solid electrolyte is sulfur-free and therefore can suppress generation of hydrogen sulfide gas.

In the present disclosure, the "metalloid elements" are B, Si, Ge, As, Sb, and Te.

In the present disclosure, the "metal elements" are all elements, excluding hydrogen, included in Groups 1 to 12 of the periodic table and all elements, excluding B, Si, Ge, As, Sb, Te, C, N, P, O, S, and Se, included in Groups 13 to 16 of the periodic table.

That is, in the present disclosure, the "metalloid elements" and the "metal elements" are element groups that can become cations when forming inorganic compounds with halogen elements.

For example, the halide solid electrolyte may be a material represented by the following compositional formula (1):

$$Li_{\alpha}M1_{\beta}X_{\gamma} \quad \text{formula (1).}$$

In the compositional formula (1), $\alpha$, $\beta$, and $\gamma$ are each independently a value larger than 0, and $\gamma$ may be, for example, 4 or 6.

According to the above constitution, the ion conductivity of the halide solid electrolyte is improved, and therefore it is possible to improve the ion conductivity of a solid electrolyte sheet formed from the solid electrolyte composition 1000 according to embodiment 1. When this solid electrolyte sheet is used in a battery, the cycle characteristics of the battery can be more improved.

In the compositional formula (1), element M1 may include Y (yttrium). That is, the halide solid electrolyte may include Y as a metal element.

The halide solid electrolyte including Y may be represented by, for example, the following compositional formula (2):

$$Li_aMe_bY_cX_6 \quad \text{formula (2).}$$

In the formula (2), a, b, and c may satisfy $a + mb + 3c = 6$ and $c > 0$. Element Me is at least one selected from the group consisting of metal elements other than Li and Y and metalloid elements, and m represents the valence of element Me. When element Me includes multiple types of elements, mb is the sum of the products of the composition ratio of each

element and the valence of the element. For example, when Me includes element Me1 and element Me2, and the composition ratio of element Me1 is b1, the valence of element Me1 is m1, the composition ratio of element Me2 is b2, and the valence of element Me2 is m2, mb is represented by m1b1 + m2b2. In the compositional formula (2), element X is at least one selected from the group consisting of F, Cl, Br, and I.

Element Me may be, for example, at least one selected from the group consisting of Mg, Ca, Sr, Ba, Zn, Sc, Al, Ga, Bi, Zr, Hf, Ti, Sn, Ta, Gd, and Nb.

As the halide solid electrolyte, for example. materials below can be used. The ion conductivity of the solid electrolyte 101 is more improved by the materials below, and thereby the ion conductivity of a solid electrolyte sheet formed from the solid electrolyte composition 1000 can be improved. The cycle characteristics of the battery can be more improved by this solid electrolyte sheet.

The halide solid electrolyte may be a material represented by the following compositional formula (A1):

$$Li_{6-3d}Y_dX_6 \quad \text{formula (A1).}$$

In the compositional formula (A1), element X is at least one selected from the group consisting of Cl, Br, and I. In the compositional formula (A1), d satisfies $0 < d < 2$.

The halide solid electrolyte may be a material represented by the following compositional formula (A2):

$$Li_3YX_6 \quad \text{formula (A2).}$$

In the compositional formula (A2), element X is at least one selected from the group consisting of Cl, Br, and I.

The halide solid electrolyte may be a material represented by the following compositional formula (A3):

$$Li_{3-3\delta}Y_{1+\delta}Cl_6 \quad \text{formula (A3).}$$

In the compositional formula (A3), δ satisfies $0 < \delta \leq 0.15$.

The halide solid electrolyte may be a material represented by the following compositional formula (A4):

$$Li_{3-3\delta}Y_{1+\delta}Br_6 \quad \text{formula (A4).}$$

In the compositional formula (A4), δ satisfies $0 < \delta \leq 0.25$.

The halide solid electrolyte may be a material represented by the following compositional formula (A5):

$$Li_{3-3\delta+a}Y_{1+\delta-a}Me_aCl_{6-x-y}Br_xI_y \quad \text{formula (A5).}$$

In the compositional formula (A5), element Me is at least one selected from the group consisting of Mg, Ca, Sr, Ba, and Zn.

Furthermore, in the compositional formula (A5),

$$-1 < \delta < 2,$$

$$0 < a < 3,$$

$$0 < (3 - 3\delta + a),$$

$$0 < (1 + \delta - a),$$

$$0 \leq x \leq 6,$$

$$0 \leq y \leq 6,$$

and
$(x + y) \leq 6$ are satisfied.

The halide solid electrolyte may be a material represented by the following compositional formula (A6):

$$Li_{3-3\delta}Y_{1+\delta-a}Me_aCl_{6-x-y}Br_xI_y \quad \text{formula (A6).}$$

In the compositional formula (A6), element Me is at least one selected from the group consisting of Al, Sc, Ga, and Bi.

Furthermore, in the above compositional formula (A6),

$$-1 < \delta < 1,$$

$$0 < a < 2,$$

$$0 < (1 + \delta - a),$$

$$0 \le x \le 6,$$

$$0 \le y \le 6,$$

and

$(x + y) \le 6$ are satisfied.

The halide solid electrolyte may be a material represented by the following compositional formula (A7):

$$Li_{3-3\delta-a}Y_{1+\delta-a}Me_aCl_{6-x-y}Br_xI_y \quad \text{formula (A7).}$$

In the compositional formula (A7), element Me is at least one selected from the group consisting of Zr, Hf, and Ti.

Furthermore, in the above compositional formula (A7),

$$-1 < \delta < 1,$$

$$0 < a < 1.5,$$

$$0 < (3 - 3\delta - a),$$

$$0 < (1 + \delta - a),$$

$$0 \le x \le 6,$$

$$0 \le y \le 6,$$

and

$$(x + y) \le 6$$

are satisfied.

The halide solid electrolyte may be a material represented by the following compositional formula (A8):

$$Li_{3-3\delta-2a}Y_{1+\delta-a}Me_aCl_{6-x-y}Br_xI_y \quad \text{formula (A8).}$$

In the compositional formula (A8), element Me is at least one selected from the group consisting of Ta and Nb.

Furthermore, in the above compositional formula (A8),

$$-1 < \delta < 1,$$

$$0 < a < 1.2,$$

$$0 < (3 - 3\delta - 2a),$$

$$0 < (1 + \delta - a),$$

$$0 \leq x \leq 6,$$

$$0 \leq y \leq 6,$$

and

$$(x + y) \leq 6$$

are satisfied.

The halide solid electrolyte may be a compound including Li, M2, O (oxygen), and X2. Element M2 includes, for example, at least one selected from the group consisting of Nb and Ta. X2 is at least one selected from the group consisting of F, Cl, Br, and I.

The compound including Li, M2, X2, and O (oxygen) may be represented by, for example, a compositional formula: $Li_xM2O_yX2_{5+x-2y}$. Here, x may satisfy 0.1 < x < 7.0, and y may satisfy 0.4 < y < 1.9.

As the halide solid electrolyte, more specifically, for example, $Li_3Y(Cl,Br,I)_6$, $Li_{2.7}Y_{1.1}(Cl,Br,I)_6$, $Li_2Mg(F,Cl,Br,I)_4$, $Li_2Fe(F,Cl,Br,I)_4$, $Li(Al,Ga,In)(F,Cl,Br,I)_4$, $Li_3(Al,Ga,In)(F,Cl,Br,I)_6$, $Li_3(Ca,Y,Gd)(Cl,Br,I)_6$, $Li_{2.7}(Ti,Al)F_6$, $Li_{2.5}(Ti,Al)F_6$, and $Li(Ta,Nb)O(F,Cl)_4$ can be used. In the present disclosure, when the elements in a formula are represented by such as "(Al,Ga,In)", this notation indicates at least one element selected from the element group in the parentheses. That is, "(Al,Ga,In)" is synonymous with "at least one selected from the group consisting of Al, Ga, and In". The same applies to other elements.

As the polymeric solid electrolyte, for example, a compound of a polymer compound and a lithium salt can be used. The polymer compound may have an ethylene oxide structure. A polymer compound having an ethylene oxide structure can contain a large amount of a lithium salt. Accordingly, it can more improve ion conductivity. As the lithium salt, $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, $LiC(SO_2CF_3)_3$, and so on can be used. The lithium salts may be used alone or in combination of two or more thereof.

As the complex hydride solid electrolyte, for example, $LiBH_4$-LiI and $LiBH_4$-$P_2S_5$ can be used.

The shape of the solid electrolyte 101 is not particularly limited, and may be, for example, needle, spherical, or oval spherical. The solid electrolyte 101 may have a particulate shape.

When the shape of the solid electrolyte 101 is particulate (e.g., spherical), the median diameter of the solid electrolyte 101 may be 1 μm or more and 100 μm or less or 1 μm or more and 10 μm or less. When the solid electrolyte 101 has a median diameter of 1 μm or more and 100 μm or less, the solid electrolyte 101 can be easily dispersed in the solvent 102.

When the shape of the solid electrolyte 101 is particulate (e.g., spherical), the median diameter of the solid electrolyte 101 may be 0.1 μm or more and 5 μm or less or 0.5 μm or more and 3 μm or less. When the solid electrolyte 101 has a median diameter of 0.1 μm or more and 5 μm or less, a solid electrolyte sheet manufactured from the solid electrolyte composition 1000 can have a higher surface smoothness and can have a denser structure.

The median diameter means a particle diameter at which the cumulative volume in a volume-based particle size distribution is equal to 50%. The volume-based particle size distribution can be determined by a laser diffraction and scattering method. The same applies to the other materials described below.

The specific surface area of the solid electrolyte 101 may be 0.1 $m^2/g$ or more and 100 $m^2/g$ or less or 1 $m^2/g$ or more and 10 $m^2/g$ or less. When the solid electrolyte 101 has a specific surface area of 0.1 $m^2/g$ or more and 100 $m^2/g$ or less, the solid electrolyte 101 can be easily dispersed in the solvent 102. The specific surface area can be measured by a BET multipoint method using a gas adsorption measurement device.

The ion conductivity of the solid electrolyte 101 may be 0.01 $mS/cm^2$ or more, 0.1 $mS/cm^2$ or more, or 1 $mS/cm^2$ or more. When the solid electrolyte 101 has an ion conductivity of 0.01 $mS/cm^2$ or more, the output characteristics of the battery can be improved.

<Binder>

The binder 103 can improve the dispersion stability of the solid electrolyte 101 in the solvent 102 in the solid electrolyte composition 1000. The binder 103 can improve the adhesiveness between individual particles of the solid electrolyte 101 in the solid electrolyte sheet.

The binder 103 includes a styrenic elastomer. The styrenic elastomer is an elastomer including a repeating unit derived from styrene. The repeating unit is a molecular structure derived from a monomer and is sometimes called a constituting unit. Styrenic elastomers are excellent in flexibility and elasticity and are therefore suitable as the binder 103 of the solid electrolyte sheet. In the styrenic elastomer, the content percentage of the repeating unit derived from styrene is not particularly limited and is, for example, 10 mass% or more and 70 mass% or less.

The styrenic elastomer may be a block copolymer including a first block constituted of a repeating unit derived from styrene and a second block constituted of a repeating unit derived from conjugated diene. Examples of the conjugated diene include butadiene and isoprene. The repeating unit derived from conjugated diene may be hydrogenated. That is, the repeating unit derived from conjugated diene may or may not have an unsaturated bond such as a carbon-carbon double bond. The block copolymer may have a triblock sequence constituted of two first blocks and one second block. The block copolymer may be an ABA type triblock copolymer. In this triblock copolymer, the A block corresponds to the first block, and the B block corresponds to the second block. The first block functions as, for example, a hard segment. The second block functions as, for example, a soft segment.

Examples of the styrenic elastomer include a styrene-ethylene/butylene-styrene block copolymer (SEBS), a styrene-ethylene/propylene-styrene block copolymer (SEPS), a styrene-ethylene/ethylene/propylene-styrene block copolymer (SEEPS), styrene-butadiene rubber (SBR), a styrene-butadiene-styrene block copolymer (SBS), a styrene-isoprene-styrene block copolymer (SIS), and hydrogenated styrene-butadiene rubber (HSBR). The binder 103 may include SBR or SEBS as the styrenic elastomer. As the binder 103, a mixture of two or more selected from these styrenic elastomers may be used. Since styrenic elastomers are excellent in flexibility and elasticity, according to the binder 103 including the styrenic elastomer, the dispersion stability and fluidity of the solid electrolyte composition 1000 can be improved. Furthermore, the surface smoothness of a solid electrolyte sheet manufactured from the solid electrolyte composition 1000 can be improved. In addition, according to the binder 103 including the styrenic elastomer, flexibility can be imparted to the solid electrolyte sheet. As a result, a decrease in the thickness of the electrolyte layer of a battery using the solid electrolyte sheet can be realized, and the energy density of the battery can be improved.

The styrenic elastomer may be a styrenic triblock copolymer. Examples of the styrenic triblock copolymer include a styrene-ethylene/butylene-styrene block copolymer (SEBS), a styrene-ethylene/propylene-styrene block copolymer (SEPS), a styrene-ethylene/ethylene/propylene-styrene block copolymer (SEEPS), a styrene-butadiene-styrene block copolymer (SBS), and a styrene-isoprene-styrene block copolymer (SIS). These styrenic triblock copolymers are sometimes called styrenic thermoplastic elastomers. These styrenic triblock copolymers tend to be flexible and have high strength.

The styrenic elastomer may include styrene-butadiene rubber (SBR). The styrenic elastomer may be SBR. The SBR has excellent flexibility and elasticity and also exhibits excellent filling properties during thermal compression and is therefore particularly suitable as the binder of the solid electrolyte sheet.

The styrenic elastomer may include a modifying group. The modifying group is a functional group that chemically modifies all repeating units included in a polymer chain, a part of the repeating units included in a polymer chain, or a terminal of a polymer chain. The modifying group can be introduced into a polymer chain by a substitution reaction, an addition reaction, or the like. The modifying group includes, for example, an element having a relatively high electronegativity, such as O, N, S, F, Cl, Br, and F, or having a relatively low electronegativity, such as Si, Sn, and P. A modifying group including such an element can impart polarity to the polymer. Examples of the modifying group include a carboxylate group, an acid anhydride group, an acyl group, a hydroxy group, a sulfo group, a sulfanyl group, a phosphate group, a phosphonate group, an isocyanate group, an epoxy group, a silyl group, an amino group, a nitrile group, and a nitro group. An example of the acid anhydride group is a maleic anhydride group. The modifying group may be a functional group that can be introduced by being reacted with a modifier of a compound below. Examples of the modifier compound include an epoxy compound, an ether compound, an ester compound, an isocyanate compound, an isothiocyanate compound, an isocyanuric acid derivative, a nitrogen group-containing carbonyl compound, a nitrogen group-containing vinyl compound, a nitrogen group-containing epoxy compound, a mercapto group derivative, a thiocarbonyl compound, a halogenated silicon compound, an epoxidized silicon compound, a vinylated silicon compound, an alkoxy silicon compound, a nitrogen group-containing alkoxy silicon compound, a halogenated tin compound, an organic tin carboxylate compound, a phosphite compound, and a phosphino compound. In the binder 103, when the styrenic elastomer includes the above-mentioned modifying group, the dispersibility of the solid electrolyte 101 included in the solid electrolyte composition 1000 can be more improved. In addition, the peel strength of the solid electrolyte sheet and the electrode sheet can be improved by the interaction with a current collector.

The styrenic elastomer may include a modifying group having a nitrogen atom. The modifying group having a

nitrogen atom is a nitrogen-containing functional group, and examples thereof include an amino group such as an amine compound. The position of the modifying group may be the polymer chain terminal. A styrenic elastomer having a modifying group at the polymer chain terminal can have an effect similar to that of so-called surfactant. That is, when a styrenic elastomer having a modifying group at the polymer chain terminal is used, the modifying group adsorbs to the solid electrolyte 101, and the polymer chain can suppress aggregation of individual particles of the solid electrolyte 101. As a result, the dispersibility of the solid electrolyte 101 can be more improved. The styrenic elastomer may be, for example, a terminal amine-modified styrenic elastomer. The styrenic elastomer may be, for example, a styrenic elastomer having a nitrogen atom at at least one terminal of the polymer chain and having a star-shaped polymer structure with a nitrogen-containing alkoxysilane substituent at the center.

The styrenic elastomer may include at least one selected from the group consisting of modified SBR and modified SEBS. The modified SBR means SRB having an introduced modifying group. The modified SEBS means SEBR having an introduced modifying group. The modified SBR and the modified SEBS can more disperse solid electrolyte particles and therefore are particularly suitable as the binder of the solid electrolyte sheet.

The weight average molecular weight (Mw) of the styrenic elastomer may be 200,000 or more. The styrenic elastomer may have a weight average molecular weight of 300,000 or more, 500,000 or more, 800,000 or more, or 1,000,000 or more. The upper limit of the weight average molecular weight is, for example, 1,500,000. When the styrenic elastomer has a weight average molecular weight of 200,000 or more, individual particles of the solid electrolyte 101 can be bonded to each other with sufficient adhesive strength. When the styrenic elastomer has a weight average molecular weight of 1,500,000 or less, the ionic conduction between individual particles of the solid electrolyte 101 is hardly inhibited by the binder 103, and the output characteristics of the battery can be improved. The weight average molecular weight of the styrenic elastomer can be specified by, for example, gel permeation chromatography (GPC) measurement using polystyrene as a reference standard. In other words, the weight average molecular weight is a value converted from polystyrene. In GPC measurement, chloroform may be used as the eluent. When two or more peak tops are observed in a chart obtained by GPC measurement, the weight average molecular weight calculated from the whole peak range including each peak top can be regarded as the weight average molecular weight of the styrenic elastomer.

In the styrenic elastomer, the ratio of the polymerization degree of the repeating unit derived from styrene and the polymerization degree of the repeating unit derived from other than styrene is defined as m : n. On this occasion, in the styrenic elastomer, the molar fraction ($\varphi$) of the repeating unit derived from styrene can be calculated by $\varphi = m/(m + n)$. In the styrenic elastomer, the molar fraction ($\varphi$) of the repeating unit derived from styrene can be determined by, for example, proton nuclear magnetic resonance ($^1H$ NMR) measurement.

In the styrenic elastomer, the molar fraction ($\varphi$) of the repeating unit derived from styrene may be 0.05 or more and 0.55 or less or 0.1 or more and 0.3 or less. A styrenic elastomer having a $\varphi$ of 0.05 or more can improve the strength of the solid electrolyte sheet. A styrenic elastomer having a $\varphi$ of 0.55 or less can improve the flexibility of the solid electrolyte sheet.

The binder 103 may include a binder other than the styrenic elastomer, such as the binding agent that is generally used as the binder for a battery. Alternatively, the binder 103 may be a styrenic elastomer. In other words, the binder 103 may include a styrenic elastomer only.

Examples of the binding agent include polyvinylidene fluoride (PVDF), polytetrafluoroethylene (PTFE), polyethylene, polypropylene, aramide resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester (PMMA), polymethacrylic acid ethyl ester, polymethacrylic acid hexyl ester, polyvinyl acetate, polyvinylpyrrolidone, polyether, polycarbonate, polyethersulfone, polyetherketone, polyetheretherketone, polyphenylene sulfide, hexafluoropolypropylene, styrene-butadiene rubber, carboxymethyl cellulose, and ethyl cellulose. As the binding agent, a copolymer synthesized using two or more monomers selected from the group consisting of tetrafluoroethylene, hexafluoroethylene, hexafluoropropylene, perfluoroalkylvinyl ether, fluorinated vinylidene, chlorotrifluoroethylene, ethylene, propylene, butadiene, isoprene, styrene, pentafluoropropylene, fluoromethylvinyl ether, acrylic acid ester, acrylic acid, and hexadiene can also be used. These binding agents may be used alone or in combination of two or more thereof.

The binding agent may include an elastomer from the viewpoint of excellent binding properties. The elastomer is a polymer having rubber elasticity. The elastomer that is used as the binding agent may be a thermoplastic elastomer or may be a thermosetting elastomer. Examples of the elastomer include, in addition to the above-described styrenic elastomers, butadiene rubber (BR), isoprene rubber (IR), chloroprene rubber (CR), acrylonitrile-butadiene rubber (NBR), hydrogenated isoprene rubber (HIR), hydrogenated butyl rubber (HIIR), hydrogenated nitrile rubber (HNBR), and acrylate butadiene rubber (ABR). A mixture including two or more selected from these elastomers may be used.

<Nitrogen-containing organic substance>

The nitrogen-containing organic substance 104 can improve the wettability and dispersibility of the solid electrolyte 101 to the solvent 102.

The nitrogen-containing organic substance 104 is an organic compound including a nitrogen atom (N). The nitrogen-containing organic substance 104 includes at least one selected from the group consisting of primary amines, secondary amines, aminohydroxy compounds, and diamines. The primary amines, the secondary amines, the aminohydroxy compounds, and the diamines each have, as a functional group, at least one selected from the group consisting of chain alkyl groups having 8 or more carbon atoms and chain alkenyl groups having 8 or more carbon atoms. Furthermore, the mass proportion of the nitrogen-containing organic substance 104 to the solid electrolyte 101 is 0.30 mass% or more.

According to the above constitution, a solid electrolyte composition 1000 with improved fluidity and dispersion stability can be obtained. In addition, a large-area solid electrolyte sheet and a large-area battery can be manufactured with high efficiency by using this solid electrolyte composition.

The chain alkyl group may be a straight-chain alkyl group or may be a branched chain alkyl group. The straight-chain alkyl group is a substituent consisting of an aliphatic saturated hydrocarbon in which atoms other than hydrogen atoms, i.e., carbon atoms, are linked together without branching.

The chain alkenyl group may be a straight-chain alkenyl group or may be a branched chain alkenyl group. The straight-chain alkenyl group is a substituent constituted of an aliphatic unsaturated hydrocarbon in which atoms other than hydrogen atoms, i.e., carbon atoms, are linked together without branching. The position of the unsaturated bond in the alkenyl group is not particularly limited. The number of the unsaturated bond in the alkenyl group is not particularly limited and may be one or two or more. The crystallinity of a compound having a straight-chain alkenyl group tends to be lower than that of a compound having a straight-chain alkyl group. Accordingly, a primary amine, a secondary amine, an aminohydroxy compound, or a diamine having a straight-chain alkenyl group can more improve the fluidity of the solid electrolyte composition 1000.

In the nitrogen-containing organic substance 104, the number of carbon atoms of the chain alkyl group or chain alkenyl group may be 8 or more and 30 or less, 12 or more and 24 or less, or 16 or more and 22 or less. When the number of carbon atoms of the alkyl group or alkenyl group is 8 or more, the dispersibility of the solid electrolyte 101 can be improved. When the number of the carbon atoms of the alkyl group or alkenyl group is 30 or less, the filling properties of the ion conductor 111 can be improved.

The nitrogen-containing organic substance 104 may include an organic substance derived from natural fat and oil. The nitrogen-containing organic substance 104 may be an organic substance derived from natural fat and oil. In the nitrogen-containing organic substance 104, the alkyl group or alkenyl group may be a hydrocarbon group derived from natural fat and oil. Examples of the hydrocarbon group derived from natural fat and oil include a coconut alkyl group, a beef tallow alkyl group, a hydrogenated beef tallow alkyl group, and an oleyl group (straight-chain alkenyl group having 18 carbon atoms). The coconut alkyl group includes a straight-chain alkyl group having 8 or more and 18 or less carbon atoms and a straight-chain alkenyl group having 8 or more and 18 or less carbon atoms. The beef tallow alkyl group includes a straight-chain alkyl group having 14 or more and 18 or less carbon atoms and a straight-chain alkenyl group having 8 or more and 18 or less carbon atoms. The hydrogenated beef tallow alkyl group includes a straight-chain alkyl group having 14 or more and 18 or less carbon atoms.

The nitrogen-containing organic substance 104 may include at least one selected from the group consisting of primary amines and secondary amines. The nitrogen-containing organic substance 104 may be a primary amine or a secondary amine. The primary amine is a compound in which one hydrogen atom of ammonia is substituted with a hydrocarbon group. The hydrocarbon group is a chain alkyl group having 8 or more carbon atoms or a chain alkenyl group having 8 or more carbon atoms. The primary amine may not include a hydroxy group. The secondary amine is a compound in which two hydrogen atoms of ammonia are substituted with hydrocarbon groups. The types of the two hydrocarbon groups included in the secondary amine may be the same or different. The hydrocarbon group has at least one selected from the group consisting of chain alkyl groups having 8 or more carbon atoms and chain alkenyl groups having 8 or more carbon atoms. The secondary amine may not include a hydroxy group.

Examples of the primary amine include octylamine, dodecylamine, laurylamine, myristylamine, cetylamine (hexadecylamine), stearylamine, oleylamine, coconut alkylamine, beef tallow alkylamine, hydrogenated beef tallow alkylamine, soybean alkylamine, and coconut amine.

Examples of the secondary amine include N-methyloctadecylamine, dihydrogenated beef tallow alkylamine, dicoconut alkylamine, and dioleylamine.

The nitrogen-containing organic substance 104 may include an aminohydroxy compound. The nitrogen-containing organic substance 104 may be an aminohydroxy compound. The aminohydroxy compound is a compound including at least one nitrogen atom and at least one hydroxy group in a molecule. In addition, the aminohydroxy compound has at least one selected from the group consisting of chain alkyl groups having 8 or more carbon atoms and chain alkenyl groups having 8 or more carbon atoms.

The aminohydroxy compound may have a structure represented by the following formula (3).

[Chem 1]

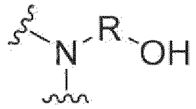

···(3)

In the formula (3), -R-OH is $-(CH_2)_n-OH$ or $-(CH_2CH_2O)_m-H$. In $-(CH_2)_n-OH$, n, i.e., the number of carbon atoms of the alkylene group, may be 2 or more and 6 or less, 2 or more and 4 or less, or 2. m may be 1 or more and 5 or less or 1 or more and 2 or less. In the formula (3), the wavy lines indicate binding sites.

When an aminohydroxy compound is used as the nitrogen-containing organic substance 104, the dispersibility of the solid electrolyte 101 can be more improved.

The aminohydroxy compound may be an alkanolamine. The alkanolamine is a compound having an amino group ($-NH_2$) and a hydroxy group (-OH) in a molecule. The alkanolamine may be a compound in which hydrogen atoms of an alkane are substituted with an amino group and a hydroxy group or may be a compound in which hydrogen atoms of an alkene are substituted with an amino group and a hydroxy group. Even when an alkanolamine is used as the nitrogen-containing organic substance 104, the dispersibility of the solid electrolyte 101 can be more improved.

Examples of the aminohydroxy compound include polyoxyethylene alkylamine, polyoxyethylene alkenylamine, N,N-bis(2-hydroxyethyl)alkylamine, N,N-bis(2-hydroxyethyl)alkenylamine, N,N',N'-tris(2-hydroxyethyl)-N-alkyl-1,3-diaminopropane, N,N',N'-tris(2-hydroxyethyl)-N-alkenyl-1,3-diaminopropane, triethanolamine monofatty acid ester, triethanolamine difatty acid ester, N,N-bis(2-hydroxyethyl)oleylamine, and 1-hydroxyethyl-2-alkenylimidazoline.

The nitrogen-containing organic substance 104 may be a commercially available one. As the nitrogen-containing organic substance 104, for example, a commercially available reagent, dispersant, humectant, or surfactant may be used.

In the nitrogen-containing organic substance 104, as the aminohydroxy compound, polyoxyethylene alkylamine or polyoxyethylene alkenylamine may be used. The alkyl group included in the polyoxyethylene alkylamine and the alkenyl group included in the polyoxyethylene alkenylamine may be the above-described alkyl group derived from natural fat and oil and alkenyl group derived from natural fat and oil. The average addition mole number of the ethylene oxide included in polyoxyethylene alkylamine or polyoxyethylene alkenylamine may be one or two. The alkyl group of the polyoxyethylene alkylamine may have 8 or more and 22 or less carbon atoms. The alkenyl group of the polyoxyethylene alkenylamine may have 8 or more and 22 or less carbon atoms. Examples of the polyoxyethylene alkylamine or polyoxyethylene alkenylamine include AMIET manufactured by Kao Corporation, LIPONOL manufactured by Lion Specialty Chemicals Co., Ltd., and NYMEEN manufactured by NOF Corporation. "AMIET" is a registered trademark of Kao Corporation. "LIPONOL" is a registered trademark of Lion Specialty Chemicals Co., Ltd. "NYMEEN" is a registered trademark of NOF Corporation.

In the nitrogen-containing organic substance 104, as the aminohydroxy compound, triethanolamine difatty acid ester may be used. The triethanolamine difatty acid ester is a compound formed by ester condensation of triethanolamine and two fatty acids. The type of the fatty acid included in the triethanolamine difatty acid ester is not particularly limited, and fatty acid including a hydrocarbon group having 16 or more and 18 or less carbon atoms is used. Examples of the fatty acid include palmitic acid, oleic acid, linoleic acid, and linolenic acid. Examples of the triethanolamine difatty acid ester include DISPERBYK-108 manufactured by BYK. "DISPERBYK" is a registered trademark of BYK.

In the nitrogen-containing organic substance 104, as the aminohydroxy compound, N,N-bis(2-hydroxyethyl) alkenylamine may be used. The number of carbon atoms of the alkenyl group may be 10 or more and 22 or less or 14 or more and 20 or less. The number of unsaturated bond included in the alkenyl group is not particularly limited, and may be one or two.

In the nitrogen-containing organic substance 104, as the aminohydroxy compound, 1-hydroxyethyl-2-alkenylimidazoline may be used. The alkenyl group included in 1-hydroxyethyl-2-alkenylimidazoline may be a hydrocarbon group having 13 or more and 17 or less carbon atoms. The number of unsaturated bond included in the alkenyl group may be 1 or more and 3 or less. Examples of 1-hydroxyethyl-2-alkenylimidazoline include DISPERBYK-109 manufactured by BYK and HOMOGENOL L-95 manufactured by Kao Corporation. "HOMOGENOL" is a registered trademark of Kao Corporation.

The nitrogen-containing organic substance 104 may include diamine. The nitrogen-containing organic substance 104 may be diamine. Diamine is a compound having two amino groups in one molecule. In addition, the diamine has at least one selected from the group consisting of chain alkyl groups having 8 or more carbon atoms and chain alkenyl groups having 8 or more carbon atoms.

The diamine may have a structure represented by the following formula (4).

[Chem 2]

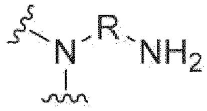 ···(4)

In the formula (4), R represents an alkylene group. The number carbon atoms of the alkylene group may be 2 or more and 6 or less, 2 or more and 4 or less, or 3. In the formula (4), the wavy lines indicate binding sites.

In the nitrogen-containing organic substance 104, as the diamine, N-coconut alkyl-1,3-diaminopropane, N-beef tallow alkyl-1,3-diaminopropane, N-hydrogenated beef tallow alkyl-1,3-diaminopropane, oleyl propylenediamine, or behenyl propylenediamine may be used. The beef tallow alkyl group includes a straight-chain alkyl group having 14 or more and 18 or less carbon atoms and a straight-chain alkenyl group having 8 or more and 18 or less carbon atoms.

The nitrogen-containing organic substance 104 may include oleylamine. The nitrogen-containing organic substance 104 may be oleylamine. Oleylamine is a liquid at ordinary temperature. In addition, oleylamine is a primary amine having a long-chain alkenyl group. Oleylamine can more improve the dispersibility of the solid electrolyte 101. In addition, the filling properties of the ion conductor 111 during pressure molding can be more improved by using oleylamine.

The iodine value of the nitrogen-containing organic substance 104 may be 15 or more, 50 or more, 90 or more, or 100 or more. When the nitrogen-containing organic substance 104 has an iodine value of 15 or more, the fluidity of the solid electrolyte composition 1000 can be more improved. The iodine value of the nitrogen-containing organic substance 104 may be 150 or less. When the nitrogen-containing organic substance 104 has an iodine value of 150 or less, reaction such as oxidative decomposition can be suppressed. As a result, the durability of a battery produced using the solid electrolyte composition 1000 can be improved. The iodine value is a value of mass of iodine included in 100 g of a sample. The unit of the iodine value is represented by $I_2$ g/100 g. The iodine value of the nitrogen-containing organic substance 104 can be determined by a Wijs method. However, when the iodine value obtained by the Wijs method is 3 or less, the iodine value determined by NMR measurement is used as the value of the nitrogen-containing organic substance 104. In the NMR measurement, for example, the iodine value of the nitrogen-containing organic substance 104 can be determined by using decamethylcyclopentasiloxane as the internal standard material.

<Ion conductor>

As described above, the ion conductor 111 includes a solid electrolyte 101, a binder 103, and a nitrogen-containing organic substance 104. In the ion conductor 111, multiple particles of the solid electrolyte 101 are bound to each other via the binder 103. In the ion conductor 111, the particles of the solid electrolyte 101 are dispersed by the nitrogen-containing organic substance 104 adsorbed to the solid electrolyte 101.

In the ion conductor 111, the mass proportion of the binder 103 to the solid electrolyte 101 is not particularly limited, and may be 0.1 mass% or more and 10 mass% or less, 0.5 mass% or more and 5 mass% or less, or 1 mass% or more and 3 mass% or less. When the mass proportion of the binder 103 to the solid electrolyte 101 is 0.1 mass% or more, it is possible to improve the strength of a solid electrolyte sheet manufactured from the solid electrolyte composition 1000. When the mass proportion of the binder 103 to the solid electrolyte 101 is 10 mass% or less, it is possible to suppress a decrease in the ion conductivity of the ion conductor 111.

As described above, in the ion conductor 111, the mass proportion of the nitrogen-containing organic substance 104 to the solid electrolyte 101 is 0.30 mass% or more. A solid electrolyte composition with improved fluidity and dispersion stability can be obtained by adjusting the mass proportion of the nitrogen-containing organic substance 104 to the solid electrolyte 101 to 0.30 mass% or more. A large-area solid electrolyte sheet and a large-area battery can be manufactured with high efficiency by using the solid electrolyte composition with improved fluidity and dispersion stability. The mass proportion of the nitrogen-containing organic substance 104 to the solid electrolyte 101 may be 0.60 mass% or more or 1.0 mass% or more. A solid electrolyte composition with more improved fluidity and dispersion stability can be obtained by adjusting the mass proportion of the nitrogen-containing organic substance 104 to the solid electrolyte 101 to 0.60 mass% or more. The mass proportion of the nitrogen-containing organic substance 104 to the solid electrolyte 101 may be 10 mass% or less, 5 mass% or less, or 1 mass% or less. When the mass proportion of the nitrogen-containing organic substance 104 to the solid electrolyte 101 is 10 mass% or less, it is possible to suppress a decrease in the ion conductivity of the ion conductor 111 and a decrease in the strength of the solid electrolyte sheet.

The ion conductor 111 can be produced by, for example, mixing a solid electrolyte 101, a binder 103, and a nitrogen-containing organic substance 104. The method for mixing these materials is not particularly limited, and examples thereof include a dry method of mechanically pulverizing and mixing the solid electrolyte 101, the binder 103, and the nitrogen-containing organic substance 104. A wet method of preparing a solution or dispersion including the binder 103 and a solution or dispersion including the nitrogen-containing organic substance 104, dispersing the solid

electrolyte 101 therein, and mixing them may be used. According to the wet method, the binder 103, the nitrogen-containing organic substance 104, and the solid electrolyte 101 can be mixed simply and uniformly. The solid electrolyte composition 1000 may be produced by producing the ion conductor 111 in a solvent by a wet method.

<Solvent>

The solvent 102 may be an organic solvent. The organic solvent is a compound including carbon and is, for example, a compound including elements such as carbon, hydrogen, nitrogen, oxygen, sulfur, and a halogen.

The solvent 102 may include at least one selected from the group consisting of hydrocarbons, compounds having halogen groups, and compounds having ether bonds.

The hydrocarbon is a compound consisting of carbon and hydrogen only. The hydrocarbon may be an aliphatic hydrocarbon. The hydrocarbon may be a saturated hydrocarbon or an unsaturated hydrocarbon. The hydrocarbon may be a straight chain or a branched chain. The number of carbon atoms included in the hydrocarbon is not particularly limited and may be 7 or more. A solid electrolyte composition 1000 with excellent dispersibility of the ion conductor 111 can be obtained by using hydrocarbon. Furthermore, it is possible to suppress a decrease in the ion conductivity of the solid electrolyte 101 due to mixing with the solvent 102.

The hydrocarbon may have a ring structure. The ring structure may be an alicyclic hydrocarbon or an aromatic hydrocarbon. The ring structure may be monocyclic or polycyclic. When the hydrocarbon has a ring structure, the ion conductor 111 can be easily dispersed in the solvent 102. From the viewpoint of improving the dispersibility of the ion conductor 111 in the solid electrolyte composition 1000, the hydrocarbon may include an aromatic hydrocarbon. That is, the solvent 102 may include an aromatic hydrocarbon. The hydrocarbon may be an aromatic hydrocarbon. A styrenic elastomer is easily dissolved in an aromatic hydrocarbon. Accordingly, when the binder 103 includes a styrenic elastomer and further the solvent 102 includes an aromatic hydrocarbon, it is possible to more efficiently adsorb the binder 103 to the solid electrolyte 101 in the solid electrolyte composition 1000. Consequently, the performance of the solid electrolyte composition 1000 of retaining the solvent can be more improved.

In the compound having a halogen group, the portion other than the halogen group may be composed only of carbon and hydrogen. That is, the compound having a halogen group is a compound in which at least one of hydrogen atoms included in hydrocarbon is substituted with a halogen group. Examples of the halogen group include F, Cl, Br, and I. As the halogen group, at least one selected from the group consisting of F, Cl, Br, and I may be used. The compound having a halogen group has polarity. The ion conductor 111 is easily dispersed in the solvent 102 by using the compound having a halogen group as the solvent 102. Accordingly, a solid electrolyte composition 1000 with improved dispersibility can be obtained. As a result, it is possible to suppress a decrease in the ion conductivity when a solid electrolyte sheet is produced using the solid electrolyte composition 1000. In addition, the solid electrolyte sheet can have a denser structure.

The number of carbon atoms included in the compound having a halogen group is not particularly limited and may be 7 or more. Consequently, since the compound having a halogen group is unlikely to volatilize, a solid electrolyte composition with improved fluidity can be obtained. In addition, the solid electrolyte composition 1000 can be manufactured stably by using the compound having a halogen group. The compound having a halogen group can have a large molecular weight. That is, the compound having a halogen group can have a high boiling point.

The compound having a halogen group may have a ring structure. The ring structure may be an alicyclic hydrocarbon or an aromatic hydrocarbon. The ring structure may be monocyclic or polycyclic. When the compound having a halogen group has a ring structure, the ion conductor 111 can be easily dispersed in the solvent 102. From the viewpoint of improving the dispersibility of the ion conductor 111 in the solid electrolyte composition 1000, the compound having a halogen group may include an aromatic hydrocarbon. The compound having a halogen group may be an aromatic hydrocarbon.

The compound having a halogen group may have a halogen group only as the functional group. In this case, the number of the halogen included in the compound having a halogen group is not particularly limited. As the halogen group, at least one selected from the group consisting of F, Cl, Br, and I may be used. Since the ion conductor 111 can be easily dispersed in the solvent 102 by using the above-mentioned compound as the solvent 102, a solid electrolyte composition 1000 with improved dispersibility can be obtained. As a result, it is possible to suppress a decrease in the ion conductivity when a solid electrolyte sheet is produced from the solid electrolyte composition 1000. In addition, the solid electrolyte sheet produced from the solid electrolyte composition 1000 can easily have a dense structure with few pinholes, irregularities, and so on.

The compound having a halogen group may be a halogenated hydrocarbon. The halogenated hydrocarbon is a compound in which all hydrogen atoms included in the hydrocarbon are substituted with halogen groups. Since the ion conductor 111 can be easily dispersed in the solvent 102 by using a halogenated hydrocarbon as the solvent 102, a solid electrolyte composition 1000 with improved dispersibility can be obtained. As a result, it is possible to suppress a decrease in the ion conductivity when a solid electrolyte sheet is produced from the solid electrolyte composition 1000. In addition, the solid electrolyte sheet produced from the solid electrolyte composition 1000 can easily have, for example, a dense

structure with few pinholes, irregularities, and so on.

In the compound having an ether bond, the portion other than the ether bond may be composed only of carbon and hydrogen. That is, the compound having an ether bond is a compound in which at least one of C-C bonds included in a hydrocarbon is substituted with a C-O-C bond. The compound having an ether bond can have polarity. The ion conductor 111 can be easily dispersed in the solvent 102 by using the compound having an ether bond as the solvent 102. Accordingly, a solid electrolyte composition 1000 with improved dispersibility can be obtained. As a result, it is possible to suppress a decrease in the ion conductivity when a solid electrolyte sheet is produced from the solid electrolyte composition 1000. In addition, the solid electrolyte sheet produced from the solid electrolyte composition 1000 can have a denser structure.

The compound having an ether bond may have a ring structure. The ring structure may be an alicyclic hydrocarbon or an aromatic hydrocarbon. The ring structure may be monocyclic or polycyclic. When the compound having an ether bond has a ring structure, the ion conductor 111 can be easily dispersed in the solvent 102. From the viewpoint of improving the dispersibility of the ion conductor 111 in the solid electrolyte composition 1000, the compound having an ether bond may include an aromatic hydrocarbon. The compound having an ether bond may be an aromatic hydrocarbon substituted with an ether group.

Examples of the solvent 102 include ethylbenzene, mesitylene, pseudocumene, p-xylene, cumene, tetralin, m-xylene, dibutyl ether, 1,2,4-trichlorobenzene, chlorobenzene, 2,4-dichlorotoluene, anisole, o-chlorotoluene, m-dichlorobenzene, p-chlorotoluene, o-dichlorobenzene, 1,4-dichlorobutane, and 3,4-dichlorotoluene. These solvents may be used alone or in combination of two or more thereof.

From the viewpoint of cost, as the solvent 102, a commercially available xylene, i.e., mixed xylene, may be used. As the solvent 102, for example, mixed xylene in which o-xylene, m-xylene, p-xylene, and ethylbenzene are mixed in a mass ratio of 24 : 42 : 18 : 16 may be used.

The solvent 102 may include tetralin. Tetralin has a relatively high boiling point. According to tetralin, the fluidity and dispersion stability of the solid electrolyte composition are improved. In addition, according to tetralin, not only the performance of the solid electrolyte composition 1000 of retaining the solvent can be improved, but also the solid electrolyte composition 1000 can be stably manufactured by a kneading process.

The boiling point of the solvent 102 may be 100°C or more and 250°C or less, 130°C or more and 230°C or less, 150°C or more and 220°C or less, or 180°C or more and 210°C or less. The solvent 102 may be a liquid at ordinary temperature (25°C). Since such a solvent is unlikely to volatilize at ordinary temperature, the solid electrolyte composition 1000 can be manufactured stably. Accordingly, a solid electrolyte composition 1000 that can be easily applied to the surface of an electrode or base material is obtained. The solvent 102 included in the solid electrolyte composition 1000 can be easily removed by drying described later.

The water content of the solvent 102 may be 10 mass ppm or less. A decrease in the ion conductivity due to reaction of the solid electrolyte 101 can be suppressed by decreasing the water content. Examples of the method for decreasing the water content include a dehydration method using a molecular sieve and a dehydration method by bubbling using an inert gas such as nitrogen gas and argon gas. According to the dehydration method by bubbling using inert gas, a decrease in the water content and deoxidization are possible. The water content can be measured with a Karl Fischer moisture analyzer.

The solvent 102 disperses the ion conductor 111. The solvent 102 can be a liquid in which the solid electrolyte 101 can be dispersed. The solid electrolyte 101 may not be dissolved in the solvent 102. When the solid electrolyte 101 is not dissolved in the solvent 102, the ionic conduction phase during the manufacturing of the solid electrolyte 101 is easily maintained. Accordingly, in a solid electrolyte sheet manufactured using this solid electrolyte composition 1000, a decrease in the ion conductivity can be suppressed.

The solvent 102 may dissolve a part or the whole of the solid electrolyte 101. The denseness of the solid electrolyte sheet manufactured using the solid electrolyte composition 1000 can be improved by the solid electrolyte 101 being dissolved in the solvent 102.

<Solid electrolyte composition>

The solid electrolyte composition 1000 may be in a paste state or in a dispersion state. The ion conductor 111 is, for example, particles. In the solid electrolyte composition 1000, the particles of the ion conductor 111 are mixed with the solvent 102. In manufacturing of the solid electrolyte composition 1000, the method for mixing the ion conductor 111 and the solvent 102, i.e., the method for mixing the solid electrolyte 101, the solvent 102, the binder 103, and the nitrogen-containing organic substance 104, is not particularly limited. Examples of the mixing method include those using mixing devices such as stirring, shaking, ultrasonic, and rotary type devices. Examples of the mixing method include those using dispersing and kneading equipment such as a high-speed homogenizer, a thin-film swirling high-speed mixer, an ultrasonic homogenizer, a high-pressure homogenizer, a ball mill, a bead mill, a planetary mixer, a sand mill, a roll mill, and a kneader. These mixing methods may be used alone or in combination of two or more thereof.

As the method for mixing the solid electrolyte 101, the solvent 102, the binder 103, and the nitrogen-containing organic substance 104, high-shear treatment using a high-speed homogenizer or high-shear treatment using an ultrasonic homogenizer may be adopted. According to these high-shear treatment, the nitrogen-containing organic substance 104 can be efficiently adsorbed to the surfaces of the particles of the solid electrolyte 101. As a result, it is possible to more improve the dispersion stability of the solid electrolyte composition 1000 manufactured by these high-shear treatment.

Manufacturing method of solid electrolyte composition

The solid electrolyte composition 1000 is manufactured by, for example, the following method. First, a solid electrolyte 101 and a solvent 102 are mixed, and a solution containing a binder 103, a solution containing a nitrogen-containing organic substance 104, and so on are further added thereto. The resulting mixture solution is subjected to high-speed shear treatment using an in-line type dispersion and pulverization device. In such a process, an ion conductor 111 is formed, the ion conductor 111 is dispersed and stabilized in the solvent 102, and a solid electrolyte composition 1000 with improved fluidity can be manufactured. In addition, from the viewpoint of manufacturing a solid electrolyte composition 1000 with improved fluidity, the high-speed shear treatment may be performed under conditions of peripheral speed of not causing pulverization of the particles of the solid electrolyte 101 but causing disintegration between individual particles of the solid electrolyte 101. The solid electrolyte composition 1000 may be produced by mixing the solvent 102 and the ion conductor 111 produced in advance and subjecting the resulting mixture solution to high-speed shear treatment.

The solid electrolyte composition 1000 may be manufactured by the following method. First, a solid electrolyte 101 and a solvent 102 are mixed, and a solution containing a binder 103 and a solution containing a nitrogen-containing organic substance 104 are further added thereto. The resulting mixture solution is subjected to high-shear treatment using an ultrasonic homogenizer. In such a process, an ion conductor 111 is formed, the ion conductor 111 is dispersed and stabilized in the solvent 102, and a solid electrolyte composition 1000 with more improved fluidity can be manufactured. The solid electrolyte composition 1000 may be produced by mixing the solvent 102 and the ion conductor 111 produced in advance and subjecting the resulting mixture solution to ultrasonic high-shear treatment.

From the viewpoint of manufacturing a solid electrolyte composition 1000 with more improved fluidity, high-speed shear treatment or ultrasonic high-shear treatment may be performed under conditions of not causing pulverization of the particles of the solid electrolyte 101 but causing disintegration of individual particles of the solid electrolyte 101.

The solution containing the binder 103 is, for example, a solution including the binder 103 and the solvent 102. The composition of the solvent included in the solution containing the binder 103 may be the same as or different from the composition of the solvent included in the dispersion of the solid electrolyte 101.

The solution containing the nitrogen-containing organic substance 104 is, for example, a solution including a nitrogen-containing organic substance 104 and a solvent 102. The composition of the solvent included in the solution containing the nitrogen-containing organic substance 104 may be the same as or different from the composition of the solvent included in the dispersion of the solid electrolyte 101.

The solid content concentration of the solid electrolyte composition 1000 is appropriately determined according to the particle diameter of the solid electrolyte 101, the specific surface area of the solid electrolyte 101, the type of the solvent 102, the type of the binder 103, and the type of the nitrogen-containing organic substance 104. The solid content concentration may be 20 mass% or more and 70 mass% or less or 30 mass% or more and 60 mass% or less. Since the solid electrolyte composition 1000 has a desired viscosity by adjusting the solid content concentration to 20 mass% or more, the solid electrolyte composition 1000 can be easily applied to a substrate such as an electrode. When the solid electrolyte composition 1000 is applied to a substrate, the thickness of the wet film can be relatively increased by adjusting the solid content concentration to 70 mass% or less. Consequently, a solid electrolyte sheet with a more uniform thickness can be manufactured.

The fluidity of the solid electrolyte composition 1000 can be evaluated based on the viscosity ratio using a viscosity/viscoelasticity measuring instrument. Alternatively, the fluidity of the solid electrolyte composition 1000 may be evaluated by evaluating the rheology using a viscosity/viscoelasticity measuring instrument.

The fluidity of the solid electrolyte composition 1000 can be evaluated by, for example, the following method. The viscosity of a solid electrolyte composition 1000 measured using a viscosity/viscoelasticity measuring instrument at the speed control mode under conditions of 25°C and a shear rate of 1 $sec^{-1}$ is defined as viscosity $\eta 1$. The viscosity of the solid electrolyte composition 1000 measured using the viscosity/viscoelasticity measuring instrument at the speed control mode under conditions of 25°C and a shear rate of 100 $sec^{-1}$ is defined as viscosity $\eta 2$. The fluidity of the solid electrolyte composition 1000 can be evaluated by the ratio of the viscosity $\eta 1$ to the viscosity $\eta 2$, $\eta 1/\eta 2$.

In the solid electrolyte composition 1000, the $\eta 1/\eta 2$ may be 1.4 or more, 3.0 or more, 5.0 or more, 10 or more, or 20 or more. When the $\eta 1/\eta 2$ is adjusted to 1.4 or more, the dispersion stability of the solid electrolyte composition 1000 can be more improved. In addition, it is possible to suppress dropping of the solid electrolyte composition 1000 during application. The upper limit of the $\eta 1/\eta 2$ is, for example, 30. The uniformity in the thickness of the solid electrolyte sheet 301

manufactured from the solid electrolyte composition 1000 can be improved by adjusting the $\eta 1/\eta 2$ to 30 or less.

The fluidity of the solid electrolyte composition 1000 may be evaluated by evaluating the rheology. In the evaluation of rheology, for example, Casson yield value, storage modulus G' value, and loss tangent tan $\delta$ value are used.

In the solid electrolyte composition 1000, the rheology may be evaluated by the Casson yield value obtained using a viscosity/viscoelasticity measuring instrument at the speed control mode. The Casson yield value can be calculated by the following method. The shear stress (S) of the solid electrolyte composition 1000 is measured at shear rates (D) from 0.1 $sec^{-1}$ to 1000 $sec^{-1}$ using a viscosity/viscoelasticity measuring instrument under conditions of 25°C and the speed control mode. The slope "a" and the intercept "b" are determined using the obtained numerical values of the shear rate and shear stress based on the following relational expression. The Casson yield value is the square of the intercept "b" in the relational expression below.

[Math 1]

$$\sqrt{S} = a\sqrt{D} + b$$

In the solid electrolyte composition 1000, the Casson yield value may be 0.05 Pa or more and 4.5 Pa or less or 0.1 Pa or more and 2.0 Pa or less. The solid electrolyte composition 1000 can be easily applied to a base material by adjusting the Casson yield value to 0.05 Pa or more. A coating film having a more uniform thickness can be manufactured by adjusting the Casson yield value to 4.5 Pa or less.

In the solid electrolyte composition 1000, the rheology may be evaluated by the storage modulus G' and loss tangent tan $\delta$ obtained using a viscosity/viscoelasticity measuring instrument at the distortion control mode.

The storage modulus G' and the loss tangent tan $\delta$ can be measured by the following method. A shear is applied to a solid electrolyte composition from 0.01% to 10000% strain ($\gamma$) using viscosity/viscoelasticity measuring instrument under conditions of 25°C and a frequency of 1 Hz at the distortion control mode. Subsequently, the storage modulus G' and loss tangent tan $\delta$ are measured when the $\gamma$ is returned from 10000% to 0.01%. On this occasion, the storage modulus G' and loss tangent tan $\delta$ are obtained at $\gamma$ = 130%, that is, high strain conditions. In addition, the storage modulus G' and loss tangent tan $\delta$ are obtained at $\gamma$ = 0.1%, that is, at a low strain condition.

In the solid electrolyte composition 1000, the storage modulus G' at $\gamma$ = 130% may be 0.10 Pa or more and 2.0 Pa or less or 0.2 Pa or more and 1.0 Pa or less. The loss tangent tan $\delta$ at $\gamma$ = 130% may be 2.5 or more and 30 or less or 4.0 or more and 15 or less. The solid electrolyte composition 1000 can have good fluidity by adjusting at least one of the storage modulus G' or the loss tangent tan $\delta$ within the above range. Accordingly, it is easy send the solid electrolyte composition 1000 using an apparatus or the like.

In the solid electrolyte composition 1000, the storage modulus G' at $\gamma$ = 0.1% may be 1.0 Pa or more and 80 Pa or less or 10 Pa or more and 70 Pa or less. The loss tangent tan $\delta$ at $\gamma$ = 0.1% may be 0.4 or more and 3.9 or less, 0.5 or more and 3.0 or less, or 0.6 or more and 2.0 or less. The solid electrolyte composition 1000 can be easily applied to a base material or the like by adjusting the storage modulus G' at $\gamma$ = 0.1% to 1.0 Pa or more or adjusting the loss tangent tan $\delta$ to 3.9 or less. Consequently, in the coating film obtained by using the solid electrolyte composition 1000, the uniformity in the thickness can be improved. For example, when the solid electrolyte composition 1000 is applied to a base material or the like, the solid electrolyte composition 1000 easily spreads by adjusting the storage modulus G' at $\gamma$ = 0.1% to 80 Pa or less or adjusting the loss tangent tan $\delta$ to 0.4 or more. As a result, in the coating film obtained using the solid electrolyte composition 1000, the uniformity in the thickness can be more improved.

[Embodiment 2]

Embodiment 2 will now be described. Descriptions that overlap with those of embodiment 1 will be omitted as appropriate.

The electrode composition 2000 may be slurry having fluidity. An electrode composition 2000 having fluidity can form an electrode sheet by a wet method such as a coating method. The "electrode sheet" may be a self-supporting sheet member or may be a positive electrode layer or negative electrode layer being supported by a current collector, a base material, or an electrode assembly.

[Electrode composition]

Fig. 3 is a schematic view of an electrode composition 2000 according to embodiment 2. The electrode composition 2000 includes an ion conductor 121 and a solvent 102. The ion conductor 121 includes a solid electrolyte 101, a binder 103, a nitrogen-containing organic substance 104, and an active material 201. The ion conductor 121 is dispersed or dissolved in the solvent 102. That is, the solid electrolyte 101, the binder 103, the nitrogen-containing organic

substance 104, and the active material 201 are dispersed or dissolved in the solvent 102. In other words, the electrode composition 2000 includes an active material 201 and a solid electrolyte composition 1000. The solid electrolyte composition 1000 includes the solid electrolyte 101, the solvent 102, the binder 103, and the nitrogen-containing organic substance 104. The solid electrolyte composition 1000 is as described in embodiment 1 above. The electrode composition 2000 is the solid electrolyte composition 1000 to which the active material 201 is added. The characteristics and effects of the electrode composition 2000 are the same as those of the solid electrolyte composition 1000. In the following, the active material 201 will be described in detail.

<Active material>

The active material 201 according to embodiment 2 includes a material that has a property of occluding and releasing metal ions (e.g., lithium ions). The active material 201 includes, for example, a positive electrode active material or a negative electrode active material. When the electrode composition 2000 includes the active material 201, a lithium secondary battery can be manufactured by using an electrode sheet obtained from the electrode composition 2000.

The active material 201 includes a positive electrode active material, for example, includes a material that has a property of occluding and releasing metal ions (e.g., lithium ions), as the positive electrode active material. Examples of the positive electrode active material include a lithium-containing transition metal oxide, a transition metal fluoride, a polyanion material, a fluorinated polyanion material, a transition metal sulfide, a transition metal oxysulfide, and a transition metal oxynitride. Examples of the lithium-containing transition metal oxide include $Li(NiCoAl)O_2$, $Li(NiCoMn)O_2$, and $LiCoO_2$. For example, when a lithium-containing transition metal oxide is used as the positive electrode active material, the manufacturing cost of the electrode composition 2000 can be decreased, and the average discharging voltage of a battery can be improved. $Li(NiCoAl)O_2$ means that Ni, Co, and Al are included at an arbitrary ratio. $Li(NiCoMn)O_2$ means that Ni, Co, and Mn are included at an arbitrary ratio.

The median diameter of the positive electrode active material may be 0.1 μm or more and 100 μm or less or 1 μm or more and 10 μm or less. When the positive electrode active material has a median diameter of 0.1 μm or more, in the electrode composition 2000, the active material 201 can be easily dispersed in the solvent 102. As a result, the charge and discharge characteristics of the battery using an electrode sheet manufactured from the electrode composition 2000 are improved. When the positive electrode active material has a median diameter of 100 μm or less, the lithium diffusion speed in the positive electrode active material is improved. Accordingly, the battery can operate at high output.

The active material 201 includes a negative electrode active material, for example, includes a material that has a property of occluding and releasing metal ions (e.g., lithium ions), as the negative electrode active material. Examples of the negative electrode active material include a metal material, a carbon material, an oxide, a nitride, a tin compound, and a silicon compound. The metal material may be a single metal or an alloy. Examples of the metal material include a lithium metal and a lithium alloy. Examples of the carbon material include natural graphite, coke, graphitizing carbon, carbon fibers, spherical carbon, artificial graphite, and amorphous carbon. The capacity density of a battery can be improved by using silicon (Si), tin (Sn), a silicon compound, a tin compound, or the like. The safety of a battery can be improved by using an oxide compound including titanium (Ti) or niobium (Nb).

The median diameter of the negative electrode active material may be 0.1 μm or more and 100 μm or less or 1 μm or more and 10 μm or less. When the negative electrode active material has a median diameter of 0.1 μm or more, in the electrode composition 2000, the active material 201 can be easily dispersed in the solvent 102. As a result, the charge and discharge characteristics of the battery using an electrode sheet manufactured from the electrode composition 2000 are improved. When the negative electrode active material has a median diameter of 100 μm or less, the lithium diffusion speed in the negative electrode active material is improved. Accordingly, the battery can operate at high output.

The positive electrode active material and the negative electrode active material may be covered with a covering material in order to decrease the interface resistance between each of the active materials and the solid electrolyte. That is, a covering layer may be provided on the surfaces of the positive electrode active material and the negative electrode active material. The covering layer is a layer including a covering material. As the covering material, a material having low electron conductivity can be used. As the covering material, an oxide material, an oxide solid electrolyte, a halide solid electrolyte, a sulfide solid electrolyte, and so on can be used. The positive electrode active material and the negative electrode active material may be covered with only one covering material selected from the above-mentioned materials. That is, as the covering layer, a covering layer formed of only one covering material selected from the above-mentioned materials may be provided. Alternatively, two or more covering layers formed using two or more covering materials selected from the above-mentioned materials may be provided.

Examples of the oxide material that is used as the covering material include $SiO_2$, $Al_2O_3$, $TiO_2$, $B_2O_3$, $Nb_2O_5$, $WO_3$, and $ZrO_2$.

As the oxide solid electrolyte that is used as the covering material, the oxide solid electrolytes exemplified in embodiment 1 may be used, and examples thereof include Li-Nb-O compounds such as $LiNbO_3$, Li-B-O compounds such as $LiBO_2$ and $Li_3BO_3$, Li-Al-O compounds such as $LiAlO_2$, Li-Si-O compounds such as $Li_4SiO_4$, Li-Ti-O compounds such

as $Li_2SO_4$ and $Li_4Ti_5O_{12}$, Li-Zr-O compounds such as $Li_2ZrO_3$, Li-Mo-O compounds such as $Li_2MoO_3$, Li-V-O compounds such as $LiV_2O_5$, Li-W-O compounds such as $Li_2WO_4$, and Li-P-O compounds such as $LiPO_4$. The oxide solid electrolytes have high potential stability. Accordingly, the cycle performance of the battery can be more improved by using the oxide solid electrolyte as the covering material.

As the halide solid electrolyte that is used as the covering material, the halide solid electrolytes exemplified in embodiment 1 may be used, and examples thereof include Li-Y-Cl compounds such as $LiYCl_6$, Li-Y-Br-Cl compounds such as $LiYBr_2Cl_4$, Li-Ta-O-Cl compounds such as $LiTaOCl_4$, and Li-Ti-Al-F compounds such as $Li_{2.7}Ti_{0.3}Al_{0.7}F_6$. The halide solid electrolytes have high ion conductivities and high high-potential stability. Accordingly, the cycle performance of the battery can be more improved by using a halide solid electrolyte as the covering material.

As the sulfide solid electrolyte that is used as the covering material, sulfide solid electrolytes exemplified in embodiment 1 may be used, and examples thereof include Li-P-S compounds such as $Li_2S-P_2S_5$. The sulfide solid electrolytes have high ion conductivities and low Young's moduluses. Accordingly, uniform cover can be realized by using the sulfide solid electrolyte as the covering material, and the cycle performance of the battery can be more improved.

<Electrode composition>

The electrode composition 2000 may be in a paste state or in a dispersion state. The active material 201 and the ion conductor 111 are, for example, particles. In manufacturing of the electrode composition 2000, the particles of the active material 201 and the particles of the ion conductor 111 are mixed with the solvent 102. In manufacturing of the electrode composition 2000, the method for mixing the active material 201, the ion conductor 111, and the solvent 102, i.e., the method for mixing the active material 201, the solid electrolyte 101, the solvent 102, the binder 103, and the nitrogen-containing organic substance 104, is not particularly limited. Examples of the mixing method include those using mixing devices such as stirring, shaking, ultrasonic, and rotary type devices. Examples of the mixing method include those using dispersing and kneading equipment such as a high-speed homogenizer, a thin-film swirling high-speed mixer, an ultrasonic homogenizer, a high-pressure homogenizer, a ball mill, a bead mill, a planetary mixer, a sand mill, a roll mill, and a kneader. These mixing methods may be used alone or in combination of two or more thereof.

[Manufacturing method of electrode composition]

The electrode composition 2000 is manufactured by, for example, the following method. First, an active material 201 and a solvent 102 are mixed to prepare a dispersion. A solution containing a binder 103 and a solution containing a nitrogen-containing organic substance 104 are added to the resulting dispersion. The resulting mixture solution is subjected to high-speed shear treatment using an in-line type dispersion and pulverization device. A solid electrolyte 101 is added to the resulting dispersion. The resulting mixture solution is subjected to high-speed shear treatment using an in-line type dispersion and pulverization device. In such a process, an ion conductor 111 is formed, the active material 201 and the ion conductor 111 are dispersed and stabilized in the solvent 102, and an electrode composition 2000 with more excellent fluidity can be manufactured. The electrode composition 2000 may be produced by mixing the solvent 102, the ion conductor 111 produced in advance, and the active material 201 and subjecting the resulting mixture solution to high-speed shear treatment. The electrode composition 2000 may be produced by mixing the solid electrolyte composition 1000 produced in advance and the active material 201 and subjecting the resulting mixture solution to high-speed shear treatment.

The electrode composition 2000 may be manufactured by, for example, the following method. An active material 201 and a solvent 102 are mixed, and a solution containing a binder 103 and a solution containing a nitrogen-containing organic substance 104 are further added thereto. The resulting mixture solution is subjected to high-shear treatment using an ultrasonic homogenizer. A solid electrolyte 101 is added to the resulting dispersion. The resulting mixture solution is subjected to high-shear treatment using an ultrasonic homogenizer. In such a process, an ion conductor 111 is formed, the active material 201 and the ion conductor 111 are dispersed and stabilized in the solvent 102, and an electrode composition 2000 with more excellent fluidity can be manufactured. The electrode composition 2000 may be produced by mixing the solvent 102, the ion conductor 111 prepared in advance, and the active material 201, and subjecting the resulting mixture solution to ultrasonic high-shear treatment. The electrode composition 2000 may be produced by mixing the solid electrolyte composition 1000 produced in advance and the active material 201 and subjecting the resulting mixture solution to ultrasonic high-shear treatment.

From the viewpoint of manufacturing the electrode composition 2000 with improved fluidity, high-speed shear treatment or ultrasonic high-shear treatment may be performed under conditions of not causing pulverization of the particles of the solid electrolyte 101 and the particles of the active material 201 but causing disintegration of individual particles of the solid electrolyte 101 and individual particles of the active material 201.

The electrode composition 2000 may include a conductive assistant for the purpose of improving the electron conductivity. Examples of the conductive assistant include graphite such as natural graphite and artificial graphite, carbon

black such as acetylene black and Ketjen black, conductive fibers such as carbon fibers and metal fibers, conductive powder such as carbon fluoride and aluminum, conductive whiskers such as zinc oxide and potassium titanate, conductive metal oxides such as titanium oxide, and conductive polymeric compounds such as polyaniline, polypyrrole, and polythiophene. It is possible to reduce the cost by using a carbon material as the conductive assistant.

In the electrode composition 2000, the mass proportion of the ion conductor 111 to the active material 201 is not particularly limited, and may be, for example, 10 mass% or more and 150 mass% or less and may be, for example, 20 mass% or more and 100 mass% or less or 30 mass% or more and 70 mass% or less. When the mass proportion of the ion conductor 111 is 10 mass% or more, in the electrode composition 2000, the ion conductivity can be improved, and an increase in the output of the battery can be realized. When the mass proportion of the ion conductor 111 is 150 mass% or less, an increase in the energy density of the battery can be realized.

The solid content concentration of the electrode composition 2000 is appropriately determined according to the particle diameter of the active material 201, the specific surface area of the active material 201, the particle diameter of the solid electrolyte 101, the specific surface area of the solid electrolyte 101, the type of the solvent 102, the type of the binder 103, and the type of the nitrogen-containing organic substance 104. The solid content concentration of the electrode composition 2000 may be 40 mass% or more and 90 mass% or less or 50 mass% or more and 80 mass% or less. Since the electrode composition 2000 has a desired viscosity by adjusting the solid content concentration to 40 mass% or more, the electrode composition 2000 can be easily applied to a substrate such as an electrode. When the electrode composition 2000 is applied to a substrate, the thickness of the wet film can be relatively increased by adjusting the solid content concentration to 90 mass% or less. Consequently, an electrode sheet with a more uniform thickness can be manufactured.

The electrode composition 2000 may include an aminohydroxy compound as the nitrogen-containing organic substance 104. As described above, the nitrogen-containing organic substance 104 can more improve the dispersibility of the solid electrolyte 101 and also can more improve the dispersibility of the active material 201 such as a lithium-containing transition metal oxide and an oxide including titanium (Ti) or niobium (Nb).

The fluidity of the electrode composition 2000 may be evaluated by evaluating the rheology using a viscosity/viscoelasticity measuring instrument.

In the electrode composition 2000, the rheology may be evaluated by the Casson yield value obtained using a viscosity/viscoelasticity measuring instrument at the speed control mode. The Casson yield value can be calculated by the above-described method. In the electrode composition 2000, the Casson yield value may be 0.05 Pa or more and 4.5 Pa or less or 2.0 Pa or more and 4.5 Pa or less. The electrode composition 2000 is easily applied to a base material by adjusting the Casson yield value to 0.05 Pa or more. A coating film with more uniform thickness can be manufactured by adjusting the Casson yield value to 4.5 Pa or less.

In the electrode composition 2000, the rheology may be evaluated by the storage modulus G' and loss tangent tan $\delta$ obtained using a viscosity/viscoelasticity measuring instrument at the distortion control mode.

The loss tangent tan $\delta$ can be measured by the above-described method. In the electrode composition 2000, the loss tangent tan $\delta$ at $\gamma$ = 0.1% may be 0.30 or more and 5.0 or less or 0.50 or more and 1.0 or less. The electrode composition 2000 is easily applied to a base material or the like by adjusting the loss tangent tan $\delta$ at $\gamma$ = 0.1% to 5.0 or less. Consequently, in the coating film obtained using the electrode composition 2000, the uniformity in the thickness can be improved. When the electrode composition 2000 is applied to a base material or the like, the electrode composition 2000 easily spreads by adjusting the loss tangent tan $\delta$ at $\gamma$ = 0.1% to 0.30 or more. As a result, the uniformity in the thickness of the electrode sheet can be more improved.

(Embodiment 3)

Embodiment 3 will now be described. Descriptions that overlap with those of embodiment 1 or 2 will be omitted as appropriate.

The solid electrolyte sheet according to embodiment 3 is manufactured using the solid electrolyte composition 1000. A manufacturing method of the solid electrolyte sheet includes applying the solid electrolyte composition 1000 to an electrode or a base material to form a coating film and removing the solvent from the coating film.

The method for manufacturing a solid electrolyte sheet will now be described with reference to Fig. 4. Fig. 4 is a flow chart showing a method for manufacturing a solid electrolyte sheet.

The method for manufacturing a solid electrolyte sheet may include a step S01, a step S02, and a step S03. The step S01 in Fig. 4 corresponds to the manufacturing method of the solid electrolyte composition 1000 described in embodiment 1. The method for manufacturing a solid electrolyte sheet includes the step S02 of applying the solid electrolyte composition 1000 in embodiment 1 and the step S03 of drying it. The step S01, the step S02, and the step S03 may be performed in this order. A large-area solid electrolyte sheet having a homogeneous and uniform thickness can be manufactured with high efficiency by the above steps using the solid electrolyte composition 1000. In this manner, the solid electrolyte sheet is obtained by applying and drying the solid electrolyte composition 1000. In other words, the solid electrolyte sheet is a solidified matter of the solid electrolyte composition 1000.

Fig. 5 is a cross-sectional view of an electrode assembly 3001 according to embodiment 3. The electrode assembly 3001 includes an electrode 4001 and a solid electrolyte sheet 301 disposed on the electrode 4001. The electrode assembly 3001 can be manufactured by including a step of applying the solid electrolyte composition 1000 to the electrode 4001 as the step S02.

Fig. 6 is a cross-sectional view of a transfer sheet 3002 according to embodiment 3. The transfer sheet 3002 includes a base material 302 and a solid electrolyte sheet 301 disposed on the base material 302. The transfer sheet 3002 can be manufactured by including a step of applying the solid electrolyte composition 1000 to the base material 302 as the step S02.

In the step S02, the solid electrolyte composition 1000 is applied to the electrode 4001 or the base material 302. Consequently, a coating film of the solid electrolyte composition 1000 is formed on the electrode 4001 or the base material 302.

The electrode 4001 is a positive electrode or a negative electrode. The positive electrode or the negative electrode includes a current collector and an active material layer disposed on the current collector. An electrode assembly 3001 consisting of a layered product of the electrode 4001 and the solid electrolyte sheet 301 is manufactured by applying the solid electrolyte composition 1000 onto the electrode 4001 and subjecting it to the step S03 described later.

Examples of the material that is used as the base material 302 include metal foil and a resin film. Examples of the material of the metal foil include copper (Cu), aluminum (Al), iron (Fe), nickel (Ni), and alloys thereof. Examples of the material of the resin film include polyethylene terephthalate (PET), polyimide (PI), and polytetrafluoroethylene (PTFE). A transfer sheet 3002 consisting of a layered product of the base material 302 and the solid electrolyte sheet 301 is manufactured by applying the solid electrolyte composition 1000 to the base material 302 and subjecting it to the step S03 described later.

Examples of the application method include a die coating method, a gravure coating method, a doctor blade method, a bar coating method, a spray coating method, and an electrostatic coating method. From the viewpoint of mass productivity, the application may be performed by a die coating method.

In the step S03, the solid electrolyte composition 1000 applied to the electrode 4001 or the base material 302 is dried. For example, the solvent 102 is removed from the coating film of the solid electrolyte composition 1000 by drying the solid electrolyte composition 1000 to manufacture a solid electrolyte sheet 301.

Examples of the drying method for removing the solvent 102 from the solid electrolyte composition 1000 include warm air/hot air drying, infrared heating drying, reduced pressure drying, vacuum drying, high frequency dielectric heating drying, and high frequency induction heating drying. These methods may be used alone or in combination of two or more thereof.

The solvent 102 may be removed from the solid electrolyte composition 1000 by reduced pressure drying. That is, the solvent 102 may be removed from the solid electrolyte composition 1000 in a pressure atmosphere lower than the atmospheric pressure. The pressure atmosphere lower than the atmospheric pressure may be, for example, -0.01 MPa or less as gauge pressure. The reduced pressure drying may be performed at 50°C or more and 250°C or less.

The solvent 102 may be removed from the solid electrolyte composition 1000 by vacuum drying. That is, the solvent 102 may be removed from the solid electrolyte composition 1000 at a temperature lower than the boiling point of the solvent 102 and in an atmosphere less than or equal to the equilibrium vapor pressure of the solvent 102.

From the viewpoint of manufacturing cost, the solvent 102 may be removed from the solid electrolyte composition 1000 by warm air/hot air drying. The preset temperature of the warm air/hot air may be 50°C or more and 250°C or less or 80°C or more and 150°C or less.

In the step S03, a part or the whole of the nitrogen-containing organic substance 104 may be removed together with the removal of the solvent 102. The ion conductivity of the solid electrolyte sheet 301 and the strength of the coating film can be improved by removing the nitrogen-containing organic substance 104.

In the step S03, the nitrogen-containing organic substance 104 may not be removed together with the removal of the solvent 102. The nitrogen-containing organic substance 104 remaining in the solid electrolyte sheet 301 plays a role like a lubricant during pressure molding in the manufacturing of a battery. Consequently, the filling properties of the ion conductor 111 can be improved.

In the step S03, the amount of the solvent 102 and the amount of the nitrogen-containing organic substance 104 that are removed from the solid electrolyte composition 1000 can be adjusted by the drying method and drying conditions described above.

The removal of the solvent 102 and the nitrogen-containing organic substance 104 can be verified by, for example, Fourier transform infrared spectroscopy (FT-IR), X-ray photoelectron spectroscopy (XPS), gas chromatography (GC), or gas chromatography-mass spectrometry (GC/MS). As long as the solid electrolyte sheet 301 after drying has ion conductivity, the solvent 102 may not be completely removed. A part of the solvent 102 may remain in the solid electrolyte sheet 301.

The ion conductivity of the solid electrolyte sheet 301 may be 0.1 mS/cm or more or 1 mS/cm or more. The output characteristics of the battery can be improved by adjusting the ion conductivity to 0.1 mS/cm or more. For the purpose of

improving the ion conductivity of the solid electrolyte sheet 301, the pressure molding may be performed using a pressing machine or the like.

(Embodiment 4)

Embodiment 4 will now be described. Descriptions that overlap with those of any of embodiments 1 to 3 will be omitted as appropriate.

The electrode sheet according to embodiment 4 is manufactured using the electrode composition 2000. The manufacturing method of the electrode sheet according to embodiment 4 includes applying the electrode composition 2000 to a current collector, a base material, or an electrode assembly to form a coating film and removing the solvent from the coating film.

The manufacturing method of the electrode sheet is the same as the manufacturing method of the solid electrolyte sheet 301 described in embodiment 3 except that the base in manufacturing of the solid electrolyte sheet 301 described in embodiment 3 above is partially different. Accordingly, the manufacturing method of the electrode sheet will be also described with reference to Fig. 4. That is, Fig. 4 corresponds also to the flow chart showing the manufacturing method of the electrode sheet.

The manufacturing method of the electrode sheet may include a step S01, a step S02, and a step S03. The step S01 in Fig. 4 corresponds to the manufacturing method of the electrode composition 2000 described in embodiment 2. The manufacturing method of the electrode sheet includes the step S02 of applying the electrode composition 2000 according to embodiment 2 and the step S03 of drying it. The step S01, the step S02, and the step S03 may be implemented in this order. A large-area electrode sheet having a homogeneous and uniform thickness can be manufactured with high efficiency by the above steps using the electrode composition 2000. In this manner, the electrode sheet is obtained by applying and drying the electrode composition 2000. In other words, the electrode sheet is a solidified matter of the electrode composition 2000.

Fig. 7 is a cross-sectional view of an electrode 4001 according to embodiment 4. The electrode 4001 includes a current collector 402 and an electrode sheet 401 disposed on the current collector 402. The electrode 4001 can be manufactured by including a step of applying the electrode composition 2000 to the current collector 402 as the step S02.

Fig. 8 is a cross-sectional view of an electrode transfer sheet 4002 according to embodiment 4. The electrode transfer sheet 4002 includes a base material 302 and an electrode sheet 401 disposed on the base material 302. As the material that is used as the base material 302, the materials exemplified in embodiment 3 can be used. The electrode transfer sheet 4002 consisting of a layered product of the base material 302 and the electrode sheet 401 can be manufactured by including a step of applying the electrode composition 2000 to the base material 302 as the step S02.

Fig. 9 is a cross-sectional view of a battery precursor 4003 according to embodiment 4. The battery precursor 4003 includes an electrode 4001, an electrolyte layer 502, and an electrode sheet 403. The electrolyte layer 502 is disposed on the electrode 4001. In addition, the electrode sheet 403 is disposed on the electrolyte layer 502. The electrode 4001 includes a current collector 402 and an electrode sheet 401 disposed on the current collector 402. The electrode assembly 3001 includes an electrode 4001 and an electrolyte layer 502 disposed on the electrode 4001. The electrolyte layer 502 includes a solid electrolyte sheet 301. A battery precursor 4003 can be manufactured by including a step of applying the electrode composition 2000 to the electrode assembly 3001 that is a layered product of the electrode 4001 and the electrolyte layer 502 as the step S02.

In the step S02, the electrode composition 2000 is applied to the current collector 402, the base material 302, or the electrode assembly 3001. Consequently, a coating film of the electrode composition 2000 is formed on the current collector 402, the base material 302, or the electrode assembly 3001.

Examples of the application method include a die coating method, a gravure coating method, a doctor blade method, a bar coating method, a spray coating method, and an electrostatic coating method. From the viewpoint of mass productivity, the application may be performed by a die coating method.

Examples of the material that is used as the current collector 402 include metal foil. Examples of the material of the metal foil include copper (Cu), aluminum (Al), iron (Fe), nickel (Ni), and alloys thereof. On the surface of such metal foil, a covering layer consisting of the above-described conductive assistant and the above-described binding agent may be provided. An electrode 4001 that is a layered product of the current collector 402 and the electrode sheet 401 is manufactured by applying the electrode composition 2000 onto the current collector 402 and subjecting it to the step S03 described later.

Subsequently, an electrolyte layer 502 is formed on the electrode 4001. The method for forming the electrolyte layer 502 is as described in embodiment 3. That is, the electrolyte layer 502 is formed on the electrode 4001 by applying the solid electrolyte composition 1000 to the electrode 4001 and subjecting it to the step S03. Consequently, an electrode assembly 3001 that is a layered product of the electrode 4001 and the electrolyte layer 502 is manufactured.

In the step S03, the applied solid electrolyte composition 1000 is dried. For example, the solvent 102 is removed from the coating film of the solid electrolyte composition 1000 by drying the solid electrolyte composition 1000 to

manufacture an electrolyte layer 502.

Subsequently, an electrode sheet 403 is formed on the electrolyte layer 502. For example, the method for forming the electrode sheet 403 is the same as the method for forming the electrode sheet 401. That is, the electrode sheet 403 is formed on the electrolyte layer 502 by applying the electrode composition 2000 to the electrolyte layer 502 and subjecting it to the step S03.

In the step S03, the applied electrode composition 2000 is dried. For example, the solvent 102 is removed from the coating film of the electrode composition 2000 by drying the electrode composition 2000 to manufacture an electrode sheet 403.

The drying for removing the solvent 102 from the electrode composition 2000 is as described in embodiment 3 above.

The battery precursor 4003 can be manufactured by, for example, combining an electrode 4001 and an electrode sheet 403 having polarity opposite to that of the electrode 4001. That is, the active material included in the electrode sheet 401 is different from the active material included in the electrode sheet 403. In detail, when the active material included in the electrode sheet 401 is a positive electrode active material, the active material included in the electrode sheet 403 is a negative electrode active material. When the active material included in the electrode sheet 401 is a negative electrode active material, the active material included in the electrode sheet 403 is a positive electrode active material.

(Embodiment 5)

Embodiment 5 will now be described. Descriptions that overlap with those of any of embodiments 1 to 4 will be omitted as appropriate.

Fig. 10 is a cross-sectional view of a battery 5000 according to embodiment 5.

The battery 5000 according to embodiment 5 includes a positive electrode 501, a negative electrode 503, and an electrolyte layer 502.

The electrolyte layer 502 is disposed between the positive electrode 501 and the negative electrode 503.

The electrolyte layer 502 may include the solid electrolyte sheet 301 according to embodiment 3, and any of the positive electrode 501 or the negative electrode 503 may include the electrode sheet 401 according to embodiment 4.

The battery 5000 may include the solid electrolyte sheet 301 having a homogeneous and uniform thickness. A homogeneous and uniform thickness of the solid electrolyte sheet 301 means that there is little variation in the thickness of the solid electrolyte sheet 301. The solid electrolyte sheet 301 with little variation in the thickness can have a thickness close to the designed value at all positions in the plane. Accordingly, even when the thickness of the electrolyte layer 502 is more decreased, a risk of contact (short circuit) between the positive electrode 501 and the negative electrode 503 is reduced, and the energy density of the battery 5000 can be improved. From the above, a high performance battery 5000 having a large area can be manufactured with high efficiency.

The battery 5000 may include the electrode sheet 401 having a homogeneous and uniform thickness. A homogeneous and uniform thickness of an electrode sheet 401 means that there is little variation in the thickness of the electrode sheet 401. The electrode sheet 401 with little variation in the thickness can have a thickness close to the designed value at all positions in the plane. Accordingly, in the operation of the battery 5000, uniform reaction can be achieved in the positive electrode and the negative electrode, and the cycle characteristics of the battery 5000 can be improved. From the above, a high performance battery 5000 having a large area can be manufactured with high efficiency.

In the battery 5000, at least one selected from the group consisting of the positive electrode 501 and the negative electrode 503 may be the electrode 4001. The battery 5000 can be manufactured by, for example, combining the electrode 4001 and an electrode having polarity opposite to that of the electrode 4001. This method is excellent from the viewpoint of decreasing the number of components. When the electrode 4001 is the positive electrode, the electrode that has polarity opposite to the polarity of the electrode 4001 is the negative electrode. When the electrode 4001 is the negative electrode, the electrode that has polarity opposite to the polarity of the electrode 4001 is the positive electrode. The positive electrode or the negative electrode includes a current collector and an active material layer disposed on the current collector. A layer including a solid electrolyte may be provided on the active material layer of the positive electrode or the active material layer of the negative electrode.

Examples of the manufacturing method of the battery 5000 include a transferring method and a coating method. The transferring method is a method for manufacturing the batter 5000 using the transfer sheet 3002 and the electrode transfer sheet 4002. That is, the transferring method is a method for manufacturing the battery 5000 by producing each member of the battery 5000 by separate step and combining the members. The coating method is a manufacturing method of the battery 5000 including, for example, a method of applying the solid electrolyte composition 1000 to the positive electrode or the negative electrode and drying it to directly form an electrolyte layer on the positive electrode or the negative electrode.

An example of the manufacturing method of the battery 5000 by a transferring method will be described below.

In the battery 5000, the electrolyte layer 502 may be manufactured using the transfer sheet 3002. In this case,

first, the solid electrolyte sheet 301 is transferred from the transfer sheet 3002 to a first electrode. Subsequently, the first electrode, the second electrode, and the electrolyte layer 502 are combined such that the electrolyte layer 502 including the transferred solid electrolyte sheet 301 is disposed between the first electrode and the second electrode to manufacture a battery 5000. That is, the manufacturing method of the battery 5000 includes applying the solid electrolyte composition 1000 to a base material 302 to form a coating film and removing the solvent 102 from this coating film to form an electrolyte layer 502. In addition, the manufacturing method of the battery 5000 includes combining the first electrode, the second electrode, and the electrolyte layer 502 such that the electrolyte layer 502 is located between the first electrode and the second electrode. Consequently, a battery 5000 having a first electrode, an electrolyte layer, and a second electrode in this order is obtained. The electrolyte layer 502 includes the solid electrolyte sheet 301. That is, the electrolyte layer 502 includes a solidified matter of the solid electrolyte composition 1000. In order to transfer the solid electrolyte sheet 301 from the transfer sheet 3002 to the first electrode, the transfer sheet 3002 is disposed on the first electrode such that the solid electrolyte sheet 301 and the first electrode are in contact with each other, and then the base material 302 is removed. Consequently, the solid electrolyte sheet 301 is transferred to the first electrode. Subsequently, the second electrode is disposed on the solid electrolyte sheet 301 such that the solid electrolyte sheet 301 and the second electrode are in contact with each other. Consequently, a battery 5000 is manufactured. When the solid electrolyte sheet 301 and the second electrode are combined, the electrode transfer sheet 4002 including the second electrode may be used. When the first electrode is the positive electrode, the second electrode is the negative electrode. When the first electrode is the negative electrode, the second electrode is the positive electrode. The positive electrode and the negative electrode each include a current collector and an active material layer disposed on the current collector. A layer including a solid electrolyte may be disposed on the active material layer of the positive electrode or the active material layer of the negative electrode.

The battery 5000 may be manufactured using the electrode transfer sheet 4002 according to embodiment 4. In this case, first, the electrode sheet 401 is transferred from the electrode transfer sheet 4002 to the electrolyte layer 502. Subsequently, a current collector 402 is combined to the transferred electrode sheet 401. A layered product of the electrode sheet 401 and the current collector 402 is defined as a first electrode. Then, a first electrode and a second electrode that has polarity opposite to that of the first electrode are combined such that the electrolyte layer 502 is located between the first electrode and the second electrode to manufacture a battery 5000. That is, the manufacturing method of the battery 5000 includes applying the electrode composition 2000 to a base material 302 to form a coating film and removing the solvent 102 from this coating film to form an electrode sheet 401 for the first electrode. In addition, the manufacturing method of the battery 5000 includes combining the first electrode, the second electrode, and the electrolyte layer 502 such that the electrolyte layer 502 is located between the first electrode and the second electrode. Consequently, a battery 5000 including the first electrode, the electrolyte layer, and the second electrode in this order is obtained. As described above, the first electrode includes the electrode sheet 401. That is, the first electrode includes a solidified matter of the electrode composition 2000. The second electrode may include a solidified matter of the electrode composition 2000. In order to transfer the electrode sheet 401 from the electrode transfer sheet 4002 to the electrolyte layer 502, the electrode transfer sheet 4002 is disposed on the electrolyte layer 502 such that the electrode sheet 401 and the electrolyte layer 502 are in contact with each other, and the base material 302 is then removed. Consequently, the electrode sheet 401 is transferred to the electrolyte layer 502. Subsequently, the current collector 402 is combined to the transferred electrode sheet 401. The second electrode is then disposed on the electrolyte layer 502 such that the electrolyte layer 502 and the second electrode are in contact with each other. Consequently, a battery 5000 is manufactured. When the first electrode is the positive electrode, the second electrode is the negative electrode. When the first electrode is the negative electrode, the second electrode is the positive electrode. The positive electrode and the negative electrode each include a current collector and an active material layer disposed on the current collector.

The battery 5000 may be manufactured using the transfer sheet 3002 and the electrode transfer sheet 4002. In this case, first, the electrode sheet 401 is transferred from the electrode transfer sheet 4002 to the current collector 402. Consequently, an electrode 4001 that is a layered product of the current collector 402 and the electrode sheet 401 is obtained. The electrode 4001 is, for example, the first electrode. Subsequently, the solid electrolyte sheet 301 is transferred from the transfer sheet 3002 to the first electrode. In detail, the solid electrolyte sheet 301 is transferred to the electrode sheet 401. Consequently, an electrode assembly 3001 that is a layered product of the electrode 4001 and the solid electrolyte sheet 301 is obtained. Subsequently, the electrode assembly 3001 and the second electrode are combined to manufacture a battery 5000. When the electrode assembly 3001 and the second electrode are combined, an electrode transfer sheet 4002 including the second electrode may be used. That is, the manufacturing method of the battery 5000 includes applying the electrode composition 2000 to a first base material to form a first coating film and removing the solvent 102 from the first coating film to form a first electrode. In addition, the manufacturing method of the battery 5000 includes applying the solid electrolyte composition 1000 to a second base material to form a second coating film and removing the solvent 102 from the second coating film to form an electrolyte layer 502. Furthermore, the manufacturing method of the battery 5000 includes combining the first electrode, the second electrode, and the electrolyte layer 502 such that the electrolyte layer 502 is located between the first electrode and the second electrode. Consequently, a battery 5000 including the first electrode, the electrolyte layer, and the second electrode in this order is obtained. At least

one selected from the group consisting of the first electrode and the second electrode includes the electrode sheet 401. That is, at least one selected from the group consisting of the first electrode and the second electrode includes a solidified matter of the electrode composition 2000. The electrolyte layer 502 includes the solid electrolyte sheet 301. That is, the electrolyte layer includes a solidified matter of the solid electrolyte composition 1000.

When the transfer sheet 3002 is used in the manufacturing method of the battery 5000, the solid electrolyte sheet 301 is produced by a step different from the step of producing the positive electrode and the negative electrode. Consequently, in the manufacturing of the battery 5000, there is no need to consider the effect of the solvent that is used in production of the solid electrolyte sheet 301 on the positive electrode and the negative electrode. Accordingly, various solvents can be used in production of the solid electrolyte sheet 301.

When the electrode transfer sheet 4002 is used in the manufacturing method of the battery 5000, the electrode sheet 401 and the electrolyte layer 502 are produced in separate steps. Consequently, in the manufacturing of the battery 5000, there is no need to consider the effect of the solvent that is used in production of the electrode sheet 401 on the electrolyte layer 502. Accordingly, various solvents can be used in production of the electrode sheet 401.

The manufacturing method of the battery 5000 by a coating method will be described below.

The manufacturing method of the battery 5000 includes, for example, applying the solid electrolyte composition 1000 to a first electrode to form a coating film and removing the solvent 102 from this coating film to form an electrode assembly 3001 including a layered product of the first electrode and the electrolyte layer 502. In addition, the manufacturing method of the battery 5000 includes combining the first electrode, the second electrode, and the electrolyte layer 502 such that the electrolyte layer 502 is located between the first electrode and the second electrode. Consequently, a battery 500 including the first electrode, the electrolyte layer, and the second electrode in this order is obtained. The electrolyte layer 502 includes a solid electrolyte sheet 301. For example, the battery 5000 is obtained by disposing the second electrode on the solid electrolyte sheet 301. Examples of the method for disposing the second electrode on the solid electrolyte sheet 301 include a method of applying the electrode composition 2000 to the solid electrolyte sheet 301 and a method of transferring the electrode sheet or the second electrode to the solid electrolyte sheet 301. When the first electrode is the positive electrode, the second electrode is the negative electrode. When the first electrode is the negative electrode, the second electrode is the positive electrode. The first electrode and the second electrode each include, for example, a current collector and an active material layer disposed on the current collector. A layer including the solid electrolyte may be provided on the active material layer of the first electrode or the active material layer of the second electrode.

The manufacturing method of the battery 5000 includes, for example, applying the electrode composition 2000 to the current collector 402 to form a coating film and removing the solvent 102 from the coating film to form a first electrode. In addition, the manufacturing method of the battery 5000 includes combining the first electrode, the second electrode, and the electrolyte layer 502 such that the electrolyte layer 502 is located between the first electrode and the second electrode. Consequently, a battery 5000 including the first electrode, the electrolyte layer, and the second electrode in this order is obtained. The electrolyte layer 502 includes the solid electrolyte sheet 301. For example, the battery 5000 is obtained by disposing the second electrode on the solid electrolyte sheet 301. Examples of the method for disposing the second electrode on the solid electrolyte sheet 301 include a method of applying the electrode composition 2000 to the solid electrolyte sheet 301 and a method of transferring the electrode sheet or the second electrode to the solid electrolyte sheet 301. When the first electrode is the positive electrode, the second electrode is the negative electrode. When the first electrode is the negative electrode, the second electrode is the positive electrode. The first electrode and the second electrode each include, for example, a current collector and an active material layer disposed on the current collector. A layer including a solid electrolyte may be provided on the active material layer of the first electrode or the active material layer of the second electrode.

The manufacturing method of the battery 5000 includes, for example, applying the electrode composition 2000 to the electrode assembly 3001 to form a coating film and removing the solvent from this coating film to form an electrode sheet 403 for the second electrode. The battery 5000 is obtained by producing a second electrode by combining a current collector 402 with the electrode sheet 403. Consequently, a battery 5000 including the first electrode, the electrolyte layer, and the second electrode in this order is obtained. The electrode assembly 3001 includes the electrode 4001 and the electrolyte layer 502. The electrode 4001 is, for example, the first electrode. The electrolyte layer 502 includes the solid electrolyte sheet 301.

The manufacturing method of the battery 5000 includes, for example, applying the electrode composition 2000 to the current collector 402 to form a first coating film and removing the solvent from the first coating film to form a first electrode. In addition, the manufacturing method of the battery 5000 includes applying the solid electrolyte composition 1000 to the first electrode to form a second coating film and removing the solvent from the second coating film to form an electrolyte layer 502. Furthermore, the manufacturing method of the battery 5000 includes combining the first electrode, the second electrode, and the electrolyte layer 502 such that the electrolyte layer 502 is located between the first electrode and the second electrode. In detail, the battery 5000 is obtained by applying the electrode composition 2000 for a second electrode to the electrolyte layer 502 including a solid electrolyte sheet 301 to form a third coating film and removing the

solvent from the third coating film to form a second electrode including the electrode sheet. Consequently, a battery 5000 including the first electrode, the electrolyte layer, and the second electrode in this order is obtained.

These coating methods are excellent compared to a transferring method of transferring a solid electrolyte sheet 301 formed on a base material 302 and an electrode sheet 401 formed on a base material 302 from the viewpoint of decreasing the number of components. In other words, a coating method is excellent in the mass productivity compared to a transferring method.

The battery 5000 may be produced by producing a layered product of a positive electrode, an electrolyte layer, and a negative electrode disposed in this order by the above-described method and subjecting the layered product to pressure molding using a pressing machine at ordinary temperature or high temperature. The filling properties of the active material 201 and the ion conductor 111 are improved by the pressure molding, and high output of the battery 5000 can be realized.

The battery 5000 may be manufactured by the following method. A negative electrode in which an electrode sheet (first negative electrode sheet) is laminated on a current collector, a first electrolyte layer, and a first positive electrode are disposed in this order. On the surface of the current collector opposite to the surface on which the first negative electrode sheet is laminated, an electrode sheet (second negative electrode sheet), a second electrolyte layer, and a second positive electrode are disposed in this order. Consequently, a layered product of the first positive electrode, the first electrolyte layer, the first negative electrode sheet, the current collector, the second negative electrode sheet, the second electrolyte layer, and the second positive electrode disposed in this order is obtained. This layered product may be subjected to pressure molding using a pressing machine at ordinary temperature or high temperature to manufacture a battery 5000. According to such a method, it is possible to produce a layered product of two batteries 5000 while suppressing warping of the batteries, and a high-output battery 5000 can be manufactured more efficiently. In the production of the layered product, the order of laminating members is not particularly limited. For example, a layered product of two batteries 5000 may be produced by disposing a first negative electrode sheet and a second negative electrode sheet on a current collector and then disposing a first electrolyte layer, a second electrolyte layer, a first positive electrode, and a second positive electrode in this order.

The electrolyte layer 502 is a layer including an electrolyte material. Examples of the electrolyte material include a solid electrolyte. That is, the electrolyte layer 502 may be a solid electrolyte layer. As the solid electrolyte included in the electrolyte layer 502, the solid electrolytes exemplified as the solid electrolyte 101 in embodiment 1 may be used. As the solid electrolyte, for example, a sulfide solid electrolyte, an oxide solid electrolyte, a halide solid electrolyte, a polymeric solid electrolyte, and a complex hydride solid electrolyte can be used.

The electrolyte layer 502 may include a solid electrolyte as the main component. The electrolyte layer 502 may include the solid electrolyte in a mass proportion of 70% or more (70 mass% or more) relative to the entire electrolyte layer 502.

According to the above constitution, the output characteristics of the battery 5000 can be more improved.

The electrolyte layer 502 includes a solid electrolyte as the main component and may further include inevitable impurities. Examples of the inevitable impurities include starting materials used when the solid electrolyte is synthesized, by products, and decomposition products.

The electrolyte layer 502 may include the solid electrolyte in a mass proportion of 100% with respect to the entire electrolyte layer 502, excluding inevitably mixed impurities.

According to the above constitution, the output characteristics of the battery 5000 can be more improved.

The electrolyte layer 502 may include two or more of the materials exemplified as the solid electrolyte. For example, the electrolyte layer 502 may include a halide solid electrolyte and a sulfide solid electrolyte.

The electrolyte layer 502 may be a layer produced by laminating a layer of the solid electrolyte sheet 301 and a layer including a solid electrolyte having a composition different from that of the solid electrolyte 101 included in the solid electrolyte sheet 301. The electrolyte layer 502 may be a monolayer consisting of the solid electrolyte sheet 301 or two or more layers consisting of other solid electrolytes.

The electrolyte layer 502 may include a layer disposed between a layer of the solid electrolyte sheet 301 and the negative electrode 503 and including a solid electrolyte with a lower reduction potential than that of the solid electrolyte 101 included in the solid electrolyte sheet 301. According to the above constitution, since it is possible to suppress reductive decomposition of the solid electrolyte 101 which may occur by contact between the solid electrolyte 101 and the negative electrode active material, the output characteristics of the battery 5000 can be improved. Examples of the solid electrolyte with a lower reduction potential than that of the solid electrolyte 101 include a sulfide solid electrolyte.

The thickness of the electrolyte layer 502 may be 1 μm or more and 300 μm or less. When the electrolyte layer 502 has a thickness of 1 μm or more, a risk of short circuit between the positive electrode 501 and the negative electrode 503 is reduced. When the electrolyte layer 502 has a thickness of 300 μm or less, the battery 5000 can operate easily at high output. That is, the safety of the battery 5000 can be sufficiently ensured, and also the battery 5000 can operate at high output, by appropriately adjusting the thickness of the electrolyte layer 502.

The thickness of the solid electrolyte sheet 301 included in the electrolyte layer 502 may be 1 μm or more and 30

μm or less, 1 μm or more and 15 μm or less, or 1 μm or more and 7.5 μm or less. When the solid electrolyte sheet 301 has a thickness of 1 μm or more, a risk of short circuit between the positive electrode 501 and the negative electrode 503 is reduced. When the solid electrolyte sheet 301 has a thickness of 30 μm or less, the internal resistance of the battery 5000 is reduced, and thereby high-output operation is possible, and the energy density of the battery 5000 can be improved. The thickness of the solid electrolyte sheet 301 is defined by, for example, the average of thicknesses at arbitrary multiple points (e.g., 3 points) in a cross section parallel to the thickness direction.

The shape of the solid electrolyte included in the battery 5000 is not particularly limited. The shape of the solid electrolyte may be, for example, a needle, spherical, or oval spherical shape. The solid electrolyte may have a particulate shape.

At least one selected from the group consisting of the positive electrode 501 and the negative electrode 503 may include an electrolyte material, for example, may include a solid electrolyte. As the solid electrolyte, the solid electrolytes exemplified as the material constituting the electrolyte layer 502 can be used. According to the above constitution, the ion conductivity (e.g., lithium ion conductivity) in the inside of the positive electrode 501 or the negative electrode 503 is improved to make it possible to operate the battery 5000 at high output.

In the positive electrode 501 or the negative electrode 503, a sulfide solid electrolyte may be used as the solid electrolyte, and the above-described halide solid electrolyte may be used as the covering material covering the active material.

The positive electrode 501 includes, for example, a material that has a property of occluding and releasing metal ions (e.g., lithium ions), as the positive electrode active material. As the positive electrode active material, the materials exemplified in embodiment 2 can be used.

When the shape of the solid electrolyte included in the positive electrode 501 is particulate (e.g., spherical), the median diameter of the solid electrolyte may be 100 μm or less. When the solid electrolyte has a median diameter of 100 μm or less, the positive electrode active material and the solid electrolyte can be well dispersed in the positive electrode 501. Consequently, the charge and discharge characteristics of the battery 5000 are improved.

The median diameter of the solid electrolyte included in the positive electrode 501 may be smaller than that of the positive electrode active material. Consequently, the solid electrolyte and the positive electrode active material can be well dispersed.

The median diameter of the positive electrode active material may be 0.1 μm or more and 100 μm or less. When the positive electrode active material has a median diameter of 0.1 μm or more, the positive electrode active material and the solid electrolyte can be well dispersed in the positive electrode 501. As a result, the charge and discharge characteristics of the battery 5000 are improved. When the positive electrode active material has a median diameter of 100 μm or less, the lithium diffusion speed in the positive electrode active material is improved. Consequently, the battery 5000 can operate at high output.

In the positive electrode 501, the volume ratio of the positive electrode active material and the solid electrolyte, "v1 : (100 - v1)", may satisfy $30 \leq v1 \leq 95$, wherein v1 indicates the volume ratio of the positive electrode active material when the total volume of the positive electrode active material and solid electrolyte included in the positive electrode 501 is defined as 100. When $30 \leq v1$ is satisfied, a sufficient energy density of the battery 5000 is easily ensured. When $v1 \leq 95$ is satisfied, the battery 5000 can operate more easily at high output.

The thickness of the positive electrode 501 may be 10 μm or more and 500 μm or less. When the positive electrode 501 has a thickness of 10 μm or more, a sufficient energy density of the battery 5000 can be easily ensured. When the positive electrode 501 has a thickness of 500 μm or less, the battery 5000 can operate more easily at high output.

When the positive electrode 501 includes the electrode sheet 401, the thickness of the electrode sheet 401 may be 10 μm or more and 500 μm or less or 20 μm or more and 200 μm or less. When the electrode sheet 401 has a thickness of 10 μm or more, the energy density of the battery 5000 can be improved. When the electrode sheet 401 has a thickness of 500 μm or less, the internal resistance of the battery 5000 is reduced to make high-output operation possible. The thickness of the electrode sheet 401 is defined by, for example, the average of thicknesses at arbitrary multiple points (e.g., 3 points) in a cross section parallel to the thickness direction.

The negative electrode 503 includes, for example, a material that has a property of occluding and releasing metal ions (e.g., lithium ions), as the negative electrode active material. As the negative electrode active material, the materials exemplified in embodiment 2 can be used.

The median diameter of the negative electrode active material may be 0.1 μm or more and 100 μm or less. When the negative electrode active material has a median diameter of 0.1 μm or more, the negative electrode active material and the solid electrolyte can be well dispersed in the negative electrode 503. Consequently, the charge and discharge characteristics of the battery 5000 are improved. When the negative electrode active material has a median diameter of 100 μm or less, the lithium diffusion speed in the negative electrode active material is improved. Consequently, the battery 5000 can operate at high output.

The median diameter of the negative electrode active material may be larger than that of the solid electrolyte. Consequently, the solid electrolyte and the negative electrode active material can be well dispersed.

The volume ratio of the negative electrode active material and the solid electrolyte included in the negative electrode 503, "v2 : (100 - v2)", may satisfy $30 \leq v2 \leq 95$, wherein v2 indicates the volume ratio of the negative electrode active material when the total volume of the negative electrode active material and solid electrolyte included in the negative electrode 503 is defined as 100. When $30 \leq v2$ is satisfied, a sufficient energy density of the battery 5000 is easily ensured. When $v2 \leq 95$ is satisfied, the battery 5000 can operate more easily at high output.

The thickness of the negative electrode 503 may be 10 μm or more and 500 μm or less. When the negative electrode 503 has a thickness of 10 μm or more, a sufficient energy density of the battery 5000 can be easily ensured. When the negative electrode 503 has a thickness of 500 μm or less, the battery 5000 can operate more easily at high output.

When the negative electrode 503 includes the electrode sheet 401, the thickness of the electrode sheet 401 may be 10 μm or more and 500 μm or less or 20 μm or more and 200 μm or less. When the electrode sheet 401 has a thickness of 10 μm or more, the energy density of the battery 5000 can be improved. When the electrode sheet 401 has a thickness of 500 μm or less, the internal resistance of the battery 5000 is reduced to make high-output operation possible. The thickness of the electrode sheet 401 is defined by, for example, the average of thicknesses at arbitrary multiple points (e.g., 3 points) in a cross section parallel to the thickness direction.

The positive electrode active material and the negative electrode active material may be covered with a covering material in order to decrease the interface resistance between each of the active materials and the solid electrolyte. As the covering material, a material with low electron conductivity can be used. As the covering material, the oxide materials, oxide solid electrolytes, halide solid electrolytes, and sulfide solid electrolytes exemplified in embodiment 2 and so on can be used.

At least one selected from the group consisting of the positive electrode 501, the electrolyte layer 502, and the negative electrode 503 may include a binding agent for the purpose of improving the adhesiveness between individual particles. As the binding agent, the materials exemplified in embodiment 1 can be used. When the binding agent includes an elastomer, each layer of the positive electrode 501, the electrolyte layer 502, and the negative electrode 503 included in the battery 5000 tends to have excellent flexibility and elasticity. In this case, the durability of the battery 5000 tends to be improved.

At least one selected from the group consisting of the positive electrode 501, the electrolyte layer 502, and the negative electrode 503 may include a nonaqueous electrolyte solution, a gel electrolyte, or an ionic liquid for the purpose of facilitating the exchange of lithium ions and improving the output characteristics of the battery 5000.

The nonaqueous electrolyte solution includes a nonaqueous solvent and a lithium salt dissolved in the nonaqueous solvent. As the nonaqueous solvent, a cyclic carbonic acid ester solvent, a chain carbonic acid ester solvent, a cyclic ether solvent, a chain ether solvent, a cyclic ester solvent, a chain ester solvent, a fluorine solvent, or the like can be used. Examples of the cyclic carbonic acid ester solvent include ethylene carbonate, propylene carbonate, and butylene carbonate. Examples of the chain carbonic acid ester solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1,2-dimethoxyethane and 1,2-diethoxyethane. Examples of the cyclic ester solvent include γ-butyrolactone. Examples of the chain ester solvent include methyl acetate. Examples of the fluorine solvent include fluoroethylene carbonate, methyl fluoropropionate, fluorobenzene, fluoroethyl methyl carbonate, and fluorodimethylene carbonate. As the nonaqueous solvent, one nonaqueous solvent selected from these solvents may be used alone, or a mixture of two or more nonaqueous solvents selected from these solvents may be used.

The nonaqueous electrolyte solution may include at least one fluorine solvent selected from the group consisting of fluoroethylene carbonate, methyl fluoropropionate, fluorobenzene, fluoroethyl methyl carbonate, and fluorodimethylene carbonate.

Examples of the lithium salt include $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, and $LiC(SO_2CF_3)_3$. As the lithium salt, one lithium salt selected from these lithium salts may be used alone, or a mixture of two or more lithium salts selected from these lithium salts may be used. The concentration of the lithium salt in the nonaqueous electrolyte solution may be 0.5 mol/L or more and 2 mol/L or less.

As the gel electrolyte, a material in which a polymer material is impregnated with a nonaqueous electrolyte solution can be used. Examples of the polymer material include polyethylene oxide, polyacrylonitrile, polyvinylidene fluoride, polymethyl methacrylate, and a polymer having an ethylene oxide bond.

The cation constituting the ionic liquid may be an aliphatic chain quaternary cation, such as tetraalkyl ammonium and tetraalkyl phosphonium; an alicyclic ammonium, such as pyrrolidiniums, morpholiniums, imidazoliniums, tetrahydropyrimidiniums, piperaziniums, and piperidiniums; or a nitrogen-containing heterocyclic aromatic cation, such as pyridiniums and imidazoliums. The anion constituting the ionic liquid may be $PF_6^-$, $BF_4^-$, $SbF_6^-$, $AsF_6^-$, $SO_3CF_3^-$, $N(SO_2F)_2^-$, $N(SO_2CF_3)_2^-$, $N(SO_2C_2F_5)_2^-$, $N(SO_2CF_3)(SO_2C_4F_9)^-$, $C(SO_2CF_3)_3^-$, or the like. The ionic liquid may contain a lithium salt.

At least one selected from the group consisting of the positive electrode 501 and the negative electrode 503 may include a conductive assistant for the purpose of improving the electron conductivity. As the conductive assistant, the

materials exemplified in embodiment 2 can be used.

Examples of the shape of the battery 5000 include a coin type, a cylinder type, a square type, a sheet type, a button type, a flat type, and a laminate type.

EXAMPLES

The details of the present disclosure will now be described using Examples and Comparative Examples, but the solid electrolyte composition, electrode composition, solid electrolyte sheet, electrode sheet, and battery of the present disclosure are not limited to the following Examples.

<Example 1-1>

[Solvent]

In all steps below, as the solvent, a commercially available dehydrated solvent or a solvent dehydrated by nitrogen bubbling was used. The water content in the solvent was 10 mass ppm or less.

[Production of binder solution]

In all steps below, a binder solution was prepared by adding a solvent to a binder and dissolving or dispersing the binder in the solvent. The concentration of the binder in the binder solution was adjusted to 5 mass% or more and 10 mass% or less. Subsequently, the binder solution was dehydrated by nitrogen bubbling until the water content of the binder solution reached 10 mass ppm or less.

In Example 1-1, tetralin was used as the solvent of the binder solution. As the binder, solution polymerized styrene-butadiene rubber (modified SBR, manufactured by Asahi Kasei Corporation, ASAPRENE Y031) was used. The molar fraction of the repeating unit derived from styrene in the modified SBR was 0.16. The modified SBR had a weight average molecular weight $M_W$ of 380,000. "ASAPRENE" is a registered trademark of Asahi Kasei Corporation.

[Production of nitrogen-containing organic substance solution]

In all steps below, when the nitrogen-containing organic substance was a liquid, the nitrogen-containing organic substance was dehydrated by adding a molecular sieve 4A 1/16. When the nitrogen-containing organic substance was a solid, the nitrogen-containing organic substance was dehydrated by heating at 100°C for 1 hour in a vacuum atmosphere. A solvent dehydrated in advance was added to the dehydrated nitrogen-containing organic substance to prepare a solution containing the nitrogen-containing organic substance. The concentration of the nitrogen-containing organic substance in the solution containing the nitrogen-containing organic substance was adjusted to 5 mass%.

In Example 1-1, tetralin was used as the solvent of the dispersant solution. 1-Hydroxyethyl-2-alkenylimidazoline (manufactured by BYK, DISPERBYK-109, an aminohydroxy compound containing an alkenyl group having 17 carbon atoms) was used as the nitrogen-containing organic substance.

[Production of solid electrolyte composition]

$Li_2S$-$P_2S_5$-based glass ceramic (hereinafter, referred to as "LPS", about 12 g) was weighed in an argon glove box with a dew point of -60°C or less, and tetralin, a solution containing a nitrogen-containing organic substance, and a binder solution were added thereto. These materials were mixed in a mass ratio of LPS : binder : nitrogen-containing organic substance = 100 : 5 : 0.30, and the solid content concentration of the solid electrolyte composition was adjusted to 45 mass%. Subsequently, the resulting mixture solution was subjected to dispersing and kneading by shearing using a homogenizer (manufactured by AS ONE Corporation, HG-200) and a generator (manufactured by AS ONE Corporation, K-20S). Consequently, a solid electrolyte composition of Example 1-1 was obtained.

In the solid electrolyte composition of Example 1-1, the binder was modified SBR. The nitrogen-containing organic substance was 1-hydroxyethyl-2-alkenylimidazoline. The mass proportion of the nitrogen-containing organic substance to the solid electrolyte was 0.30 mass%.

<Example 1-2>

A solid electrolyte composition of Example 1-2 was produced by the same method as in Example 1-1 except that the LPS, the binder, and the nitrogen-containing organic substance were mixed in a mass ratio of 100 : 5 : 0.37. In the solid electrolyte composition of Example 1-2, the binder was modified SBR. The nitrogen-containing organic substance was 1-hydroxyethyl-2-alkenylimidazoline. The mass proportion of the nitrogen-containing organic substance to the solid electrolyte was 0.37 mass%.

<Example 1-3>

A solid electrolyte composition of Example 1-3 was produced by the same method as in Example 1-1 except that when the solid electrolyte composition was produced, the LPS, the binder, and the nitrogen-containing organic substance were mixed in a mass ratio of 100 : 5 : 1.0. In the solid electrolyte composition of Example 1-3, the binder was modified SBR. The nitrogen-containing organic substance was 1-hydroxyethyl-2-alkenylimidazoline. The mass proportion of the nitrogen-containing organic substance to the solid electrolyte was 1.0 mass%.

<Comparative Example 1-1>

A solid electrolyte composition of Comparative Example 1-1 was produced by the same method as in Example 1-1 except that the LPS, the binder, and the nitrogen-containing organic substance were mixed in a mass ratio of 100 : 5 : 0.25. In the solid electrolyte composition of Comparative Example 1-1, the binder was modified SBR. The nitrogen-containing organic substance was 1-hydroxyethyl-2-alkenylimidazoline. The mass proportion of the nitrogen-containing organic substance to the solid electrolyte was 0.25 mass%.

<Comparative Example 1-2>

A solid electrolyte composition of Comparative Example 1-2 was produced by the same method as in Example 1-1 except that acrylic resin (PMMA, weight average molecular weight: 15,000, manufactured by ALDRICH) was used as the binder and that the LPS, the binder, and the nitrogen-containing organic substance were mixed in a mass ratio of 100 : 5 : 0.25. In the solid electrolyte composition of Comparative Example 1-2, the binder was PMMA. The nitrogen-containing organic substance was 1-hydroxyethyl-2-alkenylimidazoline. The mass proportion of the nitrogen-containing organic substance to the solid electrolyte was 0.25 mass%.

<Comparative Example 1-3>

A solid electrolyte composition of Comparative Example 1-3 was produced by the same method as in Example 1-1 except that acrylic resin (PMMA) was used as the binder and that the LPS, the binder, and the nitrogen-containing organic substance were mixed in a mass ratio of 100 : 5 : 1.0. In the solid electrolyte composition of Comparative Example 1-3, the binder was PMMA. The nitrogen-containing organic substance was 1-hydroxyethyl-2-alkenylimidazoline. The mass proportion of the nitrogen-containing organic substance to the solid electrolyte was 1.0 mass%.

<Comparative Example 1-4>

A solid electrolyte composition of Comparative Example 1-4 was produced by the same method as in Example 1-1 except that no binder was used and that the LPS and the nitrogen-containing organic substance were mixed in a mass ratio of 100 : 1.0. In the solid electrolyte composition of Comparative Example 1-4, no binder was used. The nitrogen-containing organic substance was 1-hydroxyethyl-2-alkenylimidazoline. The mass proportion of the nitrogen-containing organic substance to the solid electrolyte was 1.0 mass%.

<Evaluation of solid electrolyte composition>

The viscosity ratio of each of the solid electrolyte compositions of Examples 1-1 to 1-3 and Comparative Examples 1-1 to 1-4 was measured by the following method and conditions. In addition, the dispersion stability, viscosity stability, and rheology of these solid electrolyte compositions were evaluated.

[Calculation of viscosity ratio]

The viscosity of each of the solid electrolyte compositions was measured in a dry room with a dew point of -40°C or less. In the measurement, a viscosity/viscoelasticity measuring instrument (manufactured by Thermo Fisher Scientific Inc., HAAKE MARS40) and a cone plate with a diameter of 35 mm and an angle of 2° (manufactured by Thermo Fisher Scientific Inc., C35/2 Ti) were used. The viscosity of the solid electrolyte composition was measured under conditions of 25°C and the speed control mode (CR) at shear rates from 0.1 $sec^{-1}$ to 1000 $sec^{-1}$, and the viscosity ratio, $\eta1/\eta2$, was determined by the above described method.

[Evaluation of dispersion stability]

The dispersion stability of the solid electrolyte composition was evaluated in an argon glove box with a dew point of -60°C or less. Twenty milliliter of the solid electrolyte composition was weighed in a 30-mLglass sample bottle and was left to stand for 4 days. Subsequently, whether a hard sediment (hard cake) was present or not on the bottom of the sample tube was visually verified using a dispensing spoon. In Tables 1 to 5, "Good" means that the dispersion stability was good, not causing a hard sediment. "Poor" means that the dispersion stability was poor, causing a hard sediment.

[Evaluation of fluidity]

The fluidity of each of the solid electrolyte compositions was evaluated in a dry room with a dew point of -40°C or less. In the measurement, a viscosity/viscoelasticity measuring instrument (manufactured by Thermo Fisher Scientific Inc., HAAKE MARS40) and a cone plate with a diameter of 35 mm and an angle of 2° (manufactured by Thermo Fisher Scientific Inc., C35/2 Ti) were used. The viscosity of the solid electrolyte composition was measured under conditions of 25°C and the speed control mode (CR) at shear rates from 0.1 $sec^{-1}$ to 1000 $sec^{-1}$, and a flow curve was generated by plotting the values of the shear rate on the horizontal axis and plotting the values of the viscosity on the vertical axis. The behavior of the solid electrolyte composition was then judged as good or poor using the generated flow curve based on the above described criteria. In Tables 1 to 5, "Good" means that the fluidity was good. "Poor" means that the fluidity was poor.

[Measurement of rheology]

The rheology of each of the solid electrolyte compositions was measured in a dry room with a dew point of -40°C or less. In the measurement, a viscosity/viscoelasticity measuring instrument (manufactured by Thermo Fisher Scientific Inc., HAAKE MARS40) and a cone plate with a diameter of 35 mm and an angle of 2° (manufactured by Thermo Fisher Scientific Inc., C35/2 Ti) were used. The shear stress of the solid electrolyte composition was measured under conditions of 25°C and the speed control mode (CR) at shear rates from 0.1 $sec^{-1}$ to 1000 $sec^{-1}$, and the Casson yield value was determined by the above method. A shear was applied to the solid electrolyte composition from 0.01% to 10000% strain ($\gamma$) under conditions of 25°C, the distortion control mode (CD), and a frequency of 1 Hz. Subsequently, the storage modulus G' and the loss tangent tan $\delta$ when the $\gamma$ was returned from 10000% to 0.01% were measured. On this occasion, the storage modulus G' value and the loss tangent tan $\delta$ value at $\gamma$ = 130% and the storage modulus G' value and the loss tangent tan $\delta$ value at $\gamma$ = 0.1% were obtained.

The results of the above measurements are shown in Table 1. In Table 1, the types A and B of the binders and the type a of the nitrogen-containing organic substance are as follows:

A: modified styrene-butadiene rubber (modified SBR, ASAPRENE Y031);
B: acrylic resin (PMMA); and
a: 1-hydroxyethyl-2-alkenylimidazoline (manufactured by BYK, DISPERBYK-109).

[Table 1]

| | Solid electrolyte composition | | | Viscosity ratio ($\eta_1/\eta_2$) | Dispersion stability (after 4 days) | Fluidity | Casson yield value [Pa] | Dynamic viscoelasticity at $\gamma$ = 130% | | Dynamic viscoelasticity at $\gamma$ = 0.1% | |
|---|---|---|---|---|---|---|---|---|---|---|---|
| | Type of binder | Type of nitrogen-containing organic substance | Mass proportion of nitrogen-containing organic substance to solid electrolyte [%] | | | | | Storage modulus G' [Pa] | Loss tangent Tan $\delta$ | Storage modulus G' [Pa] | Loss tangent Tan $\delta$ |
| Ex. 1-1 | A | a | 0.30 | 3.2 | Good | Good | 0.19 | 0.11 | 21 | 13 | 1.1 |
| Ex. 1-2 | A | a | 0.37 | 4.1 | Good | Good | 0.31 | 0.14 | 18 | 51 | 0.48 |
| Ex. 1-3 | A | a | 1.0 | 5.0 | Good | Good | 0.40 | 0.16 | 16 | 85 | 0.41 |
| Comp. Ex. 1-1 | A | a | 0.25 | 1.2 | Poor | Good | 0.027 | 0.026 | 73 | 0.13 | 14 |
| Comp. Ex. 1-2 | B | a | 0.25 | 5.7 | Poor | Good | 1.0 | 0.66 | 2.8 | 1.4 | 2.1 |
| Comp. Ex. 1-3 | B | a | 1.0 | 4.0 | Poor | Good | 0.026 | 0.18 | 1.0 | 0.31 | 0.56 |
| Comp. Ex. 1-4 | None | a | 1.0 | 6.1 | Poor | Good | 0.044 | 0.17 | 1.2 | 0.81 | 1.3 |

As shown in Table 1, the solid electrolyte compositions of Examples 1-1 to 1-3 and Comparative Example 1-1 included modified SBR as the binder. In Examples 1-1 to 1-3 in which the mass proportion of the nitrogen-containing organic substance to the solid electrolyte composition was 0.30 mass% or more, the obtained solid electrolyte compositions had improved fluidity and dispersion stability.

As shown in Table 1, the solid electrolyte compositions of Examples 1-1 to 1-3 and Comparative Examples 1-2 and 1-3 included 1-hydroxyethyl-2-alkenylimidazoline as the nitrogen-containing organic substance. In Examples 1-1 to 1-3 in which modified SBR was used as the binder, the obtained solid electrolyte compositions had improved fluidity and dispersion stability. In contrast, in Comparative Examples 1-2 and 1-3, the dispersion stability of the solid electrolyte compositions was poor. This is presumably due to the relatively poor compatibility between PMMA as the binder and 1-hydroxyethyl-2-alkenylimidazoline.

As shown in Table 1, the solid electrolyte compositions of Example 1-3 and Comparative Example 1-4 included 1-hydroxyethyl-2-alkenylimidazoline as the nitrogen-containing organic substance. In Example 1-3 in which modified SBR was used as the binder, the obtained solid electrolyte compositions had improved fluidity and dispersion stability. It is inferred from these results that a combination of a styrenic elastomer and an aminohydroxy compound is important in order to improve the fluidity and dispersion stability of a solid electrolyte composition.

<Example 2-1>

In Example 2-1, tetralin was used as the solvent of the binder solution. As the binder, solution polymerized styrene-butadiene rubber (modified SBR, manufactured by Asahi Kasei Corporation, ASAPRENE Y031) was used. The molar fraction of the repeating unit derived from styrene in the modified SBR was 0.16. The modified SBR had a weight average molecular weight $M_W$ of 380,000.

In Example 2-1, tetralin was used as the solvent of the dispersant solution. As the nitrogen-containing organic substance, hexadecylamine (manufactured by Tokyo Chemical Industry Co., Ltd.), which is a primary amine, was used.

[Production of solid electrolyte composition]

LPS (about 14 g) was weighed in an argon glove box with a dew point of -60°C or less, and tetralin, a solution containing a nitrogen-containing organic substance, and a solution containing a binder were added thereto. These materials were mixed in a mass ratio of LPS : binder : nitrogen-containing organic substance = 100 : 3 : 1, and the solid content concentration of the solid electrolyte composition was adjusted to 47 mass%. Subsequently, the resulting mixture solution was subjected to mixing in advance using a rotation/revolution mixer (manufactured by THINKY Corporation, ARE-310) and then to dispersing and kneading by ultrasonic shearing using an ultrasonic disperser (manufactured by SMT Co., Ltd., UH-50). Consequently, a solid electrolyte composition of Example 2-1 was obtained.

In the solid electrolyte composition of Example 2-1, the binder was modified SBR. The nitrogen-containing organic substance was hexadecylamine. The mass proportion of the nitrogen-containing organic substance to the solid electrolyte was 1.0 mass%.

<Example 2-2>

A solid electrolyte composition of Example 2-2 was produced by the same method as in Example 2-1 except that coconut amine (manufactured by Kao Corporation, FARMIN CS) was used as the nitrogen-containing organic substance. In the solid electrolyte composition of Example 2-2, the binder was modified SBR. The nitrogen-containing organic substance was coconut amine, which is a primary amine. The mass proportion of the nitrogen-containing organic substance to the solid electrolyte was 1.0 mass%. "FARMIN" is a registered trademark of Kao Corporation.

<Example 2-3>

A solid electrolyte composition of Example 2-3 was produced by the same method as in Example 2-1 except that N-methyloctadecylamine (manufactured by Tokyo Chemical Industry Co., Ltd.) was used as the nitrogen-containing organic substance. In the solid electrolyte composition of Example 2-3, the binder was modified SBR. The nitrogen-containing organic substance was N-methyloctadecylamine, which is a secondary amine. The mass proportion of the nitrogen-containing organic substance to the solid electrolyte was 1.0 mass%.

<Example 2-4>

A solid electrolyte composition of Example 2-4 was produced by the same method as in Example 2-1 except that triethanolamine difatty acid ester (manufactured by BYK, DISPERBYK-108) was used as the nitrogen-containing organic

substance. In the solid electrolyte composition of Example 2-4, the binder was modified SBR. The nitrogen-containing organic substance was triethanolamine difatty acid ester, which is an aminohydroxy compound. The mass proportion of the nitrogen-containing organic substance to the solid electrolyte was 1.0 mass%.

<Example 2-5>

A solid electrolyte composition of Example 2-5 was produced by the same method as in Example 2-1 except that N,N-bis(2-hydroxyethyl)oleylamine (manufactured by Lion Specialty Chemicals Co., Ltd., LIPONOL O/12) was used as the nitrogen-containing organic substance. In the solid electrolyte composition of Example 2-5, the binder was modified SBR. The nitrogen-containing organic substance was N,N-bis(2-hydroxyethyl)oleylamine, which is an aminohydroxy compound. The mass proportion of the nitrogen-containing organic substance to the solid electrolyte was 1.0 mass%.

<Example 2-6>

A solid electrolyte composition of Example 2-6 was produced by the same method as in Example 2-1 except that N-beef tallow alkyl-1,3-diaminopropane (manufactured by Lion Specialty Chemicals Co., Ltd., LIPOMIN DA-T) was used as the nitrogen-containing organic substance. In the solid electrolyte composition of Example 2-6, the binder was modified SBR. The nitrogen-containing organic substance was N-beef tallow alkyl-1,3-diaminopropane, which is a diamine. The mass proportion of the nitrogen-containing organic substance to the solid electrolyte was 1.0 mass%.

<Comparative Example 2-1>

A solid electrolyte composition of Comparative Example 2-1 was produced by the same method as in Example 2-1 except that N,N-dimethylhexadecylamine (manufactured by Tokyo Chemical Industry Co., Ltd.) was used as the nitrogen-containing organic substance. In the solid electrolyte composition of Comparative Example 2-1, the binder was modified SBR. The nitrogen-containing organic substance was N,N-dimethylhexadecylamine, which is a tertiary amine. The mass proportion of the nitrogen-containing organic substance to the solid electrolyte was 1.0 mass%.

<Comparative Example 2-2>

A solid electrolyte composition of Comparative Example 2-2 was produced by the same method as in Example 2-1 except that didecylmethylamine (manufactured by Tokyo Chemical Industry Co., Ltd.) was used as the nitrogen-containing organic substance. In the solid electrolyte composition of Comparative Example 2-2, the binder was modified SBR. The nitrogen-containing organic substance was didecylmethylamine, which is a tertiary amine. The mass proportion of the nitrogen-containing organic substance to the solid electrolyte was 1.0 mass%.

<Comparative Example 2-3>

A solid electrolyte composition of Comparative Example 2-3 was produced by the same method as in Example 2-1 except that tri-n-octylamine (manufactured by Tokyo Chemical Industry Co., Ltd.) was used as the nitrogen-containing organic substance. In the solid electrolyte composition of Comparative Example 2-3, the binder was modified SBR. The nitrogen-containing organic substance was tri-n-octylamine, which is a tertiary amine. The mass proportion of the nitrogen-containing organic substance to the solid electrolyte was 1.0 mass%.

<Comparative Example 2-4>

A solid electrolyte composition of Comparative Example 2-4 was produced by the same method as in Example 2-1 except that stearic acid amide (manufactured by Tokyo Chemical Industry Co., Ltd.) was used as the nitrogen-containing organic substance. In the solid electrolyte composition of Comparative Example 2-4, the binder was modified SBR. The nitrogen-containing organic substance was stearic acid amide, which is an amide compound. The mass proportion of the nitrogen-containing organic substance to the solid electrolyte was 1.0 mass%.

<Evaluation of solid electrolyte composition>

The dispersion stability of each of the solid electrolyte compositions of Examples 2-1 to 2-6 and Comparative Examples 2-1 to 2-4 was evaluated by the same method as in Example 1-1 except that the solid electrolyte compositions were left to stand for 3 days for the evaluation of the dispersion stability. In addition, the viscosity ratio of each solid electrolyte composition was calculated by the same method as in Example 1-1. Furthermore, the rheology of each solid

electrolyte composition was evaluated by the same method as in Example 1-1.

The results of the above measurements are shown in Table 2. In Table 2, the type A of the binder and the types b to k of the nitrogen-containing organic substances are as follows:

A: modified styrene-butadiene rubber (modified SBR, ASAPRENE Y031);
b: hexadecylamine (manufactured by Tokyo Chemical Industry Co., Ltd.);
c: coconut amine (manufactured by Kao Corporation, FARMIN CS);
d: N-methyloctadecylamine (manufactured by Tokyo Chemical Industry Co., Ltd.);
e: triethanolamine difatty acid ester (manufactured by BYK, DISPERBYK-108);
f: N,N-bis(2-hydroxyethyl)oleylamine (manufactured by Lion Specialty Chemicals Co., Ltd., LIPONOL O/12);
g: N-beef tallow alkyl-1,3-diaminopropane (manufactured by Lion Specialty Chemicals Co., Ltd., LIPOMIN DA-T);
h: N,N-dimethylhexadecylamine (manufactured by Tokyo Chemical Industry Co., Ltd.);
i: didecylmethylamine (manufactured by Tokyo Chemical Industry Co., Ltd.);
j: tri-n-octylamine (manufactured by Tokyo Chemical Industry Co., Ltd.); and
k: stearic acid amide (manufactured by Tokyo Chemical Industry Co., Ltd.).

[Table 2]

| | Solid electrolyte composition | | | | | Viscosity ratio ($\eta_1/\eta_2$) | Dispersion stability (after 3 days) | Fluidity | Casson yield value [Pa] | Dynamic viscoelasticity at $\gamma$ = 130% | | Dynamic viscoelasticity at $\gamma$ = 0.1% | |
|---|---|---|---|---|---|---|---|---|---|---|---|---|---|
| | Type of binder | Type of nitrogen-containing organic substance | Type of amine of nitrogen-containing organic substance | Presence or absence of unsaturated bond in nitrogen-containing organic substance | Mass proportion of nitrogen-containing organic substance to solid electrolyte [mass%] | | | | | Storage modulus G' [Pa] | Loss tangent Tan $\delta$ | Storage modulus G' [Pa] | Loss tangent Ttan $\delta$ |
| Ex. 2-1 | A | b | Primary amine | Absence | 1.0 | 9.5 | Good | Good | 0.87 | 0.51 | 4.8 | 82 | 0.61 |
| Ex. 2-2 | A | c | Primary amine | Presence | 1.0 | 14 | Good | Good | 1.6 | 0.64 | 5.1 | 55 | 2.0 |
| Ex. 2-3 | A | d | Secondary amine | Absence | 1.0 | 9.7 | Good | Good | 0.73 | 0.43 | 5.0 | 91 | 0.50 |
| Ex. 2-4 | A | e | Aminohydroxy compound | Presence | 1.0 | 6.4 | Good | Good | 0.35 | 0.31 | 5.1 | 46 | 0.55 |
| Ex. 2-5 | A | f | Aminohydroxy compound | Presence | 1.0 | 11 | Good | Good | 0.86 | 0.46 | 4.7 | 70 | 0.44 |
| Ex. 2-6 | A | g | Diamine | Presence | 1.0 | 8.6 | Good | Good | 0.54 | 0.35 | 5.2 | 71 | 0.76 |
| Comp. Ex. 2-1 | A | h | Tertiary amine | Absence | 1.0 | 1.1 | Poor | Good | 0.0011 | 0.17 | 4.9 | 0.27 | 3.4 |
| Comp. Ex. 2-2 | A | i | Tertiary amine | Absence | 1.0 | 1.1 | Poor | Good | 0.00035 | 0.17 | 5.2 | 0.29 | 4.0 |
| Comp. Ex. 2-3 | A | j | Tertiary amine | Absence | 1.0 | 1.2 | Poor | Good | 0.0014 | 0.19 | 5.1 | 0.19 | 5.1 |
| Comp. Ex. 2-4 | A | k | Amide | Absence | 1.0 | 1.3 | Poor | Good | 0.0095 | 0.20 | 4.8 | 0.23 | 4.7 |

As shown in Table 2, the solid electrolyte compositions of Examples 2-1 to 2-6 and Comparative Examples 2-1 to 2-4 included modified SBR as the binder. In the solid electrolyte compositions of Examples 2-1 to 2-6 in which a primary amine, a secondary amine, an aminohydroxy compound, or a diamine was included as the nitrogen-containing organic substance, the obtained solid electrolyte compositions had improved fluidity and dispersion stability.

As shown in Table 2, in the solid electrolyte compositions of Example 2-2 and Examples 2-4 to 2-6, the nitrogen-containing organic substance had an unsaturated bond. That is, in the solid electrolyte compositions of Example 2-2 and Examples 2-4 to 2-6, the nitrogen-containing organic substance includes a straight-chain alkenyl group. In the solid electrolyte compositions of Example 2-2 and Examples 2-4 to 2-6, the storage modulus G' at $\gamma$ = 0.1% was 80 Pa or less. The solid electrolyte compositions of Example 2-2 and Examples 2-4 to 2-6 exhibited better fluidity.

<Example 3-1>

In Example 3-1, tetralin was used as the solvent of the binder solution. As the binder, solution polymerized styrene-butadiene rubber (modified SBR, manufactured by Asahi Kasei Corporation, ASAPRENE Y031) was used. The molar fraction of the repeating unit derived from styrene in the modified SBR was 0.16. The modified SBR had a weight average molecular weight $M_W$ of 380,000.

In Example 3-1, tetralin was used as the solvent of the dispersant solution. As the nitrogen-containing organic substance, 1-hydroxyethyl-2-alkenylimidazoline (manufactured by BYK, DISPERBYK-109, an aminohydroxy compound containing an alkenyl group having 17 carbon atoms) was used.

[Production of solid electrolyte composition]

Fourteen grams of LPS was weighed in an argon glove box with a dew point of - 60°C or less, and tetralin, a solution containing a nitrogen-containing organic substance, and a solution containing a binder were added thereto. These materials were mixed in a mass ratio of LPS : binder : nitrogen-containing organic substance = 100 : 3 : 0.45, and the solid content concentration of the solid electrolyte composition was adjusted to 47 mass%. Subsequently, the resulting mixture solution was subjected to dispersing and kneading by shearing using a homogenizer (manufactured by AS ONE Corporation, HG-200) and a generator (manufactured by AS ONE Corporation, K-20S). Consequently, a solid electrolyte composition of Example 3-1 was obtained.

In the solid electrolyte composition of Example 3-1, the binder was modified SBR. The nitrogen-containing organic substance was 1-hydroxyethyl-2-alkenylimidazoline. The mass proportion of the nitrogen-containing organic substance to the solid electrolyte was 0.45 mass%.

<Example 3-2>

A solid electrolyte composition of Example 3-2 was produced by the same method as in Example 3-1 except that the LPS, the binder, and the nitrogen-containing organic substance were mixed in a mass ratio of 100 : 3 : 0.70. In the solid electrolyte composition of Example 3-2, the binder was modified SBR. The nitrogen-containing organic substance was 1-hydroxyethyl-2-alkenylimidazoline. The mass proportion of the nitrogen-containing organic substance to the solid electrolyte was 0.70 mass%.

<Example 3-3>

A solid electrolyte composition of Example 3-3 was produced by the same method as in Example 3-2 except that solution polymerized styrene-butadiene rubber (SBR, manufactured by Asahi Kasei Corporation, TUFDENE 2100R, molar fraction of repeating unit derived from styrene: 0.16, weight average molecular weight $M_W$: 390,000) was used as the binder. In the solid electrolyte composition of Example 3-3, the binder was SBR. The nitrogen-containing organic substance was 1-hydroxyethyl-2-alkenylimidazoline. The mass proportion of the nitrogen-containing organic substance to the solid electrolyte was 0.70 mass%. "TUFDENE" is a registered trademark of Asahi Kasei Corporation.

<Example 3-4>

A solid electrolyte composition of Example 3-4 was produced by the same method as in Example 3-2 except that a hydrogenated styrenic thermoplastic elastomer (amine-modified SEBS, manufactured by Asahi Kasei Corporation, TUFTEC MP10, molar fraction of repeating unit derived from styrene: 0.20, weight average molecular weight $M_W$: 58,000) was used as the binder and that the solid content concentration of the solid electrolyte composition was adjusted to 56 mass%. In the solid electrolyte composition of Example 3-4, the binder was modified SEBS. The nitrogen-containing organic substance was 1-hydroxyethyl-2-alkenylimidazoline. The mass proportion of the nitrogen-containing organic

substance to the solid electrolyte was 0.70 mass%. "TUFTEC" is a registered trademark of Asahi Kasei Corporation.

<Example 3-5>

A solid electrolyte composition of Example 3-5 was produced by the same method as in Example 3-2 except that a hydrogenated styrenic thermoplastic elastomer (SEBS, manufactured by Asahi Kasei Corporation, TUFTEC N504, molar fraction of repeating unit derived from styrene: 0.21, weight average molecular weight $M_W$: 230,000) was used as the binder. In the solid electrolyte composition of Example 3-5, the binder was SEBS. The nitrogen-containing organic substance was 1-hydroxyethyl-2-alkenylimidazoline. The mass proportion of the nitrogen-containing organic substance to the solid electrolyte was 0.70 mass%.

<Comparative Example 3-1>

A solid electrolyte composition of Comparative Example 3-1 was produced by the same method as in Example 3-1 except that the LPS, the binder, and the nitrogen-containing organic substance were mixed in a mass ratio of 100 : 3 : 0.20. In the solid electrolyte composition of Comparative Example 3-1, the binder was modified SBR. The nitrogen-containing organic substance was 1-hydroxyethyl-2-alkenylimidazoline. The mass proportion of the nitrogen-containing organic substance to the solid electrolyte was 0.20 mass%.

<Comparative Example 3-2>

A solid electrolyte composition of Comparative Example 3-2 was produced by the same method as in Example 3-3 except that the LPS, the binder, and the nitrogen-containing organic substance were mixed in a mass ratio of 100 : 3 : 0.20. In the solid electrolyte composition of Comparative Example 3-2, the binder was SBR. The nitrogen-containing organic substance was 1-hydroxyethyl-2-alkenylimidazoline. The mass proportion of the nitrogen-containing organic substance to the solid electrolyte was 0.20 mass%.

<Comparative Example 3-3>

A solid electrolyte composition of Comparative Example 3-3 was produced by the same method as in Example 3-4 except that the LPS, the binder, and the nitrogen-containing organic substance were mixed in a mass ratio of 100 : 3 : 0.20. In the solid electrolyte composition of Comparative Example 3-3, the binder was modified SEBS. The nitrogen-containing organic substance was 1-hydroxyethyl-2-alkenylimidazoline. The mass proportion of the nitrogen-containing organic substance to the solid electrolyte was 0.20 mass%.

<Comparative Example 3-4>

A solid electrolyte composition of Comparative Example 3-4 was produced by the same method as in Example 3-2 except that dimethylpalmitylamine (manufactured by Kao Corporation, FARMIN DM6098) was used as the nitrogen-containing organic substance. In the solid electrolyte composition of Comparative Example 3-4, the binder was modified SBR. The nitrogen-containing organic substance was dimethylpalmitylamine. The mass proportion of the nitrogen-containing organic substance to the solid electrolyte was 0.70 mass%.

<Comparative Example 3-5>

A solid electrolyte composition of Comparative Example 3-5 was produced by the same method as in Example 3-3 except that dimethylpalmitylamine (manufactured by Kao Corporation, FARMIN DM6098) was used as the nitrogen-containing organic substance. In the solid electrolyte composition of Comparative Example 3-5, the binder was SBR. The nitrogen-containing organic substance was dimethylpalmitylamine. The mass proportion of the nitrogen-containing organic substance to the solid electrolyte was 0.70 mass%.

<Comparative Example 3-6>

A solid electrolyte composition of Comparative Example 3-6 was produced by the same method as in Example 3-4 except that dimethylpalmitylamine (manufactured by Kao Corporation, FARMIN DM6098) was used as the nitrogen-containing organic substance. In the solid electrolyte composition of Comparative Example 3-6, the binder was modified SEBS. The nitrogen-containing organic substance was dimethylpalmitylamine. The mass proportion of the nitrogen-containing organic substance to the solid electrolyte was 0.70 mass%.

<Evaluation of solid electrolyte composition>

The viscosity ratio of each of the solid electrolyte compositions of Examples 3-1 to 3-5 and Comparative Examples 3-1 to 3-6 was calculated by the same method as in Example 1-1. In addition, the dispersion stability and rheology of each of the solid electrolyte compositions of Examples 3-1 to 3-5 and Comparative Examples 3-1 to 3-6 were evaluated.

The results of the above measurements are shown in Table 3. In Table 3, the types A to E of the binders and the types a and l of the nitrogen-containing organic substances are as follows:

A: modified styrene-butadiene rubber (modified SBR, ASAPRENE Y031);
C: styrene-butadiene rubber (SBR, TUFDENE 2100R);
D: modified styrene-ethylene/butylene-styrene block copolymer (amine-modified SEBS, TUFTEC MP10);
E: styrene-ethylene/butylene-styrene block copolymer (SEBS, TUFTEC N504);
a: 1-hydroxyethyl-2-alkenylimidazoline (manufactured by BYK, DISPERBYK-109); and
1: dimethylpalmitylamine (manufactured by Kao Corporation, FARMIN DM6098).

[Table 3]

| | Solid electrolyte composition | | | | Viscosity ratio ($\eta_1/\eta_2$) | Dispersion stability (after 4 days) | Fluidity | Casson yield value [Pa] | Dynamic viscoelasticity at $\gamma$ = 130% | | Dynamic viscoelasticity at $\gamma$ = 0.1% | |
|---|---|---|---|---|---|---|---|---|---|---|---|---|
| | Type of binder | Type of nitrogen-containing organic substance | Mass proportion of nitrogen-containing organic substance to solid electrolyte [mass%] | Solid content concentration | | | | | Storage modulus G' [Pa] | Loss tangent Tan $\delta$ | Storage modulus G' [Pa] | Loss tangent Tan $\delta$ |
| Ex. 3-1 | A | a | 0.45 | 47 | 7.6 | Good | Good | 0.46 | 0.35 | 5.0 | 60 | 0.68 |
| Ex. 3-2 | A | a | 0.70 | 47 | 7.7 | Good | Good | 0.46 | 0.34 | 5.1 | 60 | 0.83 |
| Ex. 3-3 | C | a | 0.70 | 47 | 6.6 | Good | Good | 0.56 | 0.36 | 5.9 | 68 | 0.46 |
| Ex. 3-4 | D | a | 0.70 | 56 | 7.4 | Good | Good | 0.41 | 0.57 | 3.6 | 53 | 0.52 |
| Ex. 3-5 | E | a | 0.70 | 47 | 7.8 | Good | Good | 0.42 | 0.33 | 5.0 | 50 | 0.74 |
| Comp. Ex. 3-1 | A | a | 0.20 | 47 | 1.2 | Poor | Good | 0.0034 | 0.19 | 5.3 | 0.29 | 4.3 |
| Comp. Ex. 3-2 | C | a | 0.20 | 47 | 4.9 | Poor | Poor | 1.0 | 0.64 | 3.6 | 0.40 | 5.0 |
| Comp. Ex. 3-3 | D | a | 0.20 | 56 | 1.7 | Poor | Poor | 0.013 | 0.28 | 3.7 | 2.4 | 0.94 |
| Comp. Ex. 3-4 | A | I | 0.70 | 47 | 1.2 | Poor | Poor | 0.0027 | 0.17 | 5.0 | 0.20 | 4.9 |
| Comp. Ex. 3-5 | C | I | 0.70 | 47 | 2.2 | Poor | Poor | 0.39 | 0.42 | 4.6 | 0.43 | 4.0 |
| Comp. Ex. 3-6 | D | I | 0.70 | 56 | 1.2 | Poor | Poor | 0.024 | 0.22 | 3.0 | 0.50 | 1.5 |

As shown in Table 3, the solid electrolyte compositions of Examples 3-1 to 3-5 and Comparative Examples 3-1 to 3-6 included a styrenic elastomer as the binder. In Examples 3-1 to 3-5, an aminohydroxy compound was used as the nitrogen-containing organic substance, and the mass proportion of the nitrogen-containing organic substance to the solid electrolyte was 0.30 mass%. In Examples 3-1 to 3-5, solid electrolyte compositions with improved fluidity and dispersion stability were obtained.

<Example 4-1>

In Example 4-1, tetralin was used as the solvent of the binder solution. As the binder, solution polymerized styrene-butadiene rubber (modified SBR, manufactured by Asahi Kasei Corporation, ASAPRENE Y031) was used. The molar fraction of the repeating unit derived from styrene in the modified SBR was 0.16. The modified SBR had a weight average molecular weight $M_W$ of 380,000.

[Production of solid electrolyte composition]

Tetralin and a binder solution were added to LPS (140 g) in an argon glove box with a dew point of -60°C or less. These materials were mixed in a mass ratio of LPS : binder = 100 : 3, and the solid content concentration of the solid electrolyte composition was adjusted to 51 mass%. Subsequently, the resulting mixture solution was subjected to mixing using an in-line type dispersion and pulverization device (manufactured by IKA, magic LAB). The resulting mixture solution (about 30 g) was weighed, and 1-hydroxyethyl-2-alkenylimidazoline (manufactured by BYK, DISPERBYK-109, an aminohydroxy compound containing an alkenyl group having 17 carbon atoms) as the nitrogen-containing organic substance was then added thereto such that the mass ratio of the LPS and the nitrogen-containing organic substance was 100 : 1.0. Subsequently, this mixture solution was mixed in advance using a rotation/revolution mixer (manufactured by THINKY Corporation, ARE-310) and was then dispersed and kneaded by high-speed shearing using a homogenizer (manufactured by AS ONE Corporation, HG-200) and a generator (manufactured by AS ONE Corporation, K-20S). Consequently, a solid electrolyte composition of Example 4-1 was obtained.

In the solid electrolyte composition of Example 4-1, the binder was modified SBR. The nitrogen-containing organic substance was 1-hydroxyethyl-2-alkenylimidazoline. The mass proportion of the nitrogen-containing organic substance to the solid electrolyte was 1.0 mass%. The kneading method after addition of the nitrogen-containing organic substance was high shearing using a high-speed homogenizer.

<Example 4-2>

A solid electrolyte composition of Example 4-2 was produced by the same method as in Example 4-1 except that in the kneading method after the addition of the nitrogen-containing organic substance, an ultrasonic disperser (manufactured by SMT Co., Ltd., UH-50) was used. In the solid electrolyte composition of Example 4-2, the binder was modified SBR. The nitrogen-containing organic substance was 1-hydroxyethyl-2-alkenylimidazoline. The mass proportion of the nitrogen-containing organic substance to the solid electrolyte was 1.0 mass%. The kneading method after the addition of the nitrogen-containing organic substance was high shearing using an ultrasonic homogenizer.

<Comparative Example 4-1>

A solid electrolyte composition of Comparative Example 4-1 was produced by the same method as in Example 4-2 except that the LPS and the nitrogen-containing organic substance were mixed in a mass ratio of 100 : 0.25. In the solid electrolyte composition of Comparative Example 4-1, the binder was modified SBR. The nitrogen-containing organic substance was 1-hydroxyethyl-2-alkenylimidazoline. The mass proportion of the nitrogen-containing organic substance to the solid electrolyte was 0.25 mass%. The kneading method after the addition of the nitrogen-containing organic substance was high shearing using an ultrasonic homogenizer.

<Evaluation of solid electrolyte composition>

The dispersion stability of each of the solid electrolyte compositions of Examples 4-1 and 4-2 and Comparative Example 4-1 was evaluated by the same method as in Example 1-1 except that the solid electrolyte compositions were left to stand for 1 day for the evaluation of the dispersion stability. In addition, the viscosity ratio of each solid electrolyte compositions was calculated by the same method as in Example 1-1. Furthermore, the rheology of each solid electrolyte composition was evaluated by the same method as in Example 1-1.

The results of the above measurements are shown in Table 4. In Table 4, the type A of the binder and the type a of the nitrogen-containing organic substance are as follows:

A: modified styrene-butadiene rubber (modified SBR, ASAPRENE Y031); and
a: 1-hydroxyethyl-2-alkenylimidazoline (manufactured by BYK, DISPERBYK-109).

[Table 4]

| | Solid electrolyte composition | | | | Viscosity ratio ($\eta_1/\eta_2$) | Dispersion stability (after 1 days) | Fluidity | Casson yield value [Pa] | Dynamic viscoelasticity at $\gamma$ = 130% | | Dynamic viscoelasticity at $\gamma$ = 0.1% | |
|---|---|---|---|---|---|---|---|---|---|---|---|---|
| | Type of binder | Type of nitrogen-containing organic substance | Mass proportion of nitrogen-containing organic substance to solid electrolyte [mass%] | Kneading method after addition of nitrogen-containing organic substance | | | | | Storage modulus G' [Pa] | Loss tangent Tan $\delta$ | Storage modulus G' [Pa] | Loss tangent Tan $\delta$ |
| Ex. 4-1 | A | a | 1.0 | Rotation/ revolution mixer → high-speed homogenizer | 4.6 | Good | Good | 0.50 | 0.34 | 8.3 | 37 | 0.65 |
| Ex. 4-2 | A | a | 1.0 | Rotation/ revolution mixer → ultrasonic homogenizer | 4.4 | Good | Good | 0.48 | 0.33 | 7.9 | 17 | 0.87 |
| Comp. Ex. 4-1 | A | a | 0.25 | Rotation/ revolution mixer → ultrasonic homogenizer | 1.1 | Poor | Good | 0.014 | 0.10 | 17 | 0.29 | 6.1 |

As shown in Table 4, the solid electrolyte compositions of Examples 4-1 and 4-2 and Comparative Example 4-1 included modified SBR and 1-hydroxyethyl-2-alkenylimidazoline. In Examples 4-1 and 4-2 in which the mass proportion of the nitrogen-containing organic substance to the solid electrolyte was 0.30 mass% or more, the obtained solid electrolyte compositions had improved fluidity and dispersion stability. In both kneading methods of high shearing using a high-speed homogenizer and high shearing using an ultrasonic homogenizer, the obtained solid electrolyte compositions had improved fluidity and dispersion stability.

<Example 5-1>

In Example 5-1, tetralin was used as the solvent of the binder solution. As the binder, solution polymerized styrene-butadiene rubber (modified SBR, manufactured by Asahi Kasei Corporation, ASAPRENE Y031) was used. The molar fraction of the repeating unit derived from styrene in the modified SBR was 0.16. The modified SBR had a weight average molecular weight $M_W$ of 380,000.

[Production of solid electrolyte composition]

Tetralin and a binder solution were added to LPS (210 g) in an argon glove box with a dew point of -60°C or less. These materials were mixed in a mass ratio of LPS : binder = 100 : 3, and the solid content concentration of the solid electrolyte composition was adjusted to 51 mass%. Subsequently, the resulting mixture solution was mixed using an in-line type dispersion and pulverization device (manufactured by IKA, magic LAB). The resulting mixture solution (about 30 g) was weighed, and hydrogenated beef tallow alkylamine (manufactured by Lion Specialty Chemicals Co., Ltd., LIPOMIN HTD) as the nitrogen-containing organic substance was then added thereto such that the mass ratio of the LPS and the nitrogen-containing organic substance was 100 : 1.0, followed by dispersing and kneading by ultrasonic shearing using an ultrasonic disperser (manufactured by SMT Co., Ltd., UH-50). Consequently, a solid electrolyte composition of Example 5-1 was obtained. "LIPOMIN" is a registered trademark of Lion Specialty Chemicals Co., Ltd.

In the solid electrolyte composition of Example 5-1, the binder was modified SBR. The nitrogen-containing organic substance was a hydrogenated beef tallow alkylamine. The mass proportion of the nitrogen-containing organic substance to the solid electrolyte was 1.0 mass%.

<Example 5-2

A solid electrolyte composition of Example 5-2 was produced by the same method as in Example 5-1 except that a polyoxyethylene coconut alkylamine (manufactured by Kao Corporation, AMIET102, average addition mole number of the ethyleneoxy group: 2) was used as the nitrogen-containing organic substance. In the solid electrolyte composition of Example 5-2, the binder was modified SBR. The nitrogen-containing organic substance was a polyoxyethylene coconut alkylamine. The mass proportion of the nitrogen-containing organic substance to the solid electrolyte was 1.0 mass%.

Example 5-3

A solid electrolyte composition of Example 5-3 was produced by the same method as in Example 5-1 except that 1-hydroxyethyl-2-alkenylimidazoline (manufactured by Kao Corporation, HOMOGENOL L-95, an alkanolamine compound containing an alkenyl group having 13 to 17 carbon atoms) was used as the nitrogen-containing organic substance. In the solid electrolyte composition of Example 5-3, the binder was modified SBR. The nitrogen-containing organic substance was 1-hydroxyethyl-2-alkenylimidazoline. The mass proportion of the nitrogen-containing organic substance to the solid electrolyte was 1.0 mass%.

<Example 5-4>

A solid electrolyte composition of Example 5-4 was produced by the same method as in Example 5-1 except that a beef tallow alkylamine (manufactured by Lion Specialty Chemicals Co., Ltd., LIPOMIN TD) was used as the nitrogen-containing organic substance. In the solid electrolyte composition of Example 5-4, the binder was modified SBR. The nitrogen-containing organic substance was a beef tallow alkylamine. The mass proportion of the nitrogen-containing organic substance to the solid electrolyte was 1.0 mass%.

<Example 5-5>

A solid electrolyte composition of Example 5-5 was produced by the same method as in Example 5-1 except that oleylamine (manufactured by Kao Corporation, FARMIN O-V) was used as the nitrogen-containing organic substance. In

the solid electrolyte composition of Example 5-5, the binder was modified SBR. The nitrogen-containing organic substance was oleylamine. The mass proportion of the nitrogen-containing organic substance to the solid electrolyte was 1.0 mass%.

<Example 5-6>

A solid electrolyte composition of Example 5-6 was produced by the same method as in Example 5-1 except that 1-hydroxyethyl-2-alkenylimidazoline (manufactured by BYK, DISPERBYK-109, an aminohydroxy compound containing an alkenyl group having 17 carbon atoms) was used as the nitrogen-containing organic substance. In the solid electrolyte composition of Example 5-6, the binder was modified SBR. The nitrogen-containing organic substance was 1-hydroxyethyl-2-alkenylimidazoline. The mass proportion of the nitrogen-containing organic substance to the solid electrolyte was 1.0 mass%.

<Example 5-7>

A solid electrolyte composition of Example 5-7 was produced by the same method as in Example 5-2 except that a hydrogenated styrenic thermoplastic elastomer (amine-modified SEBS, manufactured by Asahi Kasei Corporation, TUFTEC MP10, molar fraction of repeating unit derived from styrene: 0.20, weight average molecular weight $M_W$: 58,000) was used as the binder and that the solid content concentration was adjusted to 56 mass%. In the solid electrolyte composition of Example 5-7, the binder was modified SEBS. The nitrogen-containing organic substance was a polyoxyethylene coconut alkylamine. The mass proportion of the nitrogen-containing organic substance to the solid electrolyte was 1.0 mass%.

<Example 5-8>

A solid electrolyte composition of Example 5-8 was produced by the same method as in Example 5-5 except that a hydrogenated styrenic thermoplastic elastomer (amine-modified SEBS, manufactured by Asahi Kasei Corporation, TUFTEC MP10) was used as the binder and that the solid content concentration was adjusted to 56 mass%. In the solid electrolyte composition of Example 5-8, the binder was modified SEBS. The nitrogen-containing organic substance was oleylamine. The mass proportion of the nitrogen-containing organic substance to the solid electrolyte was 1.0 mass%.

Comparative Example 5-1

A solid electrolyte composition of Comparative Example 5-1 was produced by the same method as in Example 5-1 except that dimethylpalmitylamine (manufactured by Kao Corporation, FARMIN DM6098) was used as the nitrogen-containing organic substance. In the solid electrolyte composition of Comparative Example 5-1, the binder was modified SBR. The nitrogen-containing organic substance was dimethylpalmitylamine. The mass proportion of the nitrogen-containing organic substance to the solid electrolyte was 1.0 mass%.

<Comparative Example 5-2.

A solid electrolyte composition of Comparative Example 5-2 was produced by the same method as in Example 5-1 except that dimethylmyristylamine (manufactured by Kao Corporation, FARMIN DM4098) was used as the nitrogen-containing organic substance. In the solid electrolyte composition of the Comparative Example 5-2, the binder was modified SBR. The nitrogen-containing organic substance was dimethylmyristylamine. The mass proportion of the nitrogen-containing organic substance to the solid electrolyte was 1.0 mass%.

<Measurement of iodine value of nitrogen-containing organic substance>

The iodine value of the nitrogen-containing organic substance used in Example 5-1, Comparative Example 5-1, and Comparative Example 5-2 was measured by the following method. A measurement sample containing the nitrogen-containing organic substance was subjected to proton nuclear magnetic resonance ($^1$H NMR) measurement using a nuclear magnetic resonance apparatus (AVANCE500, manufactured by Bruker). As the measurement sample, the nitrogen-containing organic substance was dissolved in heavy chloroform ($CDCl_3$) and used. As the internal standard material, decamethylcyclopentasiloxane (D5 siloxane) was used. The $^1$H NMR measurement was performed under conditions of a resonance frequency of 500 MHz and room temperature. From the resulting NMR spectrum, the integrated value of a peak derived from D5 siloxane and the integrated value of a peak derived from an unsaturated bond (C=C skeleton) were calculated. The iodine value (unit: $I_2$/100 g) of the nitrogen-containing organic substance was calculated

using the calculated integrated values.

The iodine value of the nitrogen-containing organic substance used in Examples 5-2 to 5-8 was calculated by the following method. In the measurement sample including the nitrogen-containing organic substance, the iodine value (unit: $I_2$/100 g) was calculated by a Wijs method using an automatic titrator (AT-710, manufactured by Kyoto Electronics Manufacturing Co., Ltd.).

<Evaluation of solid electrolyte composition>

The dispersion stability of each of the solid electrolyte compositions of Examples 5-1 to 5-8 and Comparative Examples 5-1 and 5-2 was evaluated by the same method as in Example 1-1 except that the solid electrolyte compositions were left to stand for 1 day for the evaluation of the dispersion stability. In addition, the viscosity ratio of each solid electrolyte composition was calculated by the same method as in Example 1-1. Furthermore, the rheology of each solid electrolyte composition was evaluated by the same method as in Example 1-1.

The results of the above measurements are shown in Table 5. In Table 5, the types A and D of the binders and the types a and I to r of the nitrogen-containing organic substances are as follows:

A: modified styrene-butadiene rubber (modified SBR, ASAPRENE Y031);
D: modified styrene-ethylene/butylene-styrene block copolymer (amine-modified SEBS, TUFTEC MP10);
a: 1-hydroxyethyl-2-alkenylimidazoline (manufactured by BYK, DISPERBYK-109);
1: dimethylpalmitylamine (manufactured by Kao Corporation, FARMIN DM6098);
m: hydrogenated beef tallow alkylamine (manufactured by Lion Specialty Chemicals Co., Ltd., LIPOMIN HTD);
n: polyoxyethylene coconut alkylamine (manufactured by Kao Corporation, AMIET102);
o: 1-hydroxyethyl-2-alkenylimidazoline (manufactured by Kao Corporation, HOMOGENOL L-95);
p: beef tallow alkylamine (manufactured by Lion Specialty Chemicals Co., Ltd., LIPOMIN TD)
q: oleylamine (manufactured by Kao Corporation, FARMIN O-V); and
r: dimethylmyristylamine (manufactured by Kao Corporation, FARMIN DM4098).

[Table 5]

| | Solid electrolyte composition | | | | Viscosity ratio ($\eta_1/\eta_2$) | Dispersion stability (after 1 days) | Fluidity | Casson yield value [Pa] | Dynamic viscoelasticity at $\gamma$ = 130% | | Dynamic viscoelasticity at $\gamma$ = 0.1% | |
|---|---|---|---|---|---|---|---|---|---|---|---|---|
| | Type of binder | Type of nitrogen-containing organic substance | Mass proportion of nitrogen-containing organic substance to solid electrolyte [mass%] | Iodine value of nitrogen-containing organic substance [$I_2$ g/100 g] | | | | | Storage modulus G' [Pa] | Loss tangent Tan $\delta$ | Storage modulus G' [Pa] | Loss tangent Tan $\delta$ |
| Ex. 5-1 | A | m | 1.0 | 0.73 | 3.5 | Good | Good | 0.55 | 0.46 | 6.6 | 98 | 0.36 |
| Ex. 5-2 | A | n | 1.0 | 14.9 | 11 | Good | Good | 2.6 | 1.4 | 3.9 | 110 | 0.31 |
| Ex. 5-3 | A | o | 1.0 | 25.8 | 2.5 | Good | Good | 0.23 | 0.24 | 9.3 | 1.2 | 3.2 |
| Ex. 5-4 | A | p | 1.0 | 50.2 | 5.7 | Good | Good | 0.93 | 0.61 | 6.3 | 26 | 0.71 |
| Ex. 5-5 | A | q | 1.0 | 92.2 | 3.9 | Good | Good | 0.48 | 0.39 | 7.4 | 4.4 | 1.6 |
| Ex. 5-6 | A | a | 1.0 | 104.6 | 2.3 | Good | Good | 0.19 | 0.20 | 10 | 1.0 | 3.6 |
| Ex. 5-7 | D | n | 1.0 | 14.9 | 20 | Good | Good | 4.2 | 2.0 | 2.6 | 121 | 0.30 |
| Ex. 5-8 | D | q | 1.0 | 92.2 | 7.8 | Good | Good | 0.41 | 0.52 | 3.4 | 19 | 0.50 |
| Comp. Ex. 5-1 | A | l | 1.0 | <0.02 | 3.0 | Poor | Poor | 0.10 | 0.17 | 11 | 24 | 0.36 |
| Comp. Ex. 5-2 | A | r | 1.0 | <0.02 | 5.7 | Poor | Poor | 0.24 | 0.21 | 9.5 | 179 | 0.57 |

As shown in Table 5, the solid electrolyte compositions of Examples 5-1 to 5-8 and Comparative Examples 5-1 and 5-2 included modified SBR or amine-modified SEBS. In Examples 5-1 to 5-8, a primary amine or an aminohydroxy compound was included as the nitrogen-containing organic substance. In Examples 5-1 to 5-8, the obtained solid electrolyte compositions had improved fluidity and dispersion stability.

As shown in Table 5, in the solid electrolyte compositions of Examples 5-3 to 5-6 and 5-8, the nitrogen-containing organic substances had an iodine value of 15 or more. In the solid electrolyte compositions of Examples 5-3 to 5-6 and 5-8, at $\gamma$ = 0.1%, the storage modulus G' was 80 Pa or less, and the loss tangent tan $\delta$ was 0.4 or more. Accordingly, the solid electrolyte compositions of Examples 5-3 to 5-6 and 5-8 exhibited better fluidity.

<Example 6-1>

In Example 6-1, tetralin was used as the solvent of the binder solution. As the binder, solution polymerized styrene-butadiene rubber (modified SBR, manufactured by Asahi Kasei Corporation, ASAPRENE Y031) was used. The molar fraction of the repeating unit derived from styrene in the modified SBR was 0.16. The modified SBR had a weight average molecular weight $M_W$ of 380,000.

[Production of electrode composition]

Tetralin (126 g) and a 5 mass% binder solution (25.2 g) were added to 300 g of $Li(Ni,Co,Al)O_2$ (NCA) covered with $LiNbO_3$ weighed in an argon glove box with a dew point of -60°C or less to prepare a mixture solution. This mixture solution was subjected to dispersing and kneading using a desktop digital ultrasonic homogenizer (manufactured by BRANSON, SONIFIER SFX550). Subsequently, a vapor grown carbon fiber (manufactured by Resonac Corporation, VGCF-H) and acetylene black (manufactured by Denka Co., Ltd., DENKA BLACK Li, Li-435) were mixed in a mass ratio of vapor grown carbon fiber : acetylene black of 89.5 : 10.5 to prepare a conductive assistant. This conductive assistant (8.65 g) was added to the mixture solution, followed by dispersing and kneading. Subsequently, LPS (95.0 g) was added to the mixture solution, followed by dispersing and kneading. The resulting mixture solution (about 40 g) was weighed. Furthermore, 1-hydroxyethyl-2-alkenylimidazoline (manufactured by BYK, DISPERBYK-109, an aminohydroxy compound containing an alkenyl group having 17 carbon atoms) was added thereto such that the mass ratio of the LPS and the nitrogen-containing organic substance was 100 : 0.34 to prepare a solution. This solution was subjected to dispersing and kneading using an ultrasonic disperser (manufactured by SMT Co., Ltd., UH-50) to obtain an electrode composition of Example 6-1. "VGCF" is a registered trademark of Resonac Corporation.

In the electrode composition of Example 6-1, the binder was modified SBR. The nitrogen-containing organic substance was 1-hydroxyethyl-2-alkenylimidazoline. The mass proportion of the nitrogen-containing organic substance to the solid electrolyte was 0.34 mass%.

<Example 6-2>

An electrode composition of Example 6-2 was produced by the same method as in Example 6-1 except that the LPS and the nitrogen-containing organic substance were mixed in a mass ratio of 100 : 1.0. In the electrode composition of Example 6-2, the binder was modified SBR. The nitrogen-containing organic substance was 1-hydroxyethyl-2-alkenylimidazoline. The mass proportion of the nitrogen-containing organic substance to the solid electrolyte was 1.0 mass%.

<Example 6-3>

An electrode composition of Example 6-3 was produced by the same method as in Example 6-1 except that oleylamine (manufactured by Kao Corporation, FARMIN O-V) was used as the nitrogen-containing organic substance and that the LPS and the nitrogen-containing organic substance were mixed in a mass ratio of 100 : 0.37. In the electrode composition of Example 6-3, the binder was modified SBR. The nitrogen-containing organic substance was oleylamine. The mass proportion of the nitrogen-containing organic substance to the solid electrolyte was 0.37 mass%.

<Example 6-4>

An electrode composition of Example 6-4 was produced by the same method as in Example 6-1 except that oleylamine (manufactured by Kao Corporation, FARMIN O-V) was used as the nitrogen-containing organic substance and that the LPS and the nitrogen-containing organic substance were mixed in a mass ratio of 100 : 1.0. In the electrode composition of Example 6-4, the binder was modified SBR. The nitrogen-containing organic substance was oleylamine. The mass proportion of the nitrogen-containing organic substance to the solid electrolyte was 1.0 mass%.

<Comparative Example 6-1>

An electrode composition of Comparative Example 6-1 was produced by the method as in Example 6-1 except that no nitrogen-containing organic substance was used. In the electrode composition of Comparative Example 6-1, the binder was modified SBR. No nitrogen-containing organic substance was used.

<Evaluation of electrode composition>

The dispersion stability of each of the electrode compositions of Examples 6-1 to 6-4 and Comparative Example 6-1 was evaluated by the same method as in Example 1-1 except that the electrode compositions were left to stand for 3 days for the evaluation of the dispersion stability. In addition, the viscosity ratio of each electrode composition was calculated by the same method as in Example 1-1. Furthermore, the rheology of each electrode composition was evaluated by the same method as in Example 1-1.

The results of the above measurements are shown in Table 6. In Table 6, the type A of the binder and the types a and n of the nitrogen-containing organic substances are as follows:

A: modified styrene-butadiene rubber (modified SBR, ASAPRENE Y031);

a: 1-hydroxyethyl-2-alkenylimidazoline (manufactured by BYK, DISPERBYK-109); and

q: oleylamine (manufactured by Kao Corporation, FARMIN O-V).

[Table 6]

| | Electrode composition | | | | Viscosity ratio ($\eta_1/\eta_2$) | Dispersion stability (after 3 days) | Fluidity | Casson yield value [Pa] | Dynamic viscoelasticity at $\gamma$ = 130% | | Dynamic viscoelasticity at $\gamma$ = 0.1% | |
|---|---|---|---|---|---|---|---|---|---|---|---|---|
| | Type of active material | Type of binder | Type of nitrogen-containing organic substance | Mass proportion of nitrogen-containing organic substance to solid electrolyte [mass%] | | | | | Storage modulus G' [Pa] | Loss tangent Tan $\delta$ | Storage modulus G' [Pa] | Loss tangent Tan $\delta$ |
| Ex. 6-1 | NCA | A | a | 0.34 | 7.8 | Good | Good | 2.0 | 1.6 | 2.3 | 4.6 | 0.57 |
| Ex. 6-2 | NCA | A | a | 1.0 | 11 | Good | Good | 2.4 | 1.2 | 2.3 | 2.6 | 0.83 |
| Ex. 6-3 | NCA | A | n | 0.37 | 8.3 | Good | Good | 2.5 | 2.2 | 2.2 | 7.2 | 0.37 |
| Ex. 6-4 | NCA | A | n | 1.0 | 16 | Good | Good | 3.9 | 1.7 | 2.2 | 3.5 | 0.64 |
| Comp. Ex. 6-1 | NCA | A | None | 0 | 5.7 | Good | Poor | 1.8 | 2.5 | 2.3 | 14 | 0.25 |

As shown in Table 6, the electrode compositions of Examples 6-1 to 6-4 and Comparative Example 6-1 included modified SBR. In Examples 6-1 to 6-4, 1-hydroxyethyl-2-alkenylimidazoline or oleylamine was included as the nitrogen-containing organic substance. Consequently, in Examples 6-1 to 6-4, the obtained electrode compositions had improved fluidity and dispersion stability.

<Example 7-1>

In Example 7-1, tetralin was used as the solvent of the binder solution. As the binder, solution polymerized styrene-butadiene rubber (modified SBR, manufactured by Asahi Kasei Corporation, ASAPRENE Y031) was used. The molar fraction of the repeating unit derived from styrene in the modified SBR was 0.16. The modified SBR had a weight average molecular weight $M_W$ of 380,000.

In Example 7-1, tetralin was used as the solvent of the dispersant solution. As the nitrogen-containing organic substance, 1-hydroxyethyl-2-alkenylimidazoline (manufactured by BYK, DISPERBYK-109, an aminohydroxy compound containing an alkenyl group having 17 carbon atoms) was used.

[Production of electrode composition]

$Li_4Ti_5O_{12}$ (LTO, 250 g) was weighed in an argon glove box with a dew point of - 60°C or less, and tetralin (136 g) and a 5 mass% dispersant solution (15.0 g) were added thereto to prepare a mixture solution. This mixture solution was subjected to dispersing and kneading using a desktop digital ultrasonic homogenizer (manufactured by BRANSON, SONIFIER SFX550). Subsequently, a 5 mass% binder solution (43.4 g), VGCF-H (2.75 g), and LPS (84.0 g) were added to the mixture solution, followed by dispersing and kneading. Subsequently, this mixture solution was subjected to dispersing and kneading using a rotation/revolution mixer (manufactured by THINKY Corporation, ARE-310) to obtain an electrode composition of Example 7-1.

In the electrode composition of Example 7-1, the binder was modified SBR. The nitrogen-containing organic substance was 1-hydroxyethyl-2-alkenylimidazoline. The mass proportion of the nitrogen-containing organic substance to the solid electrolyte was 0.89 mass%.

<Comparative Example 7-1

An electrode composition of Comparative Example 7-1 was produced by the same method as in Example 7-1 except that acrylic resin (PMMA, weight average molecular weight: 15,000, manufactured by ALDRICH) was used as the binder. In the electrode composition of Comparative Example 7-1, the binder was PMMA. The nitrogen-containing organic substance was 1-hydroxyethyl-2-alkenylimidazoline. The mass proportion of the nitrogen-containing organic substance to the solid electrolyte was 0.89 mass%.

<Evaluation of electrode composition.

The dispersion stability of each of the electrode compositions of Example 7-1 and Comparative Example 7-1 was evaluated by the same method as in Example 1-1 except that the electrode compositions were left to stand for 2 days for the evaluation of the dispersion stability. In addition, the viscosity ratio of each electrode composition was calculated by the same method as in Example 1-1. Furthermore, the rheology of each electrode composition was evaluated by the same method as in Example 1-1.

The results of the above measurements are shown in Table 7. In Table 7, the types A and B of the binders and the type a of the nitrogen-containing organic substance are as follows:

A: modified styrene-butadiene rubber (modified SBR, ASAPRENE Y031);
B: acrylic resin (PMMA); and
a: 1-hydroxyethyl-2-alkenylimidazoline (manufactured by BYK, DISPERBYK-109).

[Table 7]

| | Electrode composition | | | | Viscosity ratio ($\eta_1/\eta_2$) | Dispersion stability (after 2 days) | Fluidity | Casson yield value [Pa] | Dynamic viscoelasticity at $\gamma$ = 130% | | Dynamic viscoelasticity at $\gamma$ = 0.1% | |
|---|---|---|---|---|---|---|---|---|---|---|---|---|
| | Type of active material | Type of binder | Type of nitrogen-containing organic substance | Mass proportion of nitrogen-containing organic substance to solid electrolyte [mass%] | | | | | Storage modulus G' [Pa] | Loss tangent Tan δ | Storage modulus G' [Pa] | Loss tangent Tan δ |
| Ex. 7-1 | LTO | A | a | 0.89 | 2.7 | Good | Good | 0.19 | 0.52 | 3.3 | 2.3 | 1.0 |
| Comp. Ex. 7-1 | LTO | B | a | 0.89 | 26 | Good | Poor | 6.8 | 4.0 | 2.2 | 41 | 0.64 |

As shown in Table 7, in Example 7-1 and Comparative Example 7-1, 1-hydroxyethyl-2-alkenylimidazoline was included as the nitrogen-containing organic substance. The electrode composition of Example 7-1 included modified SBR. Consequently, in Example 7-1, the obtained electrode composition had improved fluidity and dispersion stability.

As shown in Tables 1 to 7, in the solid electrolyte compositions of Examples and the electrode compositions of Examples, the fluidity and dispersion stability were improved. Large-area solid electrolyte sheets and electrode sheets can be manufactured with high efficiency by the solid electrolyte compositions of Examples and the electrode compositions of Examples. That is, the solid electrolyte compositions of Examples and the electrode compositions of Examples are suitable for highly efficiently manufacturing large-area batteries.

Industrial Application

The solid electrolyte composition of the present disclosure can be used for manufacturing, for example, an all-solid-state lithium ion secondary battery.

Reference Signs List

| | |
|---|---|
| 101 | solid electrolyte |
| 102 | solvent |
| 103 | binder |
| 104 | nitrogen-containing organic substance |
| 111, 121 | ion conductor |
| 201 | active material |
| 301 | solid electrolyte sheet |
| 302 | base material |
| 401, 403 | electrode sheet |
| 402 | current collector |
| 501 | positive electrode |
| 502 | electrolyte layer |
| 503 | negative electrode |
| 1000 | solid electrolyte composition |
| 2000 | electrode composition |
| 3001 | electrode assembly |
| 3002 | transfer sheet |
| 4001 | electrode |
| 4002 | electrode transfer sheet |
| 4003 | battery precursor |
| 5000 | battery |

**Claims**

**1.** A solid electrolyte composition comprising:

a solvent; and
an ion conductor including a solid electrolyte, a binder, and a nitrogen-containing organic substance and being dispersed in the solvent, wherein
the solid electrolyte includes a sulfide solid electrolyte,
the binder includes a styrenic elastomer,
the nitrogen-containing organic substance includes at least one selected from the group consisting of primary amines, secondary amines, aminohydroxy compounds, and diamines,
the primary amines, the secondary amines, the aminohydroxy compounds, and the diamines each have at least one selected from the group consisting of chain alkyl groups having 8 or more carbon atoms and chain alkenyl groups having 8 or more carbon atoms, and
a mass proportion of the nitrogen-containing organic substance to the solid electrolyte is 0.30 mass% or more.

**2.** The solid electrolyte composition according to claim 1, wherein
a ratio of a viscosity $\eta 1$ of the solid electrolyte composition measured under conditions of 25°C and a shear rate of 1

$sec^{-1}$ to a viscosity $\eta 2$ of the solid electrolyte composition measured under conditions of 25°C and a shear rate of 100 $sec^{-1}$, $\eta 1/\eta 2$, is 1.4 or more.

**3.** The solid electrolyte composition according to claim 1, wherein the styrenic elastomer includes styrene-butadiene rubber.

**4.** The solid electrolyte composition according to claim 1, wherein the styrenic elastomer includes at least one selected from the group consisting of modified styrene-butadiene rubber and modified styrene-ethylene/butylene-styrene block copolymers.

**5.** The solid electrolyte composition according to claim 1, wherein the solvent has a boiling point of 100°C or more and 250°C or less.

**6.** The solid electrolyte composition according to claim 1, wherein the solvent includes an aromatic hydrocarbon.

**7.** The solid electrolyte composition according to claim 6, wherein the solvent includes tetralin.

**8.** The solid electrolyte composition according to claim 1, wherein the nitrogen-containing organic substance includes a straight-chain alkenyl group.

**9.** The solid electrolyte composition according to claim 8, wherein the nitrogen-containing organic substance includes oleylamine.

**10.** The solid electrolyte composition according to claim 1, wherein the nitrogen-containing organic substance has an iodine value of 15 or more.

**11.** The solid electrolyte composition according to claim 1, wherein the nitrogen-containing organic substance includes the aminohydroxy compound.

**12.** An electrode composition comprising:

the solid electrolyte composition according to claim 1; and
an active material.

**13.** The electrode composition according to claim 12, wherein the nitrogen-containing organic substance includes the aminohydroxy compound.

**14.** A method for manufacturing a solid electrolyte sheet, comprising:

applying the solid electrolyte composition according to claim 1 to an electrode or a base material to form a coating film; and
removing the solvent from the coating film.

**15.** A method for manufacturing a battery that includes a first electrode, an electrolyte layer, and a second electrode in this order, the method comprising following (i) or (ii):

(i) applying the solid electrolyte composition according to claim 1 to the first electrode to form a coating film,

removing the solvent from the coating film to form an electrode assembly including the first electrode and the electrolyte layer, and
combining the electrode assembly and the second electrode such that the electrolyte layer is located between the first electrode and the second electrode; or

(ii) applying the solid electrolyte composition according to claim 1 to a base material to form a coating film,

removing the solvent from the coating film to form the electrolyte layer, and

combining the first electrode, the second electrode, and the electrolyte layer such that the electrolyte layer is located between the first electrode and the second electrode.

**16.** A method for manufacturing an electrode sheet, comprising:

applying the electrode composition according to claim 12 or 13 to a current collector, a base material, or an electrode assembly to form a coating film; and
removing the solvent from the coating film.

**17.** A method for manufacturing a battery that includes a first electrode, an electrolyte layer, and a second electrode in this order, the method comprising following (iii), (iv), or (v):

(iii) applying the electrode composition according to claim 12 or 13 to a current collector to form a coating film,

removing the solvent from the coating film to form the first electrode, and
combining the first electrode, the second electrode, and the electrolyte layer such that the electrolyte layer is located between the first electrode and the second electrode;

(iv) applying the electrode composition according to claim 12 or 13 to a base material to form a coating film,

removing the solvent from the coating film to form an electrode sheet for the first electrode, and
combining the first electrode, the second electrode, and the electrolyte layer such that the electrolyte layer is located between the first electrode and the second electrode; or

(v) applying the electrode composition according to claim 12 or 13 to the electrolyte layer of an electrode assembly that is a layered product of the first electrode and the electrolyte layer to form a coating film, and
removing the solvent from the coating film to form an electrode sheet for the second electrode.

**18.** A method for manufacturing a battery that includes a first electrode, an electrolyte layer, and a second electrode in this order, the method comprising following (vi) or (vii):

(vi) applying the electrode composition according to claim 12 or 13 to a current collector to form a first coating film,

removing the solvent from the first coating film to form the first electrode,
applying the solid electrolyte composition according to claim 1 to the first electrode to form a second coating film,
removing the solvent from the second coating film to form the electrolyte layer, and
combining the first electrode, the electrolyte layer, and the second electrode such that the electrolyte layer is located between the first electrode and the second electrode; or

(vii) applying the electrode composition according to claim 12 or 13 to a first base material to form a first coating film,

removing the solvent from the first coating film to form the first electrode,
applying the solid electrolyte composition according to claim 1 to a second base material to form a second coating film,
removing the solvent from the second coating film to form the electrolyte layer, and
combining the first electrode, the second electrode, and the electrolyte layer such that the electrolyte layer is located between the first electrode and the second electrode.

FIG. 1

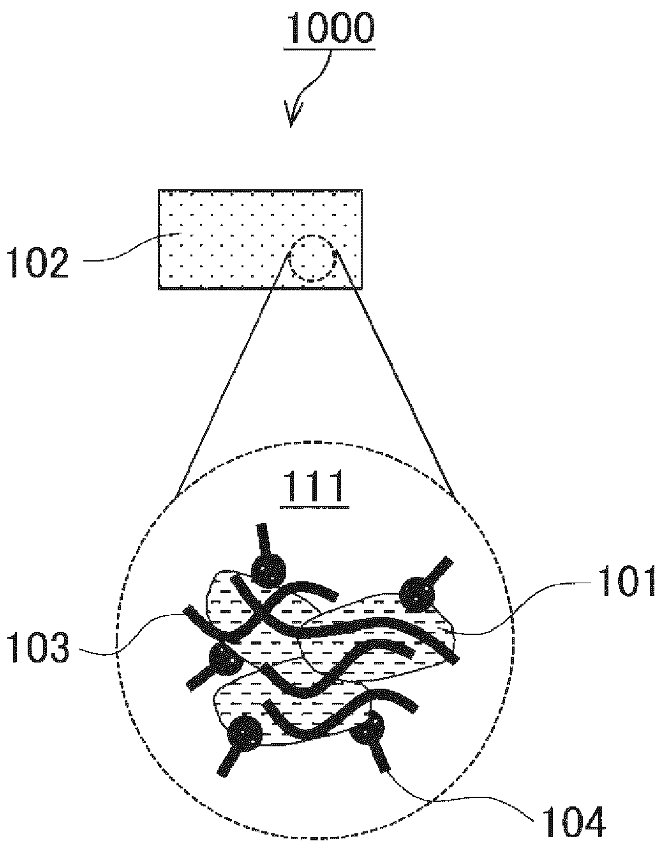

FIG. 2

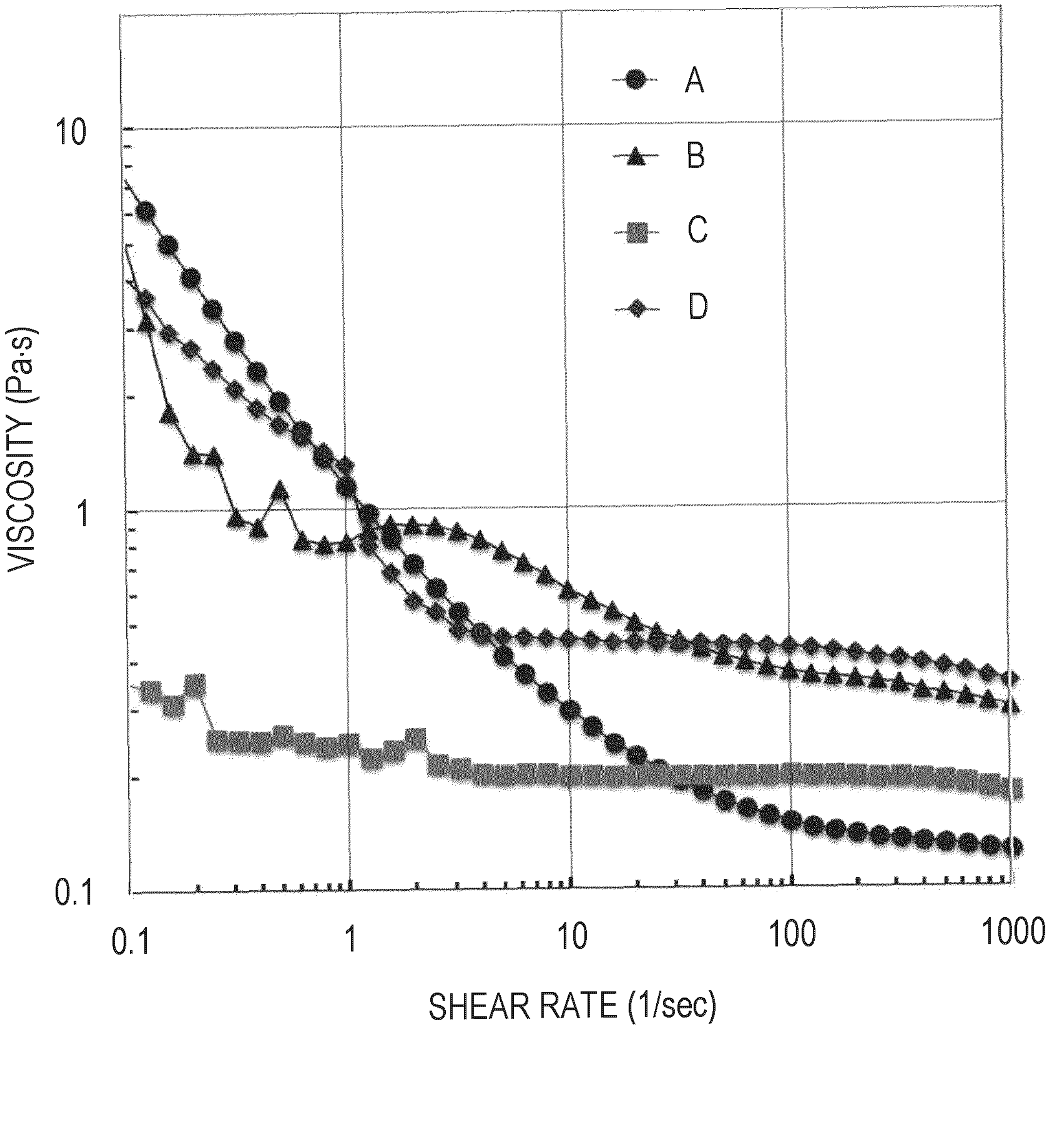

FIG. 3

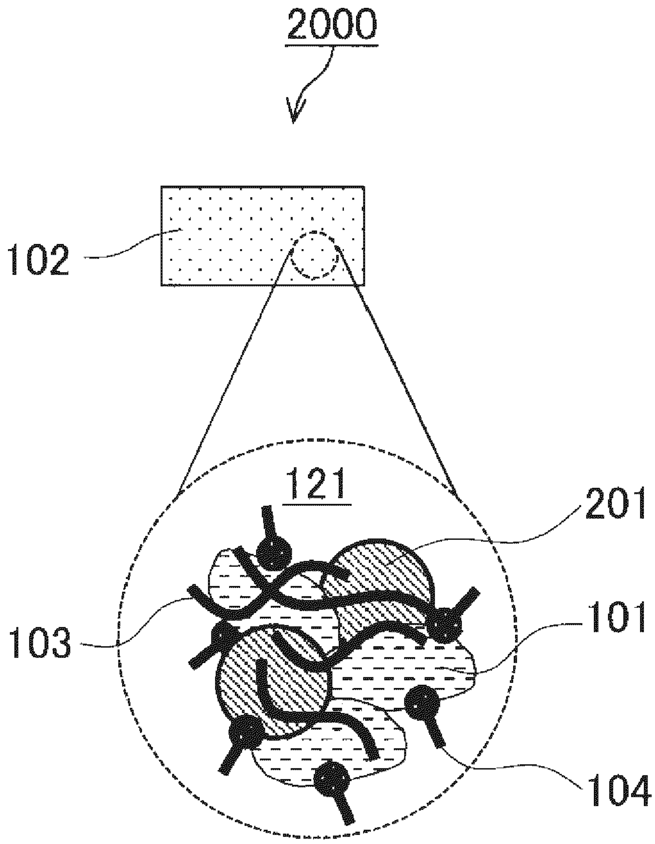
2000
102
121
201
103
101
104

FIG. 4

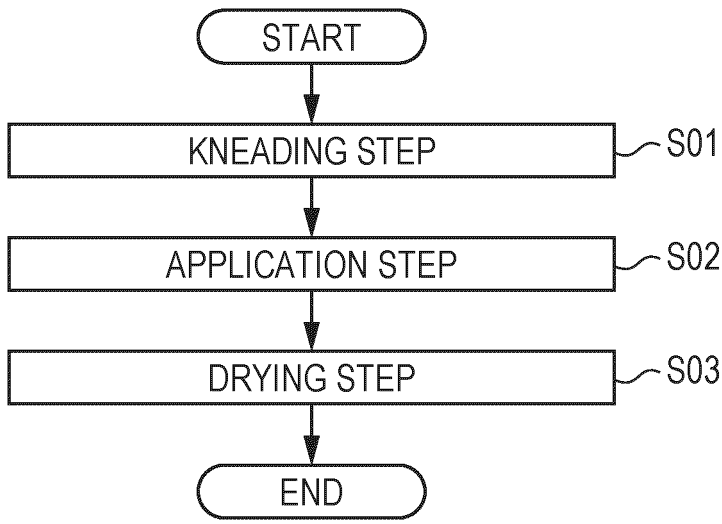
START
KNEADING STEP
S01
APPLICATION STEP
S02
DRYING STEP
S03
END

FIG. 5

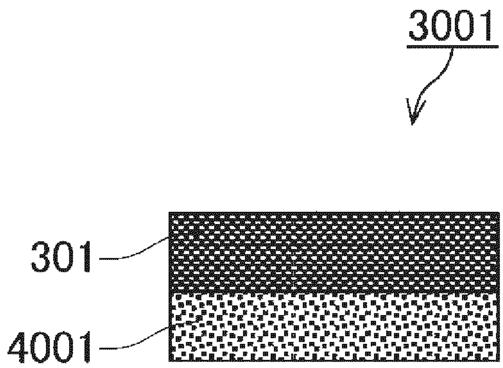


FIG. 6

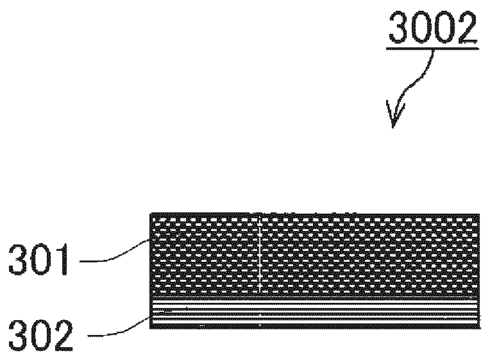


FIG. 7

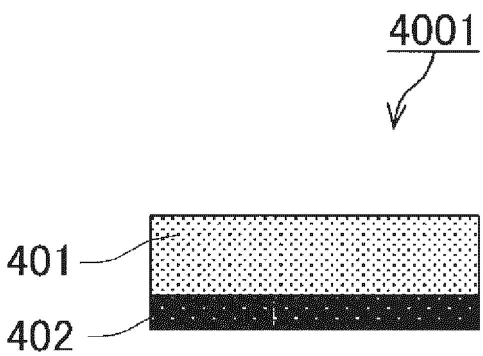

FIG. 8

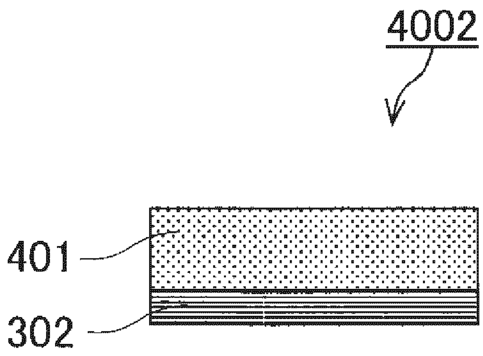


FIG. 9

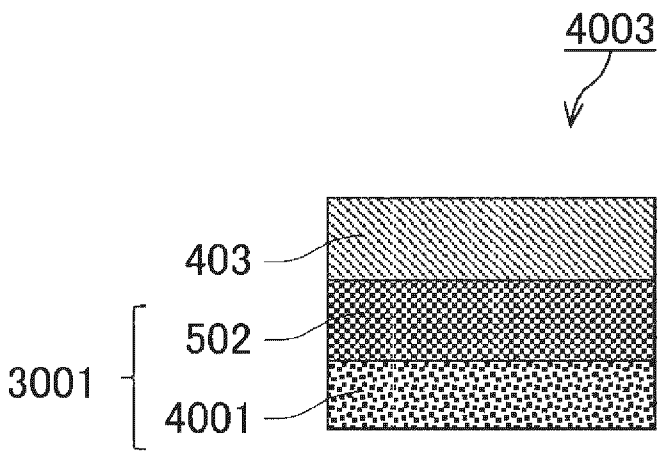


FIG. 10

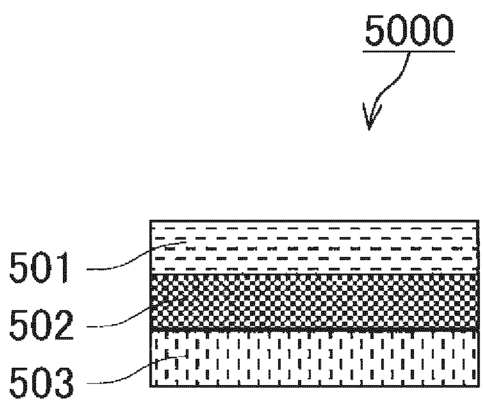

## INTERNATIONAL SEARCH REPORT

International application No.
**PCT/JP2023/018189**

**A. CLASSIFICATION OF SUBJECT MATTER**

***H01B 1/10***(2006.01)i; ***H01B 1/06***(2006.01)i; ***H01M 4/139***(2010.01)i; ***H01M 4/62***(2006.01)i; ***H01M 10/052***(2010.01)i; ***H01M 10/0562***(2010.01)i; ***H01M 10/058***(2010.01)i
FI: H01B1/10; H01M4/139; H01M4/62 Z; H01M10/0562; H01M10/052; H01M10/058; H01B1/06 A

According to International Patent Classification (IPC) or to both national classification and IPC

**B. FIELDS SEARCHED**

Minimum documentation searched (classification system followed by classification symbols)

H01B1/10; H01B1/06; H01M4/139; H01M4/62; H01M10/052; H01M10/0562; H01M10/058

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2021-177448 A (SAMSUNG SDI CO., LTD.) 11 November 2021 (2021-11-11) paragraphs [0062]-[0072] | 1-18 |
| Y | JP 2011-238595 A (SAMSUNG SDI CO., LTD.) 24 November 2011 (2011-11-24) paragraphs [0051], [0088], [0092] | 1-10, 12, 14-18 |
| Y | JP 2016-184496 A (SEIKO EPSON CORP) 20 October 2016 (2016-10-20) paragraph [0128] | 1-10, 12, 14-18 |
| Y | JP 2020-177755 A (TOYOTA MOTOR CORP) 29 October 2020 (2020-10-29) paragraph [0051] | 2 |
| Y | JP 9-320604 A (JAPAN SYNTHETIC RUBBER CO LTD) 12 December 1997 (1997-12-12) paragraph [0006] | 4 |
| Y | JP 2009-302051 A (SAMSUNG SDI CO., LTD.) 24 December 2009 (2009-12-24) paragraph [0024] | 4 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 July 2023** | **01 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/018189**

**C. DOCUMENTS CONSIDERED TO BE RELEVANT**

| Category* | Citation of document, with indication, where appropriate, of the relevant passages | Relevant to claim No. |
|---|---|---|
| Y | JP 2014-93145 A (TOYOTA MOTOR CORP) 19 May 2014 (2014-05-19) paragraph [0033] | 4 |
| Y | WO 2017/204027 A1 (FUJIFILM CORPORATION) 30 November 2017 (2017-11-30) paragraphs [0044]-[0045] | 7 |
| Y | JP 2020-161364 A (MAXELL HOLDINGS LTD) 01 October 2020 (2020-10-01) paragraph [0035] | 1, 3, 5-6, 11-13, 16-18 |
| Y | JP 2010-49903 A (TOYO INK MFG CO LTD) 04 March 2010 (2010-03-04) paragraph [0244] | 1, 3, 5-6, 11-13, 16-18 |

Form PCT/ISA/210 (second sheet) (January 2015)

**INTERNATIONAL SEARCH REPORT**
**Information on patent family members**

International application No.
**PCT/JP2023/018189**

| Patent document cited in search report | Publication date (day/month/year) | Patent family member(s) | Publication date (day/month/year) |
|---|---|---|---|
| JP 2021-177448 A | 11 November 2021 | EP 4148858 A1<br>paragraphs [0066]-[0075] | |
| JP 2011-238595 A | 24 November 2011 | EP 2383828 A2<br>paragraphs [0048], [0085], [0094] | |
| JP 2016-184496 A | 20 October 2016 | US 2016/0285080 A1<br>paragraph [0140] | |
| JP 2020-177755 A | 29 October 2020 | US 2020/0335772 A1<br>paragraph [0062] | |
| JP 9-320604 A | 12 December 1997 | (Family: none) | |
| JP 2009-302051 A | 24 December 2009 | EP 2133941 A1<br>paragraph [0032] | |
| JP 2014-93145 A | 19 May 2014 | (Family: none) | |
| WO 2017/204027 A1 | 30 November 2017 | US 2019/0088949 A1<br>paragraphs [0120]-[0124] | |
| JP 2020-161364 A | 01 October 2020 | (Family: none) | |
| JP 2010-49903 A | 04 March 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016212990 A
- WO 2020136975 A
- JP 2020161364 A